# FASCICULE DE BREVET EUROPEEN

(11) **EP 2 276 772 B1**
(45) Date de publication et mention de la délivrance du brevet: **20.08.2014**
(21) Numéro de dépôt: 09726556.5
(22) Date de dépôt: 19.03.2009
(51) Int. Cl.: C07F 15/02, C07F 15/06, C07F 5/06, C07F 5/02

(54) **COMPLEXES DE BORE OU D'ALUMINIUM**
BOR- ODER ALUMINIUMKOMPLEXE
BORON OR ALUMINUM COMPLEXES

(30) Priorité: 19.03.2008 FR 0801506
(43) Date de publication de la demande: 26.01.2011
(73) Titulaire: Centre National de la Recherche Scientifique, 75016 Paris (FR); Université de Picardie Jules Verne, 80039 Amiens (FR)
(72) Inventeur: ARMAND, Michel, F-75014 Paris (FR); TARASCON, Jean-Marie, F-91540 Mennecy (FR); RECHAM, Nadir, F-80000 Amiens (FR); GRUGEON, Sylvie, F-60960 Feuquieres (FR); LARUELLE, Stéphane, F-80470 Saveuse (FR); DEVARAJ, Shanmukaraj, F-80000 Amiens (FR)
(74) Mandataire: Goulard, Sophie
(86) Numéro de dépôt international: PCT/FR2009/000290
(87) Numéro de publication internationale: WO 2009/122044

(56) Documents cités:
- EP-A- 0 330 968
- JP-A- 8 048 839
- JP-A- 59 136 364
- SU-A1- 546 598
- US-A- 3 009 791
- US-A- 6 022 643

## Description

La présente invention concerne des complexes de bore et d'aluminium, leur préparation et leur utilisation pour la solubilisation de composés ioniques.On connaît de nombreux composés utiles pour effectuer des substitutions nucléophiles qui permettent de modifier des matériaux et des molécules en chimie minérale ou en chimie organique. On peut citer en particulier les composés qui ont un anion F⁻, OCN⁻, O²⁻, O₂²⁻, O₂^{•-}, OH⁻, RO⁻, N₃^{-,} CN⁻, HNCN⁻, ou NCN²⁻. Les composés fluorés et les isocyanates sont particulièrement intéressants pour l'industrie des polymères ou des agents de réfrigération, pour le traitement de surface, pour les produits pharmaceutiques ou agrochimiques. Cependant, les réactions de substitution nucléophile à l'aide de ces composés sont impossibles dans les solvants protiques, tels que par exemple H₂O, CH₃OH, formamide, et N-méthylformamide, qui sont capables de dissoudre les sels desdits anions, car la solvatation très forte des anions précités réduit leur caractère nucléophile. En outre, lorsqu'un composé de l'un des anions précités est mis en contact avec les structures inorganiques lamellaires de type FeOCl ou TiNCI, il y a de plus le risque d'exfoliation par pénétration de l'ion sous forme solvatée entre les feuillets. Dans les solvants aprotiques polaires, la réactivité des anions précités est limitée par la solubilité très faible des sels alcalins ou alcalino-terreux correspondants. Un autre problème provient de la basicité desdits anions dont la charge est concentrée dans un faible volume (r_{F}- = r_{OH}- = r_{O}2- = 1,4 Å) qui favorise la réaction d'élimination de protons en position α dans les réactions en chimie organique, ce qui interdit les substitutions sur des substrats sensibles. L'élimination en position β (dégradation d'Hoffmann) limite la stabilité des cations ammonium quaternaires de chaînes assez longues pour induire une solubilité dans les solvants aprotiques.

Des catalyseurs plus stables thermiquement que les ammonium quaternaires ont été proposés, notamment dans US-7,217,842 ou par A. Pleschke, et al. Röschenthaler Journal of Fluorine Chemistry, Volume 125, N° 6, Juin 2004, Pages 1031-1038. Ces sels d'onium ne réduisent que d'une manière minime la température à laquelle s'effectuent les réactions de Halex et ne résolvent pas le problème des éliminations sur les substrats sensibles.

Une solution proposée pour augmenter la solubilité des sels de métal alcalin ou alcalino-terreux des anions précités dans des solvants aprotiques consiste à complexer les cations alcalins ou alcalino-terreux par un agent complexant choisi par exemple parmi les diglymes, triglymes, les tétraglymes, les éthers couronne et les cryptates. L'utilisation de ces agents permet effectivement d'augmenter la solubilité des sels précités dans les solvants aprotiques. Cependant, la vitesse des réactions d'élimination est largement augmentée et donc ces additifs n'offrent que peu d'intérêt. En outre, les agents complexants les plus efficaces pour augmenter la solubilité sont des composés onéreux, en particulier les éthers couronne et les cryptates. L'utilisation d'agents complexants n'a de ce fait pas donné lieu à des développement industriels majeurs.

En pratique, les réactions d'échange entre le chlore et le fluor sont effectuées à très haute température dans des solvants tel que le sulfolane (tétraméthylènesulfone). Par exemple, avec le fluorure de potassium (procédé Halex), la réaction d'échange est effectuée à des températures de 200°C à 300°C, avec des rendements faibles en matières, et des coûts énergétiques élevés.

On ne connaît pas de préparation industrielle d'isocyanates à partir des cyanates métalliques, ou de préparations industrielles à partir des anions O²⁻, O₂²⁻, O₂^{•-}, HNCN⁻ et NCN²⁻. Les anions OH⁻, RO⁻, CN⁻, et N₃⁻ sont utilisés pour des réactions de substitution nucléophile, mais les rendements sont faibles à cause des réactions d'élimination concurrentes. Il est connu que les acides de Lewis tels que BF₃ et PF₅ sont capables de complexer des ions fluor pour donner les anions de coordination BF₄⁻ et PF₆⁻ dont les sels métalliques correspondants sont aisément solubles dans les solvants aprotiques polaires. Cependant, les sels des anions BF₄⁻ et PF₆⁻ n'ont aucun pouvoir nucléophile pour effectuer des substitutions par exemple d'un atome de chlore par un atome de fluor, du fait de la grande énergie d'interaction acide ⇔ base de Lewis. Au contraire, les sels de ces anions sont utilisés lorsqu'un anion strictement non-nucléophile et non complexant est requis, pour stabiliser des espèces cationiques instables ou comme électrolyte support en électrochimie. On connaît aussi les dérivés du triphénylbore, en particulier le dérivé fluoré (C₆F₅)₃B qui est un acide de Lewis puissant et capable de complexer LiF malgré l'énergie réticulaire élevée de ce sel. Les anions (C₆F₅)₃BF⁻, de même que BF₄⁻ et PF₆⁻ ne sont pas des nucléophiles permettant l'échange du fluor. De plus, l'obtention de ces composés est difficile et ils sont extrêmement onéreux.

US-2,909,560 décrit un procédé pour la préparation d'un composé cyclique du bore, le 2,6,7-Trioxa-1-bora-4-methylbicyclo[2.2.2]octane, par réaction de 1,1,1-triméthyloléthane (I) avec l'acide borique H₃BO₃ (II), et l'utilisation dudit composé cyclique comme stabilisant du polyéthylène. Insérer <page 2 bis>

Le but de la présente invention est de fournir un complexe capable de former un adduit avec un sel, ledit adduit ayant une partie anionique nucléophile et étant soluble dans les solvants aprotiques polaires.

L'invention repose essentiellement sur le fait que, d'une manière inattendue, des complexes formés par un acide de Lewis dérivé du bore ou de l'aluminium sont capables de former des complexes avec un anion Z' choisi parmi F⁻, OCN⁻, O²⁻, O₂²⁻, O₂^{•-}, OH⁻, RO⁻, RN^{2-,} R₂N⁻ et CN⁻, HNCN^{-,} NCN²⁻ et N³⁻ d'un sel dont le cation peut être un cation alcalin (Li⁺, Na⁺, K⁺, Rb⁺, Cs⁺), un cation alcalino-terreux (Mg⁺⁺, Ca⁺⁺, Sr⁺⁺, Ba⁺⁺), un cation Ag⁺

JP 08048839 décrit une composition de résine styrène comprenant (A) une résine styrène et du bromure à titre d'agent ignifugeant, (B) au moins une zéolite de type A et une zéolite contenant un métal du groupe II ou IV de la table périodique et/ou au moins un hydrotalcite, (C) au moins un composé pouvant notamment être un ester de bore d'un polyalcool aliphatique.

JP 59 136364 décrit un matériau de revêtement anti-encrassement préparé par addition d'acide borique (anhydride) et d'un est d'acide borique à une matériau de revêtement anti-encrassement contenant un polymère triorganotine et un oxyde cuprique.

SU 546598 décrit des esters de bore ainsi que leur utilisation à titre de monomère pour la modification de polyoléfines et de polydiènes.

US 3,009,791 décrit des composés à base de bore ainsi que des hydrocarbures liquides les contenant. ou Pb⁺⁺, ou un cation onium (ammonium, phosphonium, sulfonium, iodonium, pyridinium, ou imidazolium). Les adduits ainsi formés ont un caractère nucléophile marqué susceptible de permettre des substitutions sur des substrats organiques ou inorganiques, ainsi qu'une basicité réduite permettant de traiter des substrats sensibles en particulier à l'élimination. Les adduits ont une solubilité accrue dans les solvants aprotiques polaires. En outre, lorsque le cation de l'adduit est un cation onium, l'adduit peut avoir un point de fusion inférieur à 100°C, et il peut être utilisé comme liquide ionique.

La présente invention a pour objet des complexes de bore ou d'aluminium, des adduits formés par lesdits complexes avec un composé ionique, et diverses utilisations des complexes et des adduits.

Les complexes de bore ou d'aluminium selon la présente invention sont des composés tricycliques correspondant à l'une des formules générales : 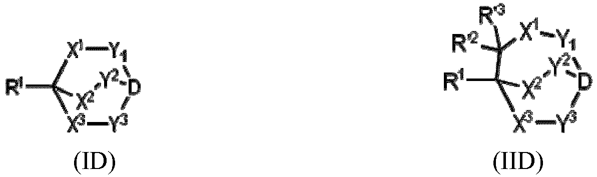 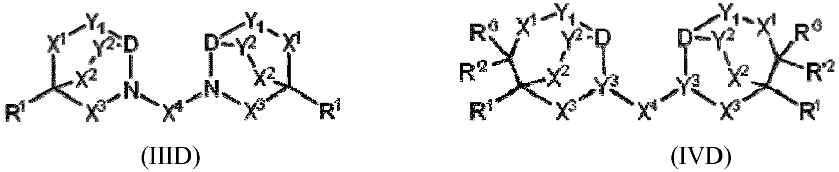 dans lesquelles :
- D représente le bore B ou l'aluminium A1;
- R¹ représente R, R_{F}, NO₂, CN, C(=O)OR, RSO₂, ou R_{F}SO₂ ;
- chacun des groupes -X¹-, -X²-et -X³- représente indépendamment des autres un groupe divalent >C=O, >C=NC≡N, >C=C(C≡N)₂ ou >CR²R³ ;
- X⁴ représente un groupe divalent >C=O ou >SO₂ ;
- chacun des groupes -Y¹-, -Y²- et -Y³- représente indépendamment des autres un groupe divalent -O-, >N(C≡N), >N(COR_{F}), >N(SO₂R⁴), >NR⁴, >N(COR⁴) ou >N(SO₂R_{F}) ;
- R, R² et R³ représentent chacun indépendamment des autres H, un groupe alkyle, un groupe aryle, un groupe alkyl-aryle, un groupe aryl-alkyle, ou un groupe oxaalkyle, ;
- R⁴ représente un groupe alkyle, un groupe aryle, un groupe alkyl-aryle, un groupe hétéroaryle, un groupe aryl-alkyle, un groupe oxaalkyle, ou un groupe R_{F}CH₂- ;
- R_{F} est un groupe perfluoroalkyle ou un groupe alkyle partiellement fluoré (dans lequel de préférence au moins 60% des atomes d'hydrogène sont remplacés par des atomes de fluor), ayant de préférence de 1 à 8 atomes de carbone, ou un groupe phényle partiellement ou totalement fluoré ;
- chacun des groupes R'² et R'³ représente R ou F ;
étant entendu que :
- plusieurs groupes R ou R_{F} peuvent être liés ensemble pour former un segment d'un oligomère ou d'un polymère ;
- dans un complexe ID et IID, si deux groupes parmi -X¹-, -X²- et -X³- représentent chacun >C=O, alors le troisième groupe représente un groupe >CR²R³ ;
- dans un complexe IB, si chacun des groupes X¹, X² et X³ est un groupe CH₂ et chacun des groupes Y est O, alors R¹ est différent de CH₃.

Dans la suite du présent texte :
- "groupes X" désigne collectivement les groupes X¹, X² et X³, et X⁴ et "groupe Xⁱ" désigne l'un quelconque parmi les groupes X¹, X², X³ et X⁴ ;
- "groupes Y" désigne collectivement les groupes Y¹,Y² et Y³, et "groupe Yⁱ" désigne l'un quelconque parmi les groupes Y.

Les groupes alkyle pouvant être choisis pour les substituants R¹ à R⁴ et R ont de préférence au plus 22 atomes de carbone, et les groupes aryle sont de préférence des groupes phényle portant éventuellement un ou plusieurs groupes alkyle de 1 à 12 atomes de carbone, un ou plusieurs groupes CF₃ ou OCF₃, un groupement CN, ou un groupement NO₂.

Les groupes hétéroaryle pouvant être choisis pour R⁴ sont des préférence des groupes pyridinyle, pyrazinyle, pyridazinyle, pyrymidyle, lesdits groupes portant éventuellement un ou plusieurs groupes alkyle de 1 à 12 atomes de carbone, un ou plusieurs groupes CF₃ ou OCF₃, un groupement CN, ou un groupement NO₂.

Le caractère acide de Lewis des composés de l'invention peut être modulé par le choix du groupe R¹, des groupes X, et des groupes Y. Les différents groupes sont classés ci-après par ordre décroissant :
-R¹ : R_{F}SO₂-, -NO₂, RSO₂- ≈ -CN, -C(=O)OR, -OR, R-
>X : >C=C(C≡N)₂, >C=NC≡N, >SO₂, >C=O, >CH₂ >CR²R³
>Y : >N(SO₂R_{F}), >N(COR_{F}) ≈ >N(SO₂R⁴), >N(C≡N), >NCOR⁴, >O, >NR⁴.

Lorsque D représente le bore, les complexes I-D, II-D, III-D et IV-D sont désignés respectivement par I-B, II-B, III-B et IV-B. Les complexes de bore sont stables vis-à-vis de l'eau et des alcools et solubles dans la plupart des solvants organiques polaires.

Lorsque D représente A1, les complexes I-D, II-D, III-D et IV-D sont désignés respectivement par I-A1, II-A1, III-A1 et IV-A1. Les complexes d'aluminium sont hydrolysables par l'eau, excepté ceux dans lesquels les trois groupes -X- sont différents de >CR¹R².

Un complexe de bore ou d'aluminium selon la présente invention peut être utilisé avantageusement comme agent complexant avec un sel M_{z'}Z'ₘ dans lequel M est un cation dont la valence n est de 1 à 3, et Z' est un anion dont la valence z' est 1 ou 2. Lorsque Z' est monovalent, il est choisi parmi les anions Z suivants : F⁻, OCN⁻, O₂^{•-}, OH⁻, RO⁻, N₃^{-,} R₂N⁻, CN⁻, HNCN^{-,} [O²⁻M'⁺]⁻, [O₂²⁻M'⁺]⁻ et [NCN²⁻M'⁺]. Lorsque Z' est divalent, il est choisi parmi les anions Z" suivants : O²⁻, O₂²⁻, et NCN²⁻. M représente un cation de métal alcalin, un cation de métal alcalino-terreux, Ag⁺, Pb²⁺, un cation d'yttrium, un cation de lanthane ou un cation organique. Le cation organique peut être choisi parmi les cations ammonium, phosphonium, tetrakis(dialkylamino)phosphonium, bis[tris(dialkylamino)]-diphosphonioazénium, sulfonium, pyridinium, amidinium, guanidinium, imidazolium, pyrazolium et triazolium, lesdits cations organiques portant éventuellement un substituant choisi parmi les groupes alkyle, oxaalkyle, aryle (en particulier phényle), alkyl-aryle (en particulier alkylphényle), aryl-alkyle (en particulier phényl-alkyle) et lesdits cations pouvant être reliés entre eux par un lien organique, pour former des oligomères ou polymères. M' est choisi parmi H et les cations monovalents cités par M. Dans la suite du texte, « I/MZ' », « IID/MZ' », « IIID/MZ' » et « IVD/MZ' » désignent un sel M_{z'}Z'ₘ complexé respectivement par un ID, IID, IIID ou IVD de la présente invention. Les complexes d'aluminium peuvent former des adduits, non seulement avec un sel des anions précités, mais aussi avec un sel de l'anion Cl⁻, Br⁻, S²⁻ ou S₂²⁻.

Un complexe d'aluminium mononucléaire ID ou IID forme des adduits non seulement sous la forme [(Al)-Z]⁻M⁺, mais aussi sous une forme trinucléaire du type [(Al)-Z(Al)⁻M⁺ possédant la séquence Al-Z-Al par implication des orbitales "d" de l'aluminium, qui n'existent pas dans le cas du bore. Les complexes III-B, IV-B, III-A1 et IV-A1 sont binucléaires et les liaisons B-Z-B et Al-Z-Al font un angle compris entre 60 et 150°C.

Un adduit selon la présente invention peut être représenté par l'une des formules suivantes, dans laquelle les différents éléments ont la signification donnée précédemment.

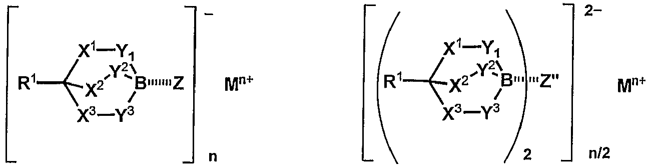

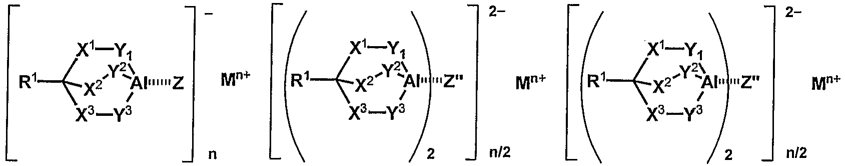

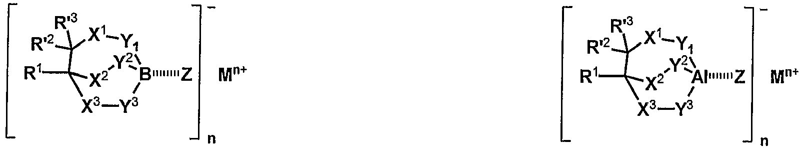

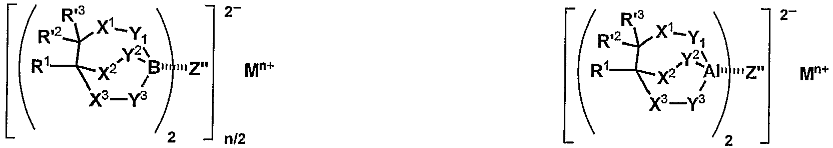

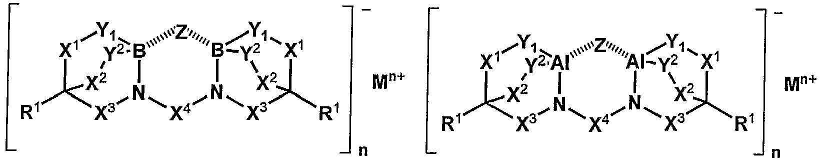

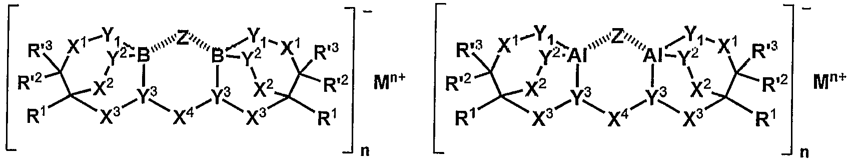

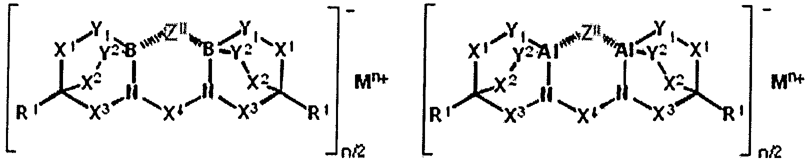

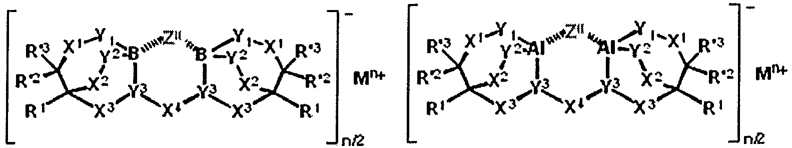

Parmi les complexes de l'invention, ceux dans lesquels chacun des groupes Y représente O sont intéressants du fait qu'ils peuvent être obtenus aisément à partir d'un triol. Ils sont désignés ci-après par B-a pour les complexes du bore et Al-a pour les complexes de Al. Le caractère acide relativement faible apporté par les trois atomes O choisis pour les groupes Y peut être augmenté par le choix de groupes X apportant un caractère acide plus fort, par exemple >C=O, >C=NC≡N, >C=C(C≡N)₂ ou SO₂. Il est préférable qu'un seul des groupes X soit un groupe SO₂. Le caractère acide peut aussi être augmenté par le choix d'un groupe R¹ fortement électro-attracteur, par exemple R_{F}SO₂-, NO₂, RSO₂-, -CN, ou -C(=O)OR.

Les complexes dans lesquels les trois groupes Y sont des groupes azotés sont désignés ci-après par B-c pour les complexes du bore et Al-c pour les complexes de Al, et ceux qui contiennent au moins un groupe Y azoté et au moins un groupe Y qui est de l'oxygène sont désignés par B-b pour les complexes du bore et Al-b pour les complexes de Al.

Les complexes de l'invention dans lesquels au moins un groupe Y est un groupe NR⁴, en particulier lorsque les 3 groupes Y sont des groupes NR⁴, ont de préférence des groupes X choisis parmi les groupes >C=O, >C=NC≡N, >C=C(C≡N)₂.

Les complexes de l'invention dans lesquels au moins un des groupes Y est différent de NR⁴ ct contient un atome d'azote et les complexes dans lesquels au moins l'un des groupes Y est un groupe NR⁴ dans lequel R⁴ est un groupe aryle ou hétéro-aryle portant au moins un groupements attracteur (par exemple CN, NO₂, CF₃) ont un caractère acide de Lewis fort, et ils ont de ce fait une solubilité dans les solvants aprotiques supérieure à celle des complexes similaires dans lesquels tous les groupes Y sont O. Leur caractère acide de Lewis peut être modulé par :
- le choix particuliers des groupes Y contenant un atome d'azote ;
- le choix des groupes X et/ou du groupe R ;
- le nombre de groupes Y contenant un atome d'azote.

Les complexes dans lesquels les trois groupes Y sont des groupes contenant un atome d'azote ont le caractère acide le plus fort.

Les complexes B-b, B-c, Al-b et Al-c, ainsi que leurs adduits, sont de ce fait particulièrement intéressants comme additif d'électrolytes de batteries.

Parmi les complexes de bore et les complexes d'aluminium de l'invention, ceux dans lesquels chacun des groupes X représente CH₂ sont facilement obtenus par insertion de formaldéhyde H₂C=O dans une liaison -CH pour former -CCH₂OH et ils n'introduisent qu'un encombrement stérique minimum, en particulier ceux dans lesquels chacun des trois groupes X représente CH₂. Les complexes dans lesquels X est CHR² sont obtenus de la même manière à partir de l'aldéhydre R²CH=O.

Le caractère relativement peu électroattracteur apporté par les trois groupes CH₂ choisis pour les groupes X peut être augmenté par le choix de groupes Y apportant un caractère acide plus fort, par exemple un groupe >N(SO₂CF₃), >N(COCF₃), >N(SO₂R), ou >N(C≡N), ou groupe >NR⁴ dans lequel R⁴ est un aryle ou hétéro-aryle portant au moins un groupement attracteur (par exemple CN, NO₂, CF₃, OCF₃) et/ou par le choix d'un groupe R¹ fortement électro-attracteur, par exemple R_{F}SO₂-, NO₂, RSO₂-, -CN, ou -C(=O)OR.

Une catégorie particulière de complexes et d'adduits comprend ceux dans lesquels chacun des groupes >X représente >CH₂ et les groupes Y sont identiques et contiennent chacun un atome d'azote. La présence de l'atome d'azote confère aux complexes et aux adduits correspondants une plus grande solubilité dans les solvants polaires précités, dans les solvants moins polaires tels que l'acétonitrile, les cétones, les glymes, le benzonitrile, et pour les sels d'onium, le dichlorométhane, et le α,α,α-trifluorotoluène, et dans les liquides ioniques, par rapport aux complexes et aux adduits dans lesquels Y est O.

Les complexes dans lesquels -X¹- et -X²- représentent >CH₂ et >X³ représente >C=O, >C=O, C=NCN ou C=C(CN)₂ sont intéressants, car ils permettent la formation d'adduits avec un sel de l'anion Z⁻ et d'un cation alcalin tels que Na et K, a fortiori avec un sel d'un onium, lesdits adduits étant solubles dans les solvants polaires tels le diméthylformamide (DMF), le diméthyl acétamide (DMAc), la N-méthylpyrrolidone (NMP), le sulfolane, les liquides ioniques polaires tel que le bis(trifluorosulfonimide) d'éthyl-méthyl imidazolium (EMI-TFSI) et qui échangent facilement l'anion Z⁻ lorsqu'ils sont en présence de substrats qui ont un groupe partant.

Les complexes dans lesquels au moins l'un des groupes X est un groupe azoté tel que C=NCN et C=C(CN)₂ sont utiles comme additif dans l'électrolyte d'une batterie au lithium, car ils sont capables de former facilement un adduit avec LiF, malgré la forte énergie réticulaire de ce sel.

Une autre catégorie de complexes et d'adduits comprend ceux dans lesquels R¹ est C₂H₅ et qui sont dérivés de C₂H₅C(CH₂OH)₃. La dissymétrie introduite par le groupe éthyle augmente la solubilité des complexes et des adduits dans les solvants polaires, notamment dans les solvants précités.

Les complexes Al-a (c'est-à-dire ceux dans lesquels chacun des groupes Y est O) dans lesquels soit l'un des groupes X est >CO et chacun des deux autres groupes >X est >CH₂, soit un groupe >X est >CH₂ et les deux autres groupes >X sont chacun >CO ont tendance à être en équilibre avec des espèces oligomériques dans lesquelles l'aluminium assume une coordinence entre 5 et 6, ce qui réduit la solubilité de l'espèce monomérique IA1.

Les complexes d'aluminium dans lesquels les groupes X sont des groupes CR²R³ dans lesquels l'un des R² et R³ est différent de H, du fait de l'encombrement stérique, sont plus solubles et tendent à être monomériques. Il en est de même pour les complexes d'aluminium dans lesquels les groupes X ou Y contiennent un atome d'azote.

Les complexes de bore et d'aluminium de la présente invention sont utiles pour diverses applications. Un complexe selon l'invention peut être utilisé directement comme additif d'un électrolyte ou pour la préparation d'un adduit avec un sel MZ, ledit adduit étant utile notamment dans diverses réactions de substitution nucléophile.

La solubilité des adduits B/MZ et Al/MZ dans les solvants non-protiques ou non-protogéniques, généralement appelés solvants aprotiques, ), est supérieure à celle des composés M_{z'}Z', en particulier les composés M_{z'}Z' utilisés dans les batteries au lithium. Cette propriété est particulièrement utile lorsque Z' est F⁻, O²⁻, ou O₂²⁻. Une catégorie de solvants aprotiques est constituée par les polymères solvatants tels que les polyéthers, en particulier le poly(oxyde d'éthylène).

Dans une batterie au lithium, l'électrolyte contient un sel de lithium, et la cathode contient un composé d'un métal de transition. Le fer et le manganèse sont particulièrement utiles du fait de leur abondance naturelle, dans les oxydes correspondants Fe₃O₄, Fe₂O₃, MnO, et Mn₃O₄. Le fluorure CuF₂ est intéressant pour le potentiel très positif qu'il donne par réaction avec le lithium.

L'augmentation de la solubilité des composés de lithium LiF, Li₂O, Li₂O₂ permet d'améliorer la rechargeabilité des électrodes à déplacement fonctionnant selon l'équation réactionnelle

T^{M}_{q}Z'_{z'} + qz'Li⁺ + qz'(e⁻) ⇔ qT^{Mₒ} + z'Li_{q}Z',

dans laquelle T^{M} est un métal de transition dont la valence q est de 2 à 6, et z' est la valence de l'anion Z'. La solubilité de Li₂O₂ est tout particulièrement intéressante dans les batteries lithium-air dans lesquelles la réaction de l'électrode positive s'écrit 2Li⁺ + O₂ + e⁻ ⇔ Li₂O₂. Ces batteries ont une capacité par unité de volume et de poids très élevée, mais elles souffrent d'une polarisation excessive de plus d'un volt entre la décharge (2,8 V) et la recharge (4,5 V). La solubilisation du peroxyde Li₂O₂ par complexation avec un composé de l'invention permet de diminuer cette surtension qui passe à 3,5 V en recharge. Un complexe de bore ou d'aluminium de la présente invention est par conséquent utile comme additif de l'électrolyte d'une batterie au lithium. Le complexe peut être utilisé directement, ou sous forme d'un adduit avec un sel ayant de préférence un anion F⁻, O²⁻, ou O₂²⁻.

Un adduit selon la présente invention peut être utilisé dans diverses réactions de substitution nucléophiles sur des composés inorganiques liquides ou solides, ou sur des composés organiques. Selon un mode de réalisation, l'adduit est introduit directement dans le milieu réactionnel. Selon un autre mode de réalisation, on introduit dans le milieu réactionnel, un complexe de bore ou d'aluminium et un réactif MZ, et l'adduit se forme *in situ.* Dans les deux cas, l'adduit ou le complexe peuvent être introduits en quantité stoechiométrique ou catalytique. Lorsque le substrat est sensible aux bases, il est recommandé d'utiliser des proportions stoechiométriques, car la solution contient alors les anions Z ou Z" uniquement sous forme d'adduits, qui sont une forme moins basique que les anions libres.

Dans les autres cas, l'utilisation en quantités catalytiques est un avantage économique et en termes d'économie d'atomes .Les complexes de bore ou d'aluminium de la présente invention sont utiles pour modifier des composés solides inorganiques par substitution nucléophile, par des procédés de "chimie douce". Ils sont utiles en particulier pour remplacer dans divers composés inorganiques l'ion Cl⁻ ou Br⁻ par un anion Z' dont la valence z' est 1 ou 2, choisi parmi F⁻, OCN⁻, O²⁻, [O²⁻M'⁺]⁻, O₂²⁻,[O₂²⁻M'⁺]⁻, O₂^{•-}, OH⁻, RO⁻, N₃^{-,} CN⁻, NCN²⁻ et [NCN²⁻M'⁺]⁻.

Le remplacement de Cl⁻ ou Br⁻ par F- dans un composé inorganique à structure lamellaire tel que FeOCl, VOCl, BiOCl BiONO₃, TiNCI, TiNBr, ZrNCl ou ZrNBr est impossible dans les milieux capables de dissoudre des fluorures tels que les solvants protiques cités plus haut, car outre le faible caractère nucléophile de F⁻ solvaté, les structures lamellaires sont exfoliées par l'action de ces solvants. L'utilisation d'un adduit formé entre un réactif MZ et un complexe de l'invention est un moyen qui permet une modification aisée des composés lamellaires précités par substitution nucléophile, en particulier FeOCl et BiONO₃. Un procédé consistant à faire réagir, dans un solvant organique aprotique, un composé inorganique chloré ou bromé avec un réactif MZ en présence d'un complexe IB ou IA1 de la présente invention, ou avec un adduit formé entre MZ et le complexe, constitue un autre objet de la présente invention.

Dans l'hypothèse où le réactif de substitution nucléophile est un sel M_{z}Z d'un cation monovalent M, les réactions de modification seraient respectivement :

zFeOCl + IBZ⁻(M⁺)_{z} ⇒ (FeO)_{z}Z+ zMCl+ IB

zBiONO₃ + IBZ⁻M⁺ ⇒ (BiO)_{z}Z + zM⁺NO₃⁻ + IB

Les composés inorganiques obtenus par remplacement de Cl ou Br par Z, en particulier les composés FeOZ dans lesquels Z- est F⁻, CN⁻, ou OCN⁻, sont des structures hôtes pour le lithium, selon la réaction FeOZ + xLi+ + xe⁻ ⇔ LiₓFeOZ. Ils sont par conséquent utiles dans le domaine du stockage électrochimique. En particulier, FeOF a une capacité massique très importante (284 Ah/kg) au potentiel de 2,5 V vs Li⁺/Li°, ce qui en fait un candidat intéressant pour les batteries au lithium, avec des électrolytes constitués par une solution d'un sel de lithium dans un liquide organique polaire ou dans un polymère solvatant de type polyéther.

En outre, les composés FeOZ dans lesquels Z- est F⁻, CN⁻, ou OCN- en particulier sous forme de composés d'insertion avec le ferrocène, la N,N,N'N'-tétraméthyl-phénylène-diamine, le tétrakis(dimethyl-amino éthylène), la pyridine, ont des propriétés magnétiques utiles dans le domaine du stockage d'information.

Un composé BiOF est utile en tant que matériau d'électrode fonctionnant selon un processus rédox à 3 électrons, selon le schéma réactionnel :

BiOF + 3Li⁺ + 3e⁻ ⇔ Bi° + LiF + Li₂O

Un adduit selon la présente invention peut aussi être utilisé pour transformer un composé inorganique contenant des liaisons S-L ou P-L en composé contenant des S-F, P-F S-CN, P-CN. Cette application est particulièrement intéressante pour les composés {[CF₃SO₂NSO₂Cl]⁻}ₙMⁿ⁺, {[(ClSO₂)₂N]⁻}ₙMⁿ⁺ et {[(Cl₂PO)₂N]⁻}ₙMⁿ⁺ qui sont des sources intéressantes des sels {[CF₃SO₂NSO₂F]⁻}ₙMⁿ⁺, {[(FSO₂)₂N]⁻}ₙMⁿ⁺ et {[(F₂PO)₂N]⁻}ₙMⁿ⁺ utiles comme composants de liquides ioniques et comme électrolytes pour batteries au lithium. Le sel de M peut-être formé in situ par action de (ClSO₂)₂N]H par exemple sur MFₙ.

En chimie organique, pharmaceutique ou macromoléculaire, l'utilisation des complexes et des adduits de l'invention est particulièrement intéressante pour modifier des composés organiques aliphatiques ou aromatiques (désignés ci-après par "substrats") qui ont une liaison C-L dans laquelle C est le carbone et L est un halogène (choisi parmi Cl, Br et I), un pseudo halogène (par exemple SCN), un groupe ester -OSO₂R' ou un groupe -N(SO₂R')₂ (dans lesquels R' est un groupe alkyle, un groupe alkylaryle, ou un groupe perfluoroalkyle). La modification consiste à convertir la liaison C-L en liaison C-F, C-NCO, C-OCN, C-O⁻, C-O-C (éther), C-OO^{-,} C-O-O-C, C-OH, C-OR, C-N₃, ou C-CN. L'utilisation des composés selon l'invention permet d'éviter la présence de groupements activants qui sont nécessaires dans les procédés d'échange de l'art antérieur, et supprime par conséquent les étapes supplémentaires d'élimination des ces groupements activants. Par rapport au procédé Halex, l'utilisation des composés de la présente invention pour réaliser un échange chlore → fluor est très avantageuse parce qu'elle permet d'utiliser des solvants à plus faible point d'ébullition, en particulier le DMF, la N-méthyl-pyrrolidinone, le N-méthyl imidazole ou même l'acétonitrile, et les rendements sont améliorés. Un complexe de bore ou d'aluminium de la présente invention est par conséquent utile comme agent de complexation d'un réactif destiné à remplacer l'anion L d'un substrat par un anion Z. Pour cette application, les composés du bore IB sont particulièrement préférés. Les liquides ioniques qui ne présentent eux-même pas de pression de vapeur sont intéressants pour les utilisations à température plus élevée et surtout lorsque produit de la réaction est volatil, ce qui permet une séparation facile ou même un procédé en continu.

Le caractère fortement nucléophile de F dans un adduit B/MZ ou d'un adduit Al/MZ dans lequel Z est F, peut être mis à profit en chimie organique pour les réactions de déprotection lorsque des groupements trialkylsilane sont présents dans la molécule substrat. Un tel adduit remplace avantageusement le trihydrate du fluorure de tétrabutyl-ammonium qui est généralement utilisé, qui est onéreux, et qui introduit des cations très hydrophobes, rendant la purification des mélanges réactionnels difficile et introduisent de l'eau préjudiciable dans le cas de composés sensibles à l'hydrolyse. Un adduit selon la présente invention est par conséquent utile comme agent de déprotection d'un groupe trialkylsilyle. Sont particulièrement intéressants pour cette application, les adduits des fluorures de métaux alcalins ou des sels d'onium de faible masse moléculaire, en particulier les sels de tétraméthyl- ou de tétraéthyl-ammonium, et les sels d'éthyl-méthylimidazolium, utilisés en quantité stoechiométrique ou catalytique.

Un autre objet de l'invention est constitué par les procédés de préparation des complexes de l'invention, ainsi que des adduits D/MZ.

De manière générale, un complexe I-D, II-D, III-D ou IV-D peut être obtenu en mélangeant un composé source de l'élément D avec un précurseur organique du complexe comprenant une liaison -Y-H ou -Y-M¹ étant un métal alcalin.

Le composé source de bore est choisi avantageusement parmi l'acide borique B(OH)₃, un ester B(OR⁵)₃, (R⁵ étant un groupe alkyle), un borate alcalin ou alcalino-terreux M²(BO₂)ₙ ou M²₂(B₄O₇)_{n/4}, un halogénure de bore, un acétate de bore, ou un adduit d'un halogénure de bore tel que M²(BF₄)ₙ, n étant égal à 1 ou 2 suivant que M² est monovalent ou divalent.

Dans un 1^{er} mode de réalisation, on mélange un ester B(OR⁵)₃, (R⁵ étant un groupe alkyle) ou l'acide borique B(OH)₃ avec un précurseur organique du complexe comprenant une liaison -Y-H, et on l'obtient le complexe IB, avec élimination d'alcool R"OH ou d'eau. Par exemple, un complexe IB-a dans lequel chacun des 3 groupes X est un groupe CR^{a}R³, est obtenu par réaction du triol R¹C[CR²R³OH]₃ avec l'acide borique B(OH)₃ ou un borate d'alkyle inférieur dans un solvant protique polaire, par exemple l'éthanol ou le méthanol. R¹ peut être un groupe alkyle, un groupe NO₂, un groupe perfluoroalkylsulfonyle, ou un groupe perfluoroacyle.

Dans un 2^{ème} mode de réalisation, on mélange un précurseur du complexe comprenant une liaison -Y-H et un borate M²(BO₂)ₙ ou M²₂(B₄O₇)_{n/4}, en présence d'un acide, avec formation d'une liaison -Y-B, et l'on obtient un complexe IB et le sel alcalin ou alcalino-terreux de l'acide.

Dans un 3^{ème} mode de réalisation, on mélange le précurseur du complexe dans laquelle Y est présent sous forme d'une liaison -YM", avec une quantité calculée d'un acide en présence d'acide borique, d'un ester du bore ou d'un borate M²(BO₂)ₙ ou M²₂(B₄O₇)_{n/4}. Avantageusement, l'acide est choisi de manière à former avec M", un sel insoluble dans le milieu réactionnel. Dans un mode de réalisation particulier, on choisit l'anion de l'acide de sorte que le sel qu'il forme avec M" forme directement l'adduit de l'invention.

Dans un 4^{ème} mode de réalisation, on mélange un précurseur du complexe comprenant une liaison -YH avec un halogénure de bore, un acétate de bore en présence d'une base, ou un adduit d'un halogénure de bore tel que M²(BF₄)ₙ.

Dans un 5^{ème} mode de réalisation, on mélange un précurseur du complexe comprenant une liaison -Y-M¹ avec un halogénure de bore, un acétate de bore ou M²(BF₄)ₙ.

Le composé source d'aluminium est choisi avantageusement parmi :
- les alcoxydes d'aluminum Al(OR⁶)₃ dans lesquels R⁶ est un groupe alkyle, de préférence ramifié de manière à limiter le degré de polymérisation de ces alcoxydes et donc favoriser leur solubilité ainsi que leur réactivité.
- les composés AR⁷₃ dans lesquels R⁷ est de préférence un groupe éthyle, propyle, butyle, isobutyle, amyle, isoamyle, hexyle, octyle (alkyl-aluminium) ou un groupe phényle (aryl-aluminium).
- les dialkylamido-aluminium Al(NR⁸₂)₃ dans lesquels R⁸ est un groupe alkyle, de préférence CH₃ ou C₂H₅
- les halogénures d'aluminium, de préférence, AlCl₃, AlF₃, ou AlBr₃.
- l'hydroxyde d'aluminium

Dans un 1^{er} mode de réalisation, on prépare le complexe d'aluminium dans un solvant polaire anhydre par réaction d'un précurseur du complexe comprenant un groupe - YH avec un alcoxyde d'aluminum Al(OR⁶)₃. L'isopropoxyde et le tertio-butoxyde d'aluminium sont particulièrement préférés.

Dans un 2^{ème} mode de réalisation, on prépare le complexe d'aluminium en faisant réagir un précurseur du complexe ayant une liaison -YH avec un alkyl-aluminium ou un aryl-aluminium AR⁷₃ dans lequel R⁷ est de préférence un groupe éthyle, propyle, butyle, isobutyle, amyle, isoamyle, hexyle, octyle ou phényle.

Dans un 3^{ème} mode de réalisation, on prépare le complexe d'aluminium en faisant réagir un précurseur du complexe ayant une liaison -YH avec un dialkylamido-aluminium Al(NR⁸₂)₃ dans lequel R⁸ est CH₃ ou C₂H₅.

Dans un 4^{ème} mode de réalisation, on prépare le complexe d'aluminium en faisant réagir un précurseur du complexe ayant une liaison -Y-M¹, (M¹ étant de préférence un métal alcalin) avec un sel d'aluminium, en particulier un halogénure d'aluminium AlCl₃ et AlBr₃. Dans ce mode de réalisation, les sous-produits de réaction M¹Cl ou M¹Br sont éliminés facilement, car ils sont insolubles dans les solvants aprotiques.

Dans un 5^{ème} mode de réalisation, on prépare un complexe d'aluminium dans lequel tous les groupes X sont différents d'un groupe >CR₂R₃, en présence d'eau à partir d'une source d'aluminium soluble ou de l'hydroxyde d'aluminium Al(OH)₃ en ajustant le pH pour assurer la formation de la liaison Y-Al.

D'une manière générale, les précurseurs organiques des complexes du bore ou de l'aluminium, notamment les triols, les diol-monoacides, les mono alcool-diacides, et le triacides dans lesquels un ou plusieurs groupement C=O sont éventuellement remplacés par une groupement C=NCN, C=C(CN)₂, ou C=S peuvent être obtenus par des réactions à la portée de l'homme de métier, certains de ces précurseurs étant eux-mêmes des composés nouveaux. Par exemple, un groupement CR²R³ peut être obtenu en particulier une addition de type aldol. Un groupe partant C(=O)R⁹ (dans lequel R⁹ est un groupe OMe, OEt, OCH₂CF₃, R⁹COO, OC₆H₅, OC₆F₅, OC₆H₄NO₂, Cl, Br, imidazolyle, ou hydroxysuccinimidyle) peut être remplacé par un groupe >NCN ou >C(CN)₂, avec protection éventuelle des autre groupes réactifs de la molécule cible. Les méthodes générales données ici sont celles permettant d'obtenir les molécules les plus représentatives de l'invention et montrant l'éventail le plus varié de leurs propriétés.

Les complexes ID dans lesquels chacun des trois groupes Y est O, sont désignés ci-après par complexes ID-a.

Le précurseur d'un complexe ID-a dans lequel chacun des 3 groupes Y est O et chacun des 3 groupes X est CR²R³ et qui répond à la formule 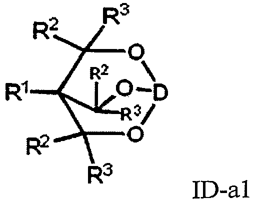 est un triol R¹C[CR²R³OH]₃.

Lorsque R¹ est un groupe perfluorosulfonyle, le triol R_{F}SO₂C-[CHR²OH]₃ peut être obtenu par l'une des réactions suivantes :
- réaction du perfluoroalcane sulfonate de potassium KR_{F}SO₂ avec un agent méthylant, par exemple le toluènesulfonate de méthyle CH₃C₆H₄SO₃CH₃ ;
- réaction de la sulfone R_{F}SO₂CH₃ avec un aldédhyde en présence d'une base forte encombrée.

Lorsque R² est H, on peut utiliser une source de formaldéhyde telle que le paraformaldéhyde, en présence de 1,8-Diazabicyclo[5.4.0]undec-7-ene (DBU) ou de tétraméthylguanidine en tant que base forte. Lorsque R² est différent de H, on peut utiliser l'aldéhyde correspondant R²CHO avec les mêmes bases ou une base phosphorée de type phosphazène.

Lorsque R² et R³ représentent chacun H, le triol R¹C(CH₂OH)₃ se forme très facilement en une étape par action du formaldéhyde, agissant comme agent hydroxyméthylant et réducteur sur l'aldéhyde RCH₂CHO, selon la réaction

RCH₂CHO + 4H₂C=O + OH⁻ ⇒ RC(CH₂OH)₃ + HCO₂⁻

Lorsque R¹ est un groupement électroattacteur (par exemple NO₂, CN, CF₃CO, ou CF₃SO₂), la réaction d'addition se fait en présence de catalyseurs basiques, directement sans réaction d'oxydo-reduction, selon le schéma réactionnel

R¹CH₃ + 3H₂C=O ⇒ R¹CH₃C(CH₂OH)₃

Le même type de reaction se fait avec les aldéhydes R²CHO pour donner R¹CH₃C(CHR²OH)₃.

Un complexe ID-a2 est un complexe ID-a dans lequel chacun des 3 Y est O, X¹ et X² représentent chacun CR²R³ (en particulier CH₂) et X³ représente CO, et il est noté ci-après R¹C{[CR²R³O-]₂CO₂-}B.

Le précurseur d'un complexe ID-a2 est un composé R¹C[CR²R³OH]₂CO₂H qui peut réagir :
- avec un borate d'alkyle dans un solvant protique polaire, par exemple un alcool inférieur, ou un solvant aprotique polaire tel que l'acétonitrile, pour donner un complexe IB-a2.
- avec un alkoxyde d'aluminium, un alkyle aluminium, ou un diaminoalkyle aluminium pour former un complexe d'aluminium IAl-a2, les alcoxydes étant préférés.
Lorsque R¹ est un groupe alkyle, le précurseur R¹C[CH₂OH]₂CO₂H peut être obtenu par oxydation ménagée, en particulier enzymatique, du triol correspondant R¹C(CH²OH)₃.
Lorsque R¹ est H, le précurseur HC(CHR²OH)₂COOH est obtenu par condensation de l'aldéhyde R²CHO sur un ester malonique (méthyle, éthyle), suivie d'une décarboxylation.

Un complexe ID-a dans lequel chacun des 3 y est O, X¹ représente CR²R³, (en particulier CH₂), et X² et X³ représentent chacun C=O, est désigné ci-après par ID-a3. Le précurseur d'un complexe ID-a3 est un composé R¹C(CH₂OH)(CO₂H)₂ qui peut réagir :
- avec un borate d'alkyle ou l'acide borique dans un solvant polaire, par exemple un alcool ayant de 1 à 4 atomes de carbone pour former un complexe de bore ;
- avec un alkoxyde d'aluminium, un alkyle aluminium, ou un diaminoalkyle aluminium pour former un complexe d'aluminium IAl-a3, les alcoxydes étant préférés.

Le précurseur R¹C(CH₂OH)(CO₂H)₂ est obtenu par condensation d'une des isomères de la formaldéhyde sur l'ester R¹C(H)(CO₂Et)₂ suivie d'une hydrolyse des fonctions ester en R¹C(CH₂OH)(CO₂H)₂, à température modérée pour éviter la décarboxylation.

Un complexe ID-a dans lequel chacun des Y est O, deux Xⁱ représentent CR²R³, (en particulier CH₂), et un Xⁱ représente C=NCN est désigné ci-après par ID-a4. Le précurseur d'un complexe ID-a4 est un composé R¹C(CH₂OH)₂[C(NCN)OM¹], M¹ étant par exemple un métal alcalin, qui peut réagir :
- avec une source de bore tel qu'un borate d'alkyle ou l'acide borique, en présence d'un acide destiné à libérer le groupe -C(NCN)OH, pour former le complexe IB-a4 ;
- avec un alkoxyde d'aluminium ou l'hydroxyde d'aluminium après addition d'un acide capable de libérer -C(NCN)OH pour former le complexe d'aluminium IAl-a4 ; ou bien
- avec AlCl₃, AlBr₃, AlF₃ ou Al₂(SO₄)₃ en présence de deux équivalents d'une base Nu permettant la formation des deux liaisons -CR₁R₂O-Al de l'hydroxyde de type alcool par formation de NuH⁺X⁻, X représentant l'un des anions initialement apporté par le sel d'aluminium pour former un complexe d'aluminium IAl-a4.

Le composé R¹C(CH₂OH)₂[C(NCN)OM¹ peut être obtenu par un procédé comprenant les étapes suivantes :
- estérification de R¹C(CH₂OH)₂(CO₂H) pour obtenir R¹C(CH₂OH)₂(CO₂Me) ou R¹C(CH₂OH)₂(CO₂Et) ;
- action d'un sel M¹HNCN pour la formation de R¹C(CH₂OH)₂[C(NCN)OM¹, M étant par exemple un métal alcalin.

Un complexe ID-a dans lequel X¹ représente CR²R³ (en particulier CHR² et CH₂) et X² et X³ représentent chacun C=NCN, est noté ci-après ID-a5.

Le précurseur d'un complexe ID-a5 est un composé répondant à la formule R¹C(CR²HOH)[C(NCN)OM¹]₂ qui peut être obtenu par action de R²CHO ou de HCHO sur l'ester de l'acide malonique R¹C(H)(CO₂Me)₂ ou R¹C(H)(CO₂Et)₂, suivie de l'action de deux équivalents d'un sel M¹HNCN pour donner R¹C(CR²HOH)[C(NCN)OM¹]₂, M¹ pouvant être un métal alcalin,

Le précurseur R¹C(CR²HOH)[C(NCN)OM¹]₂ peut réagir avec :
- une source de bore tel qu'un borate d'alkyle ou l'acide borique, en présence de deux équivalents d'un acide destiné à libérer les deux groupes C(NCN)OH, pour former le complexe IB-a5 ;
- un alkoxyde d'aluminium ou l'hydroxyde d'aluminium après addition d'un acide capable de libérer -C(NCN)OH pour former le complexe d'aluminium IAl-a5 ; ou bien
- AlCl₃, AlBr₃, AlF₃ ou Al₂(SO₄)₃ en présence de deux équivalents d'une base Nu permettant la formation des deux liaisons -CR₁R₂O-Al de l'hydroxyde de type alcool par formation de NuH⁺X⁻, X représentant l'un des anions initialement apporté par le sel d'aluminium pour former un complexe d'aluminium IAl-a5.

Un complexe ID-a dans lequel chacun des groupes Y est O et chacun des groupes X représente un groupe C=NCN est désigné ci-après par ID-a6.

Le précurseur d'un complexe ID-a6 est un composé R¹C[C(NCN)OM¹]₃ qui peut être obtenu par estérification d'un sel alcalin d'un triester de l'acide méthane-tricarboxylique HC(CO₂Me)₃ ou HC(CO₂Et)₃ pour donner R¹C(CO₂Me)₃ ou R¹C(CO₂Et)₃, suivi de l'action d'au moins trois équivalents d'un sel M¹HNCN

Le précurseur R¹C[C(NCN)OM¹]₃ réagit avec :
- une source de bore tel qu'un borate d'alkyle ou l'acide borique en présence de trois équivalents d'un acide, ou par action d'un halogénure de bore tel que BF₃ ou BCl₃, ou par action du triacétate de bore B(CH₃CO₂)₃, pour former le complexe IB-a6 ;
- un alkoxyde d'aluminium ou l'hydroxyde d'aluminium après addition d'un acide capable de libérer ≡C(NCN)OH pour former le complexe d'aluminium IAl-a6 ; ou bien
- AlCl₃, AlBr₃, AlF₃ ou Al₂(SO₄)₃, pour obtenir la précipitation des sels de M¹ correspondant et la formation du complexe d'aluminium IAl-a6.

Un complexe ID-a dans lequel chacun des groupes Y est O, deux groupes Xⁱ représentent chacun un groupe CR²R³, et un groupe Xⁱ représente un groupe C=C(CN)₂ est désigné ci-après par ID-a7.

Le précurseur d'un complexe ID-a7 est un composé répondant à la formule R¹C(CH₂OH)₂[C[(C(CN)₂]OM¹] qui peut être obtenu par estérification de R¹C(CH₂OH)₂(CO₂H) pour obtenir R¹C(CH₂OH)₂(CO₂Me) ou R¹C(CH₂OH)₂(CO₂Et), suivie de l'action d'un sel M¹HC(CN)₂ dérivé du malononitrile.

Le précurseur R¹C(CH₂OH)₂[C[(C(CN)₂]OM¹] peut réagir avec :
- une source de bore tel qu'un borate d'alkyle ou l'acide borique, en présence d'un équivalent acide destiné à libérer le groupe -C[C(CN)₂]OH, pour former le complexe IB-a7.
- un alkoxyde d'aluminium ou l'hydroxyde d'aluminium après addition d'un acide capable de libérer -C(NCN)OH pour former le complexe d'aluminium IAl-a7 ; ou bien
- AlCl₃, AlBr₃, AlF₃ ou Al₂(SO₄)₃ en présence de deux équivalents d'une base Nu permettant la formation des deux liaisons -CR₁R₂O-Al de l'hydroxyde de type alcool par formation de NuH⁺X⁻, X représentant l'un des anions initialement apporté par le sel d'aluminium pour former un complexe d'aluminium IAl-a7.

Un complexe ID-a dans lequel chacun des Y est O, un groupe Xⁱ est un groupe CR²H ou CH₂ et 2 groupes Xⁱ sont chacun un groupe C=C(CN)₂ est désigné ci-après par ID-a8.

Le précurseur d'un complexe ID-a8 est un composé R¹C(CR²HOH) [{C[(CN)₂OM¹]}₂ qui peut être obtenu par action de R²CHO (ou HCHO) sur l'ester R¹C(H)(CO₂Me)₂ ou R¹C(H)(CO₂Et)₂, action de deux équivalents d'un sel M¹HC(CN)₂ pour donner le sel R¹C(CR²HOH) [{C[(CN)₂OM¹]}₂.

Le précurseur R¹C(CR²HOH) [{C[(CN)₂OM¹]}₂ peut réagir avec :
- une source de bore tel qu'un borate d'alkyle ou l'acide borique, en présence de deux équivalents d'un acide destiné à libérer les deux groupes -C[(C(CN)₂OH], pour former le complexe IB-a8, l'anion de l'acide et le cation M pouvant éventuellement servir à former un adduit de l'invention.
- un alkoxyde d'aluminium ou l'hydroxyde d'aluminium après addition d'un acide capable de libérer -C(NCN)OH pour former le complexe d'aluminium IAl-a8 ; ou bien
- AlCl₃, AlBr₃, AlF₃ ou Al₂(SO₄)₃ en présence de deux équivalents d'une base Nu permettant la formation des deux liaisons -CR₁R₂O-Al de l'hydroxyde de type alcool par formation de NuH⁺X⁻, X représentant l'un des anions initialement apporté par le sel d'aluminium pour former un complexe d'aluminium IAl-a8.

Un complexe ID-a dans lequel chacun des Y est O et trois groupes X représentent chacun un groupe C=(CN)₂ est désigné ci-après par ID-a9.p

Le précurseur d'un complexe ID-a9 est un composé R¹C{[C[C(CN)₂OM¹]}₃ qui peut être obtenu par estérification d'un sel alcalin d'un triester de l'acide méthane-tricarboxylique HC(CO₂Me)₃ ou HC(CO₂Et)₃ pour donner R¹C(CO₂Me)₃ ou R¹C(CO₂Et)₃, suivie de l'action d'au moins trois équivalents d'un sel M¹HC(CN)₂ pour former le sel R¹C{[C[C(CN)₂OM¹]}₃.

Le précurseur R¹C{[C[C(CN)₂OM¹]}₃ peut réagir avec :
- une source de bore tel qu'un borate d'alkyle ou l'acide borique, en présence de trois équivalents d'un acide destiné à libérer les trois groupes -C[C(CN)₂OH, pour obtenir le complexe IB-a9. ou encore par action d'un halogénure de bore el que BF₃ ou BCl₃ ou encore le triacétate de bore B(CH₃CO₂)₃ ;
- un alkoxyde d'aluminium ou l'hydroxyde d'aluminium après addition d'un acide capable de libérer -C(NCN)OH pour former le complexe d'aluminium IAl-a9 ; ou bien
- AlCl₃, AlBr₃, AlF₃ ou Al₂(SO₄)₃, pour obtenir la précipitation des sels de M¹ correspondant et la formation du complexe d'aluminium IAl-a9.

Une autre famille de complexes comprend les complexes, désignés ci-après par ID-b, dans lesquels chacun des groupes Y comprend un atome d'azote, et les trois groupes X sont des groupes CR²R³, en particulier les complexes dans lesquels chaque groupe X est un groupe CH₂. Ces complexes répondent à la formule

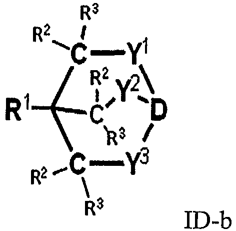

Les groupes Y concernés sont les suivants : >N(C≡N), >N(COR_{F}), >N(SO₂R⁴), >N(SO₂NR⁴2), >NR⁴, >N(COR⁴) et >N(SO₂R_{F}).

D'une manière générale, un précurseur organique ayant au moins un groupe Y contenant un atome d'azote peut être obtenu à partir d'un composé qui a soit un groupe ≡C-CN, soit un groupe -CR²R³(OH).

Selon un premier mode de réalisation, l'hydrogénation d'un groupement ≡C-CN par l'hydrogène en présence d'un catalyseur ou par LiAlH₄, donne un groupe -CH₂-NH₂. Le groupement -CH₂NH₂ ainsi obtenu peut être modifié par des sources électrophiles de groupements R"CO, R_{F}CO, R"SO₂ R_{F}SO₂, ou CN qui se lient à l'atome d'azote du groupement amine pour donner les ligands de l'invention.

Selon un autre mode de réalisation, on utilise l'un des précurseurs portant au moins un groupe OH mentionné pour la préparation de certains complexes ID-a et on remplace le groupe OH du groupement -CR²R³(OH) par un groupe partant R¹⁰ pour donner -CR²R³R¹⁰ (R¹⁰ étant choisi parmi Cl, Br, I, R¹¹SO₃, R³R⁴NSO₃, et R_{F}SO₃, (R_{F}, R₃, et R₄ étant tels que définis précédemment, R¹¹ étant choisi parmi les groupes définis précédemment pour R), puis on fait réagir avec un composé nucléophile azoté, par exemple NH₃, ou un sel d'un anion nucléophile tel que par exemple C₆H₄(CO)₂N⁻,(HCO)₂N⁻, R"CONH⁻, R_{F}CONH⁻, R"SO₂NH⁻ R_{F}SO₂NH⁻, et NCNH⁻, NCN²⁻. L'action de NH₃ donne une amine qui peut être traitée de la même manière que l'amine obtenue par hydrogénation d'un groupe nitrile. L'action des sels d'anions nucléophiles tels que C₆H₄(CO)₂N- ou(HCO)₂N⁻ (méthode de Gabriel) suivie d'une hydrolyse libère le groupement NH₂. L'action d'un sel des autres anions nucléophiles précités donne directement le groupement Y recherché.

Un complexe ID-b dans lequel les trois groupes X représentent chacun un groupe CH₂ et les 3 groupes Y sont chacun NCOCF₃, répond à la formule 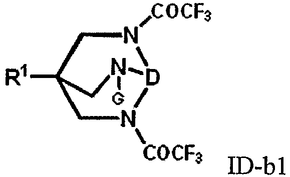 dans laquelle G est COCF₃.

Le précurseur d'un complexe ID-b1 est un composé R¹C[CH₂N(H)COCF₃]₃ qui peut réagir avec :
- un borate d'alkyle dans solvant tel qu'un alcool à faible nombre d'atomes de carbone, l'acétonitrile, l'acétone ou le THF pour donner un complexe IB-b1 ;
- un alkoxyde d'aluminium, un alkyle aluminium, un tris(dialkylaluminium ou l'hydroxyde d'aluminium pour former le complexe d'aluminium IA1-b1 ; ou bien
- AlCl₃, AlBr₃, AlF₃ ou Al₂(SO₄)₃ en présence de trois équivalents d'une base Nu permettant la formation des deux liaisons -CH₂-N(COCF₃)-Al pour former un complexe d'aluminium IAl-b1.

Le précurseur R¹C[CH2N(H)COCF₃]₃ peut être obtenu par les réactions suivantes :
- R¹C-(CH₂OH)₃ + CH₃-C₆H₄-SO2Cl ⇒ R¹C(CH₂OSO₂C₆H₄CH₃)₃ selon la méthode décrite par W. Stetter & H. Bockmann, (Chemische Berichte, (1951), 84 834-9) ;
- réaction de LiH avec CF₃CONH₂ dans le THF,
- après dégagement d'hydrogène, addition à température ambiante de CH₃C(CH₂OSO₂C₆H₄CH₃)₃.

Lorsque R¹ est CH₃ ou C₂H₅, les complexes de bore répondent aux formules 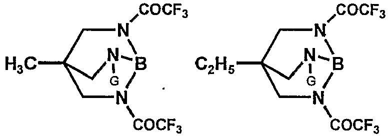 dans lesquelles G est -COCF₃.

Un composé ID-b1 dans lequel R¹ est H est obtenu à partir d'un précurseur HC[CH₂NH(COCF₃)]₃ préparé par réaction du composé HC[CH₂NH₂]₃ avec CF₃CO₂C₂H₅.

Ledit précurseur peut être mis en contact avec
- un borate d'alkyle dans un solvant aprotique pour obtenir un complexe de bore du type IB-b1
- une source d'aluminium pour obtenir un complexe d'aluminium du type IA1-b1.

La triamine HC[CH₂NH₂]₃ peut être obtenue par réaction de tricyanomethide K[C(CN)₃] commercial avec l'hydrure d'aluminium et de lithium LiAlH₄, puis reprise dans un solution aqueuse d'hydroxyde de lithium.

Un complexe ID-b dans lequel les 3 groupes Y sont NCN, répondant à la formule 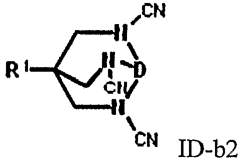 peut être obtenu à partir de divers précurseurs organiques, en faisant réagir un précurseur avec une source de bore pour obtenir un complexe IB-b2 ou avec une source d'aluminium pour obtenir un complexe IA1-b2.

Dans un 1^{er} mode de réalisation, on prépare le précurseur organique par réaction de la triamine R¹C(CH₂NH₂)₃ (obtenue par réduction de R¹C(C≡N)₃ comme indiqué précédemment), avec le cyanoimidazole (trois eq.),.

Dans un 2^{ème} mode de réalisation, on prépare un précurseur organique en faisant réagir trois équivalents du composé nucléophile azoté (M¹)⁺[HNCN]⁻ (si M¹ est monovalent) ou (M¹)²⁺[NCN]²⁻ (si M¹ est divalent) sur le chlorure R¹C(CH₂Cl)₃. Le chlorure est un produit du commerce pour R¹ = CH₃. Lorsque R¹ ≠ CH₃, le chlorure R¹C(CH₂Cl)₃ peut être obtenu par traitement du triol R¹C(CH₂OH)₃ par un agent chlorurant, par exemple PCl₃. Dans ce 2^{ème} mode de réalisation, on peut utiliser un bromure ou un iodure à la place du chlorure. Les bromures et les iodures sont plus réactifs et ils peuvent être obtenu par réaction de R¹C(CH₂OH)₃ avec un agent bromurant ou iodant. La réaction de substitution du chlore s'effectue dans le DMF où un alcool léger (MeOH ou EtOH) à moyenne température de l'ordre 65°C.

Dans un 3^{ème} mode de réalisation, on prépare un composé R¹C(CH₂R¹²SO₃)₃ [R¹² étant R, R³R⁴N, ou R_{F} avec la signification donnée précédemment) par action sur R¹C(CH₂OH)₃ de R¹²SO₃F, R¹²SO₃Cl ou (R¹²SO₂)₂O en présence d'une base tertiaire, puis en faisant réagir le composé obtenu avec M⁺[HNCN]⁻ (M = Li, Na, K, onium) ou CaNCN pour obtenir le précurseur organique.

Un complexe ID-b dans lequel les 3 groupes Y sont NSO₂R", répondant à la formule 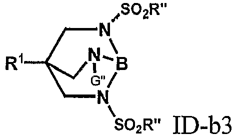 dans laquelle G" est R"SO₂ et R" est R, R³R⁴N, ou R_{F}, peut être obtenu à partir de divers précurseurs organiques, en faisant réagir un précurseur organique avec une source de bore (par exemple l'acide borique ou un de ses esters) pour obtenir un complexe IB-b3 ou avec une source d'aluminium pour obtenir un complexe IA1-b3.

Selon un 1^{er} mode de réalisation, on prépare un précurseur organique en faisant réagir trois équivalents d'une source électrophile R"SO₂E, (E étant Cl, Im, R"SO₃) avec la triamine R¹C(CH₂NH₂)₃ décrite précédemment.

Dans un 2^{ème} mode de réalisation, on prépare un précurseur organique ne faisant réagir le composé R¹C(CH₂R¹⁴)₃ dans lequel R¹⁴ représente Cl, Br, I, R^{E}SO₃, (R^{E} étant de préférence CH₃, CF₃ ou CH₃C₆H₄) sur l'anion azoté (3 eq.) R"SO₂NH⁻ sous forme de sel alcalin où de sel d' onium, selon la réaction

R¹C(CH₂R¹⁴)₃ + 3R"SO₂NH⁻ ⇒ R¹C[CH₂(R"SO₂)NH)]₃ + 3(R¹⁴)⁻

Une autre famille de complexes comprend les complexes, désignés ci-après par ID-c, dans lesquels au moins un groupe Y est O, et au moins un groupe Y comprend un atome d'azote.

Un complexe ID-c dans lequel un groupe Yⁱ est O et 2 groupes Yⁱ sont 2 NCOCF₃, répondant à la formule

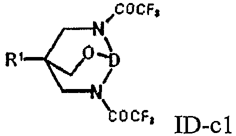

Le précurseur d'un complexe ID-c1 peut être obtenu par réaction dans l'acétonitrile de la diamine HOCH₂C(R¹)(CH₂NH₂)₂ avec le trifluoroacétate d'éthyle, R¹ étant alkyle.

La réaction du précurseur avec une source de bore (ou d'aluminium) donne le complexe IB-c1 (IA1-c1).

La diamine peut être obtenue par un procédé comprenant les étapes suivantes :
- Préparation de l'alkyle-malononitrile R¹HC(CN)₂ par la méthode publiée par J. Dunham, et al., [Synthesis, (2006), 680-686)] par action de borohydrure de sodium NaBH₄ sur un mélange d'un aldéhyde O=CHR¹ et de malononitrile ;
- Réaction de l'alkylmalononitrile R¹HC(CN)₂ avec un aldéhyde O=CHR² catalysée par une base forte telle que DBU, pour obtenir R¹C(CHR²OH)(CN)₂, R² ayant la définition donnée précédemment ;
- Réaction de R¹C(CHR²OH)(CN)₂ avec LiAlH₄ pour obtenir la diamine HOCH₂C(R¹)(CH₂NHR²)₂ ou réduction par l'hydrogène.

Un complexe ID-c dans lequel 2 groupes Yⁱ sont chacun O et un groupe Yⁱ est NCOCF₃, répondant à la formule : 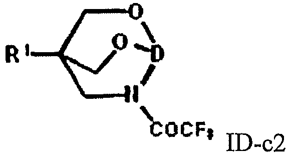 peut être obtenu à partir de divers précurseurs organiques, qui réagissent avec une source de bore [par exemple B(OCH₃)₃] ou une source d'aluminium.

Dans un premier mode, le précurseur organique est obtenu par un procédé comprenant les étapes suivantes :
- réaction du tris(hydroxyméthyl)alcane (dont deux groupes OH sont protégés, par exemple sous forme de carbonate) avec un agent replaçant OH par un groupe partant R¹³ représente Cl⁻, Br⁻, I⁻, ou R"SO₃, et réaction de type Gabriel par exemple sur le sel alcalin de la bis(formyl) imide,
- hydrolyse du carbonate et des liaisons formyle pour obtenir l'aminodiol,
- réaction avec CF₃COOC₂H₅ pour fixer le groupe trifluoroacétyle sur l'amine.

Dans un autre mode de réalisation, l'aminodiol dans lequel R¹ est H peut être préparé par hydroxyméthylation du cyanoacétate de méthyle ou d'éthyle NCC(CH₂OH)₂CO₂Me ou NCC(CH₂OH)₂CO₂Et, suivie d'une hydrolyse-décarboxylation donnant HC(CH₂OH)₂(CN) et d'une réduction par l'hydrogène ou LiAlH₄ pour donner HC(CH₂OH)₂(CH₂NH₂).

Un complexe ID-c dans lequel 2 groupes Yⁱ sont chacun O et un groupe Yⁱ est NCN, répondant à la formule 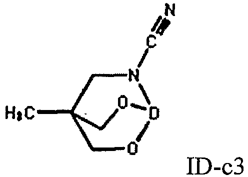 peut être préparé à partir d'un précurseur organique obtenu par action du N-cyanoimidazole sur l'amine-diol décrite plus haut pour la préparation du complexe ID-c2. Ledit précurseur est ensuite mis en contact soit avec une source de bore [par exemple B(OCH₃)₃], soit avec une source d'aluminium.

Un complexe ID-c dans lequel 1 groupe Yⁱ est O et deux groupes Yⁱ représentent chacun NCN, répondant à la formule 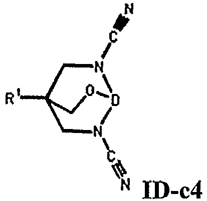 peut être obtenu à partir d'un précurseur organique préparé par un procédé comprenant les étapes suivantes :
- hydroxyméthylation d'un alkylmalononitrile R¹HC(CN)₂ par une source de méthanal H₂C=O ;
- réduction par H₂ ou LiAlH₄ du monoalkyl malononitrile hydroxyméthylé obtenu, pour obtenir un diamino-alcool ;
- réaction du diamine-alcool avec N-cyanoimidazole (2 équiv.) lui-même obtenu in situ par action de CNBr sur l'imidazole.

Ledit précurseur est ensuite mis en contact avec une source de bore ([par exemple un équivalent de B(OCH₃)₃] pour obtenir le complexe du bore ou avec une source d'aluminium.

Une autre sous-famille de complexes ID-c comprend les complexes dans lequel 2 groupes Yⁱ sont chacun O et un groupe Yⁱ est NSO₂R", R" étant R, R³R⁴N, ou R_{F}, répondant à la formule

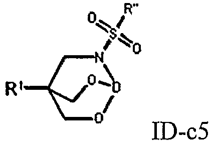

Dans un 1^{er} mode de réalisation, le précurseur organique d'un complexe ID-c5 peut être obtenu par action de deux équivalents d'une source électrophile R"SO₂E, E étant un chlorure, un imidazoyle C₃H₃N₂-, R"SO₃- sur l'amino-diol répondant à la formule

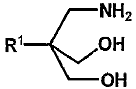

Selon un 2^{ème} mode de réalisation, le précurseur organique d'un complexe ID-c5 peut être préparé par un procédé comprenant les étapes suivantes :
- préparation d'un composé R¹C(CH₂OH)₂[CH₂R¹³] dans lequel R¹³ représente Cl⁻, Br⁻, I⁻, ou R"SO₃ ;
- réaction du composé R¹C(CH₂OH)₂[CH₂R¹³] avec un composé MJ dans lequel J représente l'anion R"SO₂NH⁻, et M est un cation de métal alcalin ou un cation onium, ledit cation onium pouvant être un cation obtenu en mettant l'amide R"SO₂NH² en présence d'une base tertiaire.

Il peut être préférable de protéger les groupes OH de R¹C(CH₂OH)₂[CH₂R¹³], par un réactif conventionnel comme par exemple les silanes encombrés, les acétals cycliques ou non, les carbonates cycliques, les groupements tertiobutoxycarbonates, et les acides boroniques.

Un complexe ID-c dans lequel un groupe Yⁱ est O et deux groupes Yⁱ représentent chacun NSO₂R", R" est R, R³R⁴N, ou R_{F}, répondant à la formule 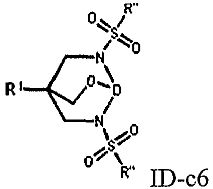 peut être obtenu à partir d'un précurseur organique préparé par réaction de la diamine monoalcool R¹H(CH₂OH)(CH₂NH₂)₂ décrite précédemment sur le composé R"SO₂E dans lequel E est Cl, Im, R"SO₃.

Le composé ainsi obtenu est mis en présence d'une source de Bore telle que B(OH)₃ ou ses esters ou d'une source d'aluminium.

Des précurseurs (désignés par PTE) de complexes II-D peuvent être obtenus à partir de triesters (TE) répondant à la formule R¹C(COOR¹⁴)₂(CR²R³-COOR¹⁵) dans laquelle Z est Cl, 1 ou Br, R¹⁴ et R¹⁵ sont des groupes alkyle inférieur, de préférence identiques, plus particulièrement un groupe méthyle ou éthyle. Un triester TE peut être obtenu selon le schéma réactionnel suivant, dans lequel Nu désigne une base :

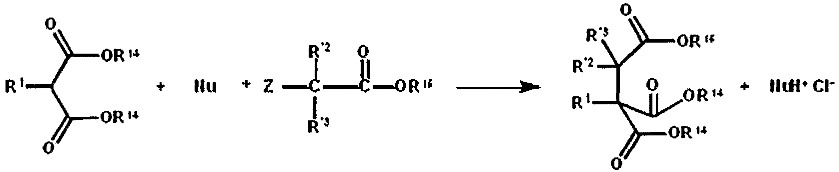

Un composé TE permet de préparer les précurseurs pour divers complexes dans lesquels les couples XⁱYⁱ sont identiques. Les complexes IID dans lesquels chacun des groupes Y est O sont désignés par IID-a. Ces précurseurs PTE sont obtenus par réaction d'un composé TE avec un réactif QHM¹ dans lequel M¹ (est un métal alcalin et Q est un groupe choisi parmi >O, >NCN, C(CN)₂. La formule générale des précurseurs PTE ainsi obtenus est donnée dans le tableau ci-dessous :

| Q | Réactif | PTE |
|---|---|---|
| >O | M¹OH | R¹C(COOM¹)₂(CR'²R'³-COOM¹). |
| >NCN | M¹NH-CN | R¹C[C(NCN)OM¹]₂[CR'²R'³-C(NCN)OM¹]. |
| >C(CN)₂ | M¹HC(CN)₂ | R¹C{C[C(CN)₂]OM¹}₂{CR'²R'³-C[C(CN)₂OM¹}. |

D'autres précurseurs (désignés par PDL) de complexes II-D peuvent être obtenus à partir d'un monoalcool diester (DL) R¹C(COOR¹⁴)₂(CR'²R'³-CR²R³OH), les deux groupes R¹⁴ étant des groupes alkyle inférieur identiques, plus particulièrement des groupes méthyle ou éthyle. Les précurseurs PDL sont également utiles pour la préparation de complexes du type IID-a.

Un composé DL peut être préparé en présence d'un base Nu et d'un catalyseur Cat selon le schéma réactionnel suivant, dans le cas où chacun des groupes R² et R³ est H :

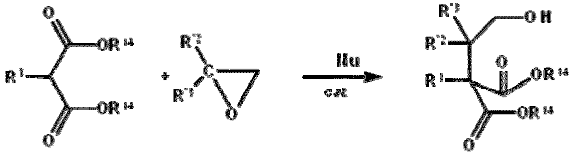

Des composés DL dans lesquels au moins l'un des groupes R² et R³ est différent de H peuvent être obtenu en remplaçant l'oxirane par un carbonate cyclique approprié, en particulier un carbonate d'éthylène ou de propylène.

Un composé DL permet de préparer les précurseurs pour divers complexes dans lesquels deux couples XⁱYⁱ sont identiques. Ces précurseurs sont obtenus par réaction d'un composé DL avec un réactif QHM dans lequel M¹ est un métal alcalin et Q est un groupe choisi parmi >O, >NCN, C(CN)₂. La formule générale des précurseurs PDL ainsi obtenus est donnée dans le tableau ci-dessous :

| Q | Réactif | PDL |
|---|---|---|
| >O | M¹OH | R¹C(COOM¹)₂(CR'²R'³-CR²R³OH). |
| >NCN | M¹NH-CN | R¹C[C(NCN)OM"]₂(CR'²R'³-CR²R³OH) |
| >C(CN)₂ | M¹HC(CN)₂ | R¹CC{C(CN)₂]OM"}₂(CR'²R'³-CR²R²OH) |

D'autres précurseurs (désignés par PDM) de complexes IID peuvent être obtenus partir d'une monoamine diacide (DM) R¹C(COOR¹⁴)₂(CR'²R'³-CR²R³NH₂), les deux groupes R¹⁴ étant des groupes alkyle inférieur identiques, plus particulièrement des groupes méthyle ou éthyle. Un composé DM peut être préparé en présence d'un base Nu selon le schéma réactionnel suivant, Z étant I, Br, ou Cl, dans le cas où chacun des groupes R² et R³ est H. Des composés DM dans lesquels au moins l'un des groupes R² et R³ est différent de H peuvent être obtenu en choisissant un halogénure d'amine approprié de formule Z-CR'²R'³-CR²R³NH₂.

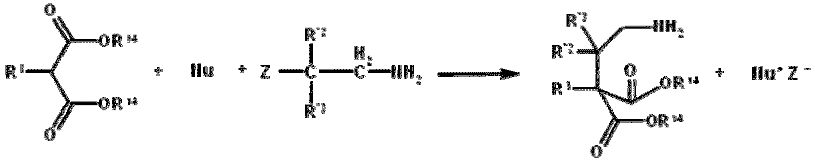

Un composé DM permet de préparer les précurseurs pour divers complexes dans lesquels deux couples XⁱYⁱ sont identiques. Ces précurseurs sont obtenus par réaction d'un composé DM avec un réactif QHM¹ dans lequel M¹ est un métal alcalin et Q est un groupe choisi parmi >O, >NCN, C(CN)₂. La formule générale des précurseurs PDM ainsi obtenus est donnée dans le tableau ci-dessous. Les complexes IID dans lesquels au moins l'un des groupes Y est O et au moins l'un des groupes Y comprend un atome N sont désignés par IID-c :

| Q | Réactif | PDM |
|---|---|---|
| >O | M¹OH | R¹C(COOM¹)₂(CR'²R'³-CR²R³NH₂). |
| >NCN | M¹NH-CN | R¹C[C(NCN)OM¹]₂[CR'²R'³-CR²R³OH] |
| >C(CN)₂ | M"HC(CN)₂ | R¹C{C[C(CN)₂OM"]}₂[CR'²R'³-CR²R³OH] |

De manière générale, un précurseur d'un complexe IIID peut être obtenu par couplage de deux molécules du précurseur correspondant d'un complexe ID. De même, un précurseur d'un complexe IVD peut être obtenu par couplage de deux molécules du précurseur correspondant d'un complexe IID.

Par exemple, un précurseur de complexe IIID peut être obtenu selon le schéma réactionnel suivant

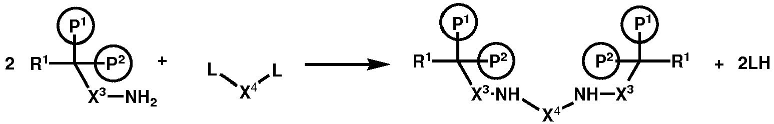

Un précurseur de complexe IVD peut être obtenu selon le schéma réactionnel suivant :

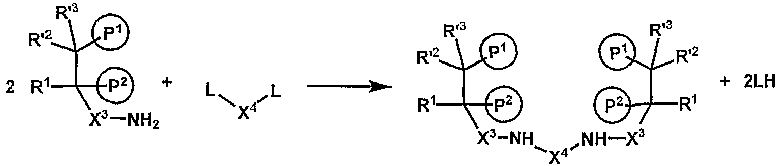

Dans les deux schémas réactionnels ci-dessus :
- X⁴ représente >C=O, >C=NCN ou >C=C(CN)₂ >SO₂, ou > C=S ;
- L représente un groupe partant, par exemple Cl, Br, ou un groupe imidazoyle, triazoyle, ou succinimidyle. Lorsque L est Cl ou Br, il est avantageux d'ajouter une base Nu pour former NuH⁺Cl⁻ ou NuH⁺Nu⁻ facile à éliminer ;
- R'², R'³ et X³ ont la signification donnée précédemment
- P¹ et P² représentent respectivement un groupe précurseur du segment X¹Y¹ et X²Y², par exemple sous forme protonée X¹Y¹H et X²Y²H.

Lorsque >X¹ ou >X² est >O, le groupe P¹ ou P² correspondant peut être C(=O)OM", C(=O)OCH₃ ou C(=O)OC₅H₅.

Lorsque >X¹ ou >X² est >C=NCN, le groupe P¹ ou P² correspondant peut être C(=NCN)OM" C(=O)OCH₃, ou C(=O)OC₅H₅, (à partir desquels on passe à NCN par réaction avec HNCN⁻), C(=NCN)OCH₃ ou C(=NCN)OC₅H₅.

Lorsque >X¹ ou >X² est >N-C(CN)₂, le groupe P¹ ou P² corresondant peut être C[=C(CN)_{2]}OM", C(=O)OCH₃, C(=O)OC₅H₅, (à partir desquels on passe à C(CN)₂ par réaction avec HC(CN)₂⁻), C[=C(CN)₂]OCH₃ ou C[=C(CN)₂]OC₅H₅.

Les complexes IIID et IVD dans lesquels X³ est CH₂ peuvent être préparés par une réaction d'amido-méthylation, respectivement selon les schémas réactionnels suivants : 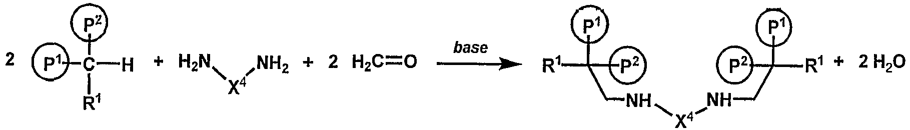 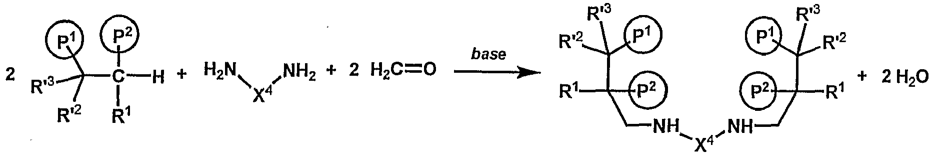 dans lesquels R¹, R'², R'³, P¹, P², et X⁴ ont la signification donnée précédemment, X⁴ étant différent de >CR²R³.

La présente invention est illustrée par les exemples suivants, auxquels elle n'est cependant pas limitée.

### Exemple 1

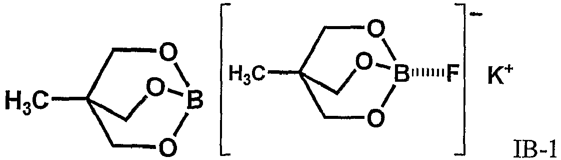

À 15 g de triméthyloléthane CH₃C(CH₂OH)₃ commercial sont ajoutés 7,72 g d'acide borique B(OH)₃ et le mélange est dissous dans 60 ml d'éthanol sous agitation magnétique avec formation du composé CH₃C(CH₂O-)₃B (IB-1). On ajoute 7,253 g de fluorure de potassium. Le fluorure est insoluble dans l'éthanol, mais se dissout rapidement en présence du complexe CH₃C(CH₂O-)₃B pour former l'adduit [CH₃C(CH₂O-)₃BF]⁻ K⁺. Le solvant est éliminé à l'aide d'un évaporateur rotatif pour donner une poudre cristalline blanche. La solubilité de l'adduit est de 2,7 g.L⁻¹ dans le diméthylformamide (DMF).

### Exemple 2

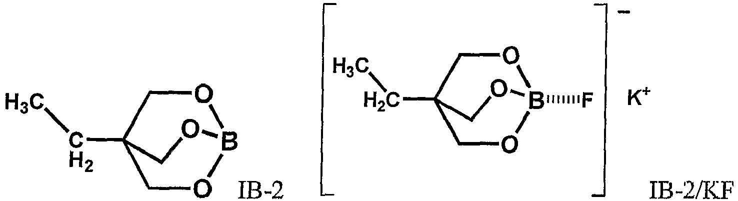

À 20 g de 2-éthyl-2-hydroxyméthyl-l, 3-propanediol (1,1,1-triméthylolpropane) commercial C₂H₅C(CH₂OH)₃ sont ajoutés 15,49 g de borate de méthyle B(OCH₃)₃ dans 75 ml de méthanol sous agitation magnétique. On constate un refroidissement important et le triol passe en solution. Par évaporation du solvant, on obtient le complexe tricylique C₂H₅C(CH₂O-)₃B (IB-2) sous forme d'un solide blanc. À 10 g de ce complexe dans 60 mL d'éthanol absolu, on ajoute 4,09 g de fluorure de potassium qui se dissout rapidement pour former l'adduit K⁺[C₂H₅C(CH₂O-)₃BF]⁻. Le solvant est éliminé à l'aide d'un évaporateur rotatif pour donner une poudre cristalline blanche. La solubilité de l'adduit IB-2/KF est de 17 g.L⁻¹ dans le diméthylformamide (DMF).

### Exemple 3

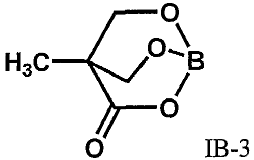

À 12 g d'acide 2,2-bis-(hydroxyméthyl)-propionique commercial (CH₃C(CH₂OH)₂CO₂H sont ajoutés 13,061 g de borate d'éthyle B(OC₂H₅)₃ dans 75 ml d'éthanol à 95 % sous agitation magnétique. La solution limpide obtenue est évaporée sous vide à l'aide d'un évaporateur rotatif et le séchage est poursuivi sous vide primaire à 75°C. La masse sirupeuse se transforme en un solide blanc qui est isolé (rendement quantitatif) et correspond à la formule CH₃C[(CH₂O-)₂(CO₂-)]B (IB-3). 6 g de ce complexe sont dissous dans 25 ml de diméthylformamide (DMF) anhydre et on obtient une solution limpide. 2,46 g de fluorure de potassium séché à 150°C sous vide primaire sont ajoutés. KF qui est strictement insoluble dans le DMF, passe rapidement en solution pour former l'adduit K⁺{CH₃C[(CH₂O-)₂(CO₂-)BF}⁻.

### Exemple 4

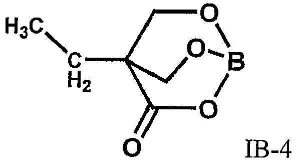

À 15 g d'acide 2,2-bis-(hydroxyméthyl)-butyrique commercial C₂H₅C(CH₂OH)₂CO₂H, on ajoute 10,52 g de borate de méthyle B(OCH₃)₃ dans 75 ml de méthanol sous agitation magnétique. La solution limpide obtenue est évaporée sous vide à l'aide d'un évaporateur rotatif. La masse sirupeuse se transforme en un solide blanc qui est isolé avec un rendement quantitatif et qui correspond à la formule C₂H₅C[(CH₂O-)₂(CO₂-)]B (IB-4). 8 g de ce complexe sont dissous dans 25 ml de diméthylformamide (DMF) anhydre et l'on obtient une solution limpide. 2,98 g de fluorure de potassium séché à 150°C sous vide primaire sont ajoutés. On obtient une solution limpide incolore de l'adduit K⁺{C₂H₅C[(CH₂O-)₂(CO₂-)]BF}⁻.

### Exemple 5

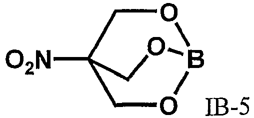

20 g de tris(hydroxyméthyl)-nitrométhane commercial NO₂C(CH₂OH)₃ sont ajoutés à une solution de 8,183 g d'acide borique dans 65 mL de méthanol. La solution jaune est évaporée pour laisser un solide beige de formule NO₂C(CH₂O-)₃B (IB-5). A 12 g de ce composé dans 60 mL de méthanol sont ajouté 13,99 g de fluorure de tétraéthyl-ammonium dihydraté (C₂H₅)₄NF, 2H₂O commercial et 16 g de 2,2-diméthoxypropane CH₃C(OCH₃)₂CH₃ destiné à réagir sur l'eau formée. La solution jaune claire est évaporée pour donner un adduit sous forme de solide anhydre (C₂H₅)₄N⁺[NO₂C(CH₂O-)₃BF]⁻ Ce sel est soluble dans les solvants polaires, comme le dichlorométhane, l'acétonitrile, le DMF, le dimethylacétamide, le DMSO, la N-méthylpyrrolidinone (NMP), le α,α,α-trifluorotoluène.

### Exemple 6

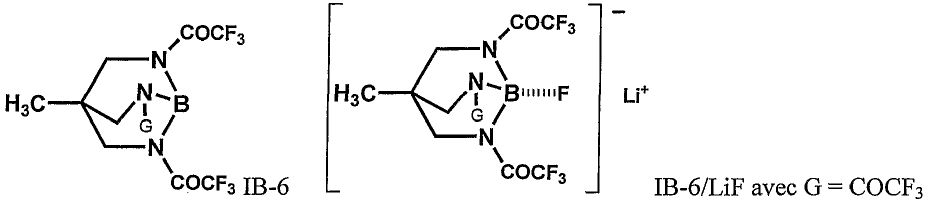

L'ester sulfonique CH₃C(CH₂OSO₂C₆H₄CH₃)₃ est préparé selon la méthode de Stetter et Bockmann, (W. Stetter & H. Bockmann, Chemische Berichte, (1951), 84 834-9) à partir de triméthyloléthane et de chlorure de toluène sulfonyle dans la pyridine. 6,2 g g LiH sont ajoutés à une solution 44 g de trifluoroacétamide CF₃CONH₂ dans 400 ml de tétrahydrofuranne. Après dégagement d'hydrogène, on ajoute progressivement à la suspension à température ordinaire et sous agitation magnétique, 75 g de l'ester sulfonique préparé précédemment. On constate une reprise du dégagement d'hydrogène. Après deux heures, la suspension est évaporée et le mélange est repris par 500 ml d'eau additionnée de 60 g d'hydrogénosulfate d'ammonium. La solution est extraite dans l'éther éthylique en trois portions de 300 ml. Les extraits combinés sont évaporés et recristallisés dans un mélange toluène-acétonitrile pour donner 42 g du complexant CH₃C(CH₂N(H)COCF₃)₃ (Rendt. 80%). 8 g du complexant sont dissous dans 30 ml de méthanol et on ajoute 2,88 g de borate de d'éthyle et 512 mg de LiF. Le fluorure de lithium se dissout sous forme du sel complexe (IB-6/LiF) de formule {CH₃C[CH₂-N(COCF₃)-]₃BF}⁻Li⁺.

### Exemple 7

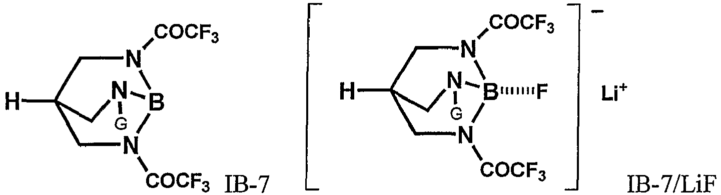

On a dissous 3 g de tricyanomethide K[C(CN)₃] de potassium de source commerciale dans 200 ml de THF auxquels on a ajouté 12 g d'hydrure d'aluminium et de lithium LiAlH₄. Après deux heures, le THF est éliminé avec un évaporateur rotatif, le solide formé est repris dans 50 ml d'eau et 10 g d'hydroxyde de lithium LiOH sont ajoutés. La suspension est filtrée et l'eau est évaporée sous pression réduite. Le solide pâteux est extrait à l'aide de 2 parties de 50 ml de dichlorométhane CH₂Cl₂ et le solvant est évaporé. L'analyse par RMN montre que le produit obtenu est la triamine HC(CH₂NH₂) non divulguée dans l'art antérieur.

On a introduit 10 g de cette amine, 41,4 g de trifluoroacétate d'éthyle CF₃CO₂C₂H₅, 14,2 g de triéthyborate et 2,52 g de LiF dans 125 mL d'acétonitrile. La solution limpide confirme la formation d'un adduit IB-7/LiF du complexe de bore IB-7 de formule HC[CH₂N(CF₃CO)-]₃B avec LiF, malgré l'énergie réticulaire élevée dudit sel complexe.

### Exemple 8

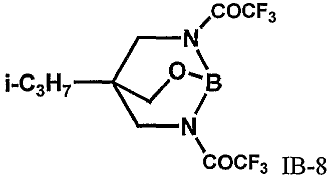

L'isopropyl-malononitrile est préparé par la méthode de Dunham et al. (J. Dunham, A. Richardson, R. Sammelson, Synthesis, (2006), 680-686) par action de 20 g de borohydrure de sodium NaBH₄ sur un mélange de 60 ml g d'acétone sur 50 g de malononitrile dans 200 ml d'isopropanol et sous agitation à 0°C. Le solvant est évaporé et le mélange réactionnel est repris par 400 ml d'eau acidifiée par 50 g d'acide sulfurique. L'isopropyl-malononitrile est extrait avec 3 portions de 100 ml d'éther. Les fractions sont combinées et l'éther est évaporé. L'isopropyl-malononitrile est distillé à 85-86°C sous 7 mbar.

À 20 g d'isopropyl-malononitrile, on ajoute 15 ml d'une solution commerciale de formaldéhyde à 37% dans l'eau et 10 gouttes de catalyseur basique, le 1,8-Diazabicyclo-[5.4.0]undec-7-ene (DBU). Une réaction rapide avec échauffement donne C₃H₇C(CH₂OH)(CN)₂ (2-propyl-2-hydroxyméthyl-malononitrile et l'eau est évaporée sous vide. La diamine HOCH₂C(C₃H₇)(CH₂NH₂)₂ (10 g) est obtenue par réduction à l'aide de l'hydrure de lithium aluminium LiAlH₄ (8 g) dans le THF (100 ml). Après acidification et extraction à l'éther, la diamine est obtenue par distillation après addition de NaOH en pastilles.

À 4 g de la diamine, on ajoute dans l'acétonitrile 7,7 g de trifluoroacétate d'éthyle puis 4 g de borate de triéthyle et 4,15 g de CsF. La solution ainsi obtenue est évaporée, et l'on obtient l'adduit IB-8/CsF de formule i-C₃H₇C{[CH₂O-][CH₂-N(COCF₃)₂-]}BF⁻Cs⁺, sous forme d'un solide blanc. Ce composé est soluble dans les solvants aprotiques polaires, contrairement à CsF.

### Exemple 9

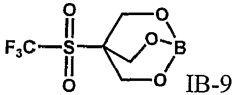

20 g de trifluorométhane sulfinate de potassium KCF₃SO₂ dissous en 100 ml d'acétonitrile sont traités par 21,6 g du toluènesulfonate de méthyle CH₃C₆H₄SO₃CH₃ à 60°C pendant 48 heures. Le précipité du toluènesulfonate de potassium est récupéré par centrifugation et les solides sont lavés avec deux parties de 20 de ml d'acétonitrile. Le produit résultant est la sulfone CF₃SO₂CH₃ qui n'est pas isolée. Les phases liquides sont combinées, puis 10,6 g de paraformaldéhyde et 5 gouttes de DBU sont ajoutés. La solution est agitée à température ambiante et le paraformaldéhyde insoluble se dissout progressivement. La suspension légèrement trouble ainsi obtenue est filtrée et, après l'évaporation de l'acétonitrile, le triol CF₃SO₂C(CH₂OH)₃ sous forme de solide blanc est recristallisé dans un mélange toluène-nitrométhane. À 10 g de ce triol sont ajoutés 6.12 g de triéthylborate B(OC₂H₅)₃ et l'on obtient une solution incolore dans l'éthanol. L'évaporation donne le complexe CF₃SO₂(CH₂O-)₃B (IB-9) sous forme d'une poudre blanche.

Le complexe (IB-9) donne avec KF, KNCO, KCN, et NaCN, des adduits qui sont solubles dans des solvants polaires à bas point d'ébullition, tels que l'acétonitrile, l'acétone et l'éthylméthylcétone, et a fortiori dans les solvants plus polaires tels que DMF, DMSO, NMP et le sulfolane.

### Exemple 10

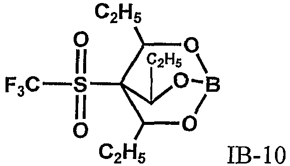

A une solution de 20 g de trifluorométhyl-méthylsulfone CF₃SO₂CH₃ dans 100 ml d'acétonitrile, on a ajouté 15 g de propionaldéhyde C₂H₅CHO et 240 mg de phosphazène base [CH₃)₂N]₃P=N-P(NC₂H₅)N(CH₃)₂]₂ (commercialisé par la société Fluka sous la référence 79417). Le réacteur est fermé hermétiquement et maintenu à 20°C dans un bain d'eau. Après 24 heures, le solvant est éliminé par évaporation dans un évaporateur rotatif, et l'on obtient une huile visqueuse CF₃SO₂C[CH(C₂H₅)OH]₃. A 15 g de ce composé, on a ajouté 4,83 g de triméthylborate B(OCH₃)₃. Le schéma réactionnel est le suivant : CF₃SO₂C[CH(C₂H₅)OH]₃+B(OCH₃)₃ ⇒ 3CH₃OH + CF₃SO₂C[CH(C₂H₅)O-]₃B

Le complexe IB-11 est obtenu sous forme d'une solution limpide dans le méthanol qui se forme simultanément. On récupère le complexe par évaporation du méthanol.

### Exemple 11

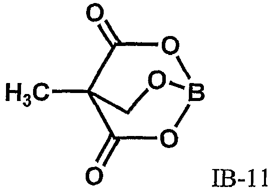

À 17,4 g de l'ester diéthylique de l'acide méthylmalonique CH₃CH(CO₂C₂H₅)₂ commercial, on ajoute 8,2 ml d'une solution commerciale de formaldéhyde à 37% dans l'eau, 10 mL d'éthanol à 95 % et 8 gouttes de DBU comme catalyseur basique. A partir des deux phases immiscibles, une réaction rapide avec échauffement donne le 2-méthyl-2-hydroxyméthyl-malonate d'éthyle CH₃C(CH₂OH)(CO₂C₂H₅)₂. La solution monophasée incolore obtenue est diluée par 60 mL d'éthanol à 95% et 10 ml d'eau. On disperse 8 g de Ca(OH)₂ et le mélange est agité 72 heures à 35°C. À la suspension blanche ainsi obtenue, on ajoute 2,5 g d'acide acétique, pour éliminer l'excès de Ca(OH)₂. Le sel de calcium insoluble résultant de la saponification est séparé par filtration, lavé à l'éthanol à 95% et séché. Sa formule correspond à Ca[CH₃C(CH₂OH)(CO₂)₂]. 8 g du sel de calcium et 3,5 g d'acide oxalique anhydre sont dispersés sous agitation magnétique dans 50 mL d'éthanol anhydre. Après deux heures, la suspension blanche obtenue est centrifugée et le solide est épuisé par 3×12 mL d'éthanol. Les fractions sont combinées et l'on ajoute 5,6 g de borate d'éthyle B(OC₂H₅)₃. Après évaporation du solvant, on obtient le complexe de bore du diacide-alcool CH₃C[(CH₂O-)(CO₂-)₂]B (IB-11).

### Exemple 12

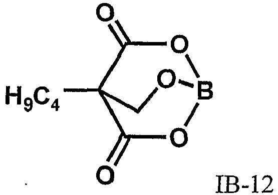

À 21,6 g de l'ester diéthylique de l'acide butylmalonique C₄H₉CH(CO₂C₂H₅)₂ commercial, on ajoute 3,1 g de paraformaldéhyde et 20 gouttes de DBU. Une réaction progressive, montrée par la disparition de la suspension de paraformaldéhyde, donne le 2-butyl-2-hydroxyméthyl-malonate d'éthyle C₄H₉C(CH₂OH)(CO₂C₂H₅)₂ sous forme de liquide incolore, que l'on dilue ensuite par 70 mL d'éthanol à 95 % et 10 ml d'eau. On disperse 8 g d'hydroxyde de calcium Ca(OH)₂ et le mélange est agité 72 heures à 35°C. À la suspension blanche obtenue, on ajoute 4 g d'acide acétique et le précipité du sel de calcium qui s'est formé est séparé par filtration, lavé à l'éthanol à 95% et séché. Sa formule correspond à Ca[C₄H₉C(CH₂OH)(CO₂)₂].

10 g de ce sel de calcium et 3,8 g d'acide oxalique anhydre sont dispersés sous agitation magnétique dans 60 mL d'éthanol anhydre. Après deux heures, la suspension blanche formée est centrifugée et le solide épuisé par 3×12 mL d'éthanol. Les fractions sont combinées et l'on ajoute 4,35 g de borate de méthyle B(OCH₃)₃. Après évaporation du solvant, on obtient le complexe de bore du diacide-alcool C₄H₉C[(CH₂O-)(CO₂-)₂]B (IB-12)sous forme d'un solide incolore.

### Exemple 13

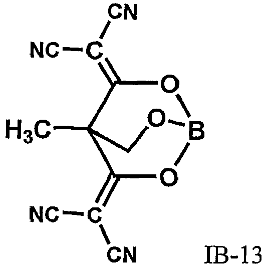

A 20,4 g de diéthyl-(2-méthyl-2-hydroxyméthyl-malonate) de formule CH₃C(CH₂OH)(CO₂C₂H₅)₂ préparé selon l'exemple 11 dans 100 mL de DMF, on a ajouté sous argon et sous boîte à gants, 13,8 g de malononitrile et 11 g de méthoxide de sodium. La solution a été agitée sous boîte à gants et un précipité blanc s'est formé. L'agitation a été maintenue pendant 24 heures et le précipité a été séparé par centrifugation, lavé avec deux portions d'acetonitrile. Après séchage, on a isolé le sel dibasique Na₂{CH₃C(CH₂OH)[COC(CN)₂]₂}. 10 g de sel, 3,28 g de trifluorure étherate de bore et 1,69 g de borate de triéthyle ont été mélangés dans 50 ml d'acetonitrile. La réaction suivante se produit :

3 Na₂{CH₃C(CH₂OH)[COC(CN)ₐ]₂} + 2[BF₃,O(C₂H₅)₂] +B(OC₂H₅)₃ ⇒ 3 NaF + 3 C₂H₅OH + 2 O(C₂H₅)₂ + 3 CH₃C{(CH₂O-){C[=C(CN)₂]O-}₂}BFNa⁺

L'adduit de NaF et du complexe de bore IB-13 est soluble dans les solvants aprotiques polaires tels que l'acétonitrile, THF, les glymes, DMF, NMP, le sulfolane et les polymères solvatants tel que le poly(oxyde d'éthylène oxide) et ses copolymères.

Le sel de lithium peut être obtenu soit en remplaçant CH₃ONa pendant la synthèse par la même quantité moléculaire d'alcoxyde de lithium ou de LiH, soit par échange d'ions à l'aide de LiCl qui précipite NaCl dans n'importe lequel des solvants mentionnés ci-dessus dans lesquels NaCl est insoluble. De la même manière, un sel d'onium tel que défini ci-dessus peut être obtenu par action du chlorure d'onium approprié. Un sel de métal alcalin plus lourd (K, Rb, Cs) est obtenu par action du fluorure de métal correspondant avec précipitation concomitante de NaF.

Le remplacement du diéthyl-(2-méthyl-2-hydroxyméthyl-malonate) par le diéthyl-(2-butyl-2-hydroxyméthyl-malonate) donne C₄H₉C{(CH₂O-) {C[=C(CN)₂]O-}₂}BF⁻Na⁺ qui peut ensuite être soumis à différentes réactions d'échange de cation.

### Exemple 14

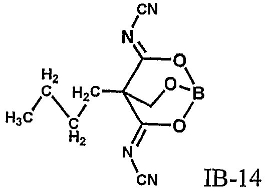

A 24,6 g de C₄H₉C(CH₂OH)(CO₂C₂H₅)₂ préparé comme dans l'exemple 12 dans 150 mL d'éthanol absolu, on a ajouté 13 g de NaHNCN commercial. On a chauffé la solution à 50°C et on l'a maintenue à cette température sous agitation pendant 24 heures. Le précipité formé a été centrifugé, puis lavé avec deux parties d'éthanol absolu. Après séchage le sel dibasique Na₂[C₄H₉C(CH₂OH)(CONCN)₂] est obtenu sous forme de poudre blanche.

On a mis 11,75 g de ce sel en suspension dans 100 mL d'acétonitrile, on a refroidi à 0°C, et on a ajouté goutte à goutte une solution de 2,08 g de H₂SO₄ à 98% dans 20 mL de 1,4-dioxane. La suspension a été filtrée pour éliminer le sulfate de sodium formé. Le résidu a été lavé avec deux portions d'acétonitrile, et on a ajouté au filtrat 6,08 g de B(OC₂H₅)₃. Le solvant a été éliminé à l'aide d'un évaporateur rotatif et le solide incolore résiduel a été séché sous vide primaire à 50°C. On a obtenu 9,38 g d'un complexe de bore de formule C₄H₉C{[CH2O-][C(=NCN)-O-]₂}B (IB-14)(rendement 94 %).

Le complexe CH₃C{[CH₂O-][C(=NCN)-O-]₂} IB-14" est obtenu en remplaçant C₄H₉C(CH₂OH)(CO₂C₂H₅)₂ par 20,4 g de CH₃C(CH₂OH)(CO₂C₂H₅)₂.

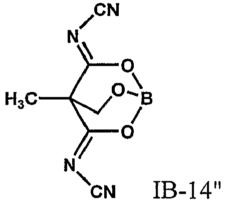

Le complexe de bore obtenu forme des adduits avec les fluorures de métal alcalin ou d'onium, ainsi qu'avec Li₂O₂, LiOCN, NaOCN, NaCN, KCN, NaN₃. Par exemple, 2,04 g de complexe IB-14 et 280 mg de LiF sont dispersés dans l'acétonitrile. La majeure partie de LiF se dissout. La solution légèrement trouble est centrifugée, le résidu est soumis à une évaporation et on obtient 2,05 g (rendement de 89%) de l'adduit Li{CH₃C(CH₂O )[C(=NCN) O-]₂BF} IB-14/LiF.

### Exemple 15

À 20 g de triméthyloléthane CH₃C(CH₂OH)₃ commercial dans 85 mL de THF sont ajoutés 26 g de carbonyl-diimidazole CO(C₃H₃N₂)₂ commercial. Le mélange est agité à température ordinaire, puis on ajoute 35 g d'acide sulfamique et le mélange est à nouveau agité pendant 24 heures et filtré. Le composé obtenu est le triol dont deux fonctions sont protégées par formation d'un carbonate cyclique.

Le filtrat est traité par 31,5 g de chlorure de toluènesulfonyle et 12,6 g de pyridine. Le produit de la réaction est filtré pour éliminer le précipité de chlorure de pyridinium. Le filtrat est évaporé et repris dans le DMF et l'on ajoute 15,8 g du sel de sodium de la bisformylimide (HCO)₂NNa. La solution est maintenue sous agitation à 80°C pendant 2 heures. Après refroidissement, le mélange est dilué dans 300 mL d'eau et la solution est extraite par trois portions de 50 mL d'éther éthylique et les extraits sont combinés. Par évaporation, on obtient 24,1 g (72 %) du composé CH₃C{[(CH₂O)₂]CO}CH₂N(CHO)₂.

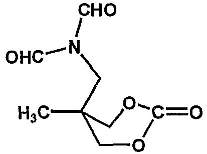

15 g de ce composé sont mis en solution dans 150 mL d'eau, et on ajoute 11 g d'hydroxyde de calcium. La solution est portée au reflux pendant 3 heures. La suspension blanche qui se forme est filtrée, et l'eau est évaporée. Le solide est extrait avec 50 mL de dichlorométhane et le solvant est éliminé. On obtient 7,7 g (84 %) de CH₃C(CH₂OH₂)₂CH₂NH₂ sous forme de liquide visqueux. Cet amino-alcool a été utilisé comme précurseur pour la formation de complexes du bore selon l'invention, dans l'acétonitrile, à température ordinaire. Lorsque le réactif est (CH₃)₂NSO₂Cl, on ajoute un équivalent de base DABCO (diaza-1,4 bi-cyclo[2.2.2]octane).

Le tableau suivant donne des exemples de composés de l'invention obtenus à partir de ce précurseur.

| | | | | |
|---|---|---|---|---|
| Précurseur | 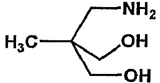 | | | |
| Réactif | CF₃COOC₂H₅ | 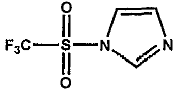 | (CH₃)₂NSO₂Cl | 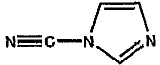 |
| Source de bore | B(OCH₃)₃ | B(OH)₃ | B(OC₂H₅)₃ | B(OCH₃)₃ |
| Complexe de bore | 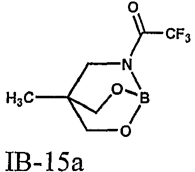 | 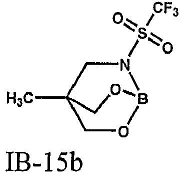 | 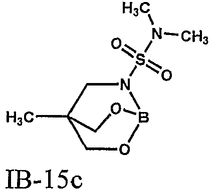 | 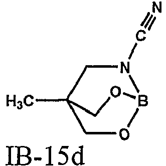 |

Les 4 complexes du bore ainsi préparés forment des adduits avec les fluorures des alcalins de taille au moins égale à celle de K⁺, c'est-à-dire Rb et Cs, et avec tous les fluorures des sels d'onium.

### Exemple 16

On a préparé du butyl malononitrile à partir de butanal et de malononitrile selon le procédé décrit par Dunham et al. Synthesis, (2006), 680-686). On a ajouté à 12,2 g de butyl-malononitrile dans 100 mL de THF 3,0 g de paraformaldéhyde et 8 gouttes de DBU. Le paraformaldéhyde disparaît progressivement, à mesure qu'il réagit pour hydroxyméthyler le malononitrile et donner le composé C₄H₉C(CH₂OH)(CN)₂. A la solution obtenue, on ajoute 11 g de LiAlH₄ sous agitation. Après deux heures, on élimine le THF à l'aide d'un évaporateur rotatif. Le solide sec est repris par ajout goutte à goutte pour les premiers 10 ml, 100 ml d'eau et on ajoute 5 g de LiOH. Le solvant est à nouveau éliminé, et le solide pâteux est extrait par 2 portions de 50 mL de α,α,α,-trifluoro toluène et le solvant est éliminé par distillation. L'analyse RMN montre que le composé obtenu est le diamino alcool C₄H₉C(CH₂NH₂)₂(CH₂OH). Il a été utilisé avec divers réactifs dans l'acétonitrile, à température ordinaire, pour préparer des complexes selon l'invention. Lorsque le réactif est C₂H₅SO₂Cl, on ajoute on ajoute un équivalent de base DABCO (diaza-1,4 bi-cyclo[2.2.2]octane).

| | | | | |
|---|---|---|---|---|
| Précurseur | 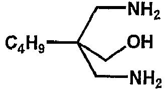 | | | |
| Réactif (× 2): | CF₃COOC₂H₅ | 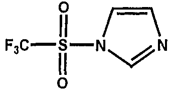 | C₂H₅SO₂Cl | 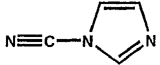 |
| Source de bore | B(OC₂H₅)₃ | B(OCH₃)₃ | B(OH)₃ | B(OCH₃)₃ |
| Produit obtenu | 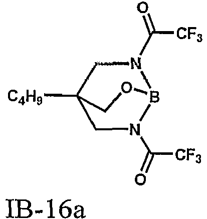 | 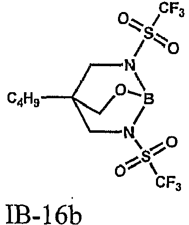 | 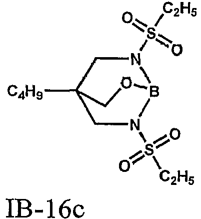 | 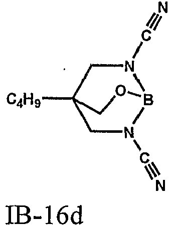 |

### Exemple 17

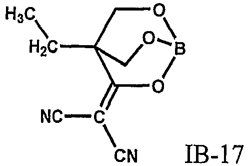

25 g d'acide bis(hydroxyméthyl)butyrique commercial sont dissous dans 150 mL d'un mélange 20/80 v/v d'eau et d'éthanol et l'on ajoute 14,2 g d'hydrogénocarbônate de sodium sous agitation. Après cessation du dégagement de CO₂, la solution est filtrée et le sel est évaporé sous pression réduite. Le sel Na[C₂H₅C(CH₂OH)₂CO₂] est récupéré sous forme d'un solide blanc. 17 g de ce sel sont mis en suspension dans 80 mL de méthanol et l'on ajoute 15 g de sulfate d'éthyle. Après deux heures d'agitation à 25°C, la solution est évaporée et le solide pâteux est extrait avec 2x50 ml de dichlorométhane et les extraits sont combinés. Après filtration, le solvant est évaporé pour laisser l'ester éthylique de l'acide bis(hydroxyméthyl)butyrique C₂H₅C(CH₂OH)₂CO₂C₂H₅.

En opérant en boîte à gants sous atmosphère d'argon, on dissout 6,5 g de malononitrile et 5 g de méthoxyde de sodium dans 50 mL de THF anhydre et l'on ajoute 16 g de l'ester formé précédemment. Après 24 heures sous agitation, on ajoute 2 mL d'acide acétique, puis la solution est sortie de la boîte à gants, et le solvant est évaporé. Le résidu est lavé au dichlorométhane, puis extrait à l'acétonitrile (ACN) dans lequel le sel formé est soluble. La solution est filtrée pour éliminer l'acétate de sodium qui est insoluble dans ACN, puis évaporée sous pression réduite pour donner le sel Na[C₂H₅C(CH₂OH)₂COC(CN)₂] qui est recristallisé dans un mélange acétonitrile/toluène.

Un complexe du bore et de NaF est formé par réaction de 10 g de sel préparé précédemment dans 50 ml d'éthanol, 2,834 g d'acide borique B(OH)₃ et 2,9 g d'une solution d'acide fluorhydrique à 40 % dans l'eau dans un bécher en polypropylène. La solution obtenue est évaporée pour donner l'adduit du complexe IB-17 et de NaF.

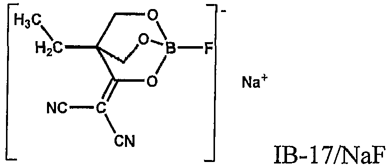

Ce sel est soluble dans les solvants polaires tels que le DMF, la NMP, le DMSO, l'acétonitrile, le THF, le 1,2-diméthoxyéthane (glyme), le diglyme, le triglyme alors que NaF est insoluble dans tous les solvants aprotiques. Par action de KF et échange de cation dans l'acétonitrile, on obtient le sel de potassium qui est aussi soluble dans les solvants comme l'acétonitrile, le THF ou les glymes.

### Exemple 18

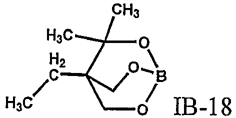

17,6 g de l'ester éthylique de l'acide bis(hydroxyméthyl)butyrique C₂H₅C(CH₂OH)₂CO₂C₂H₅ préparé à l'exemple 17 sont dissous dans 100 ml de THF et on ajoute 160 ml d'une solution commerciale 2 M de chlorure de méthyl-magnésium dans le THF sous agitation mécanique. Une évolution de gaz (CH₄) se produit et il se forme un précipité blanc. Après 24 heures, on ajoute 25 g d'acide sulfamique en poudre fine et l'agitation est poursuivie pendant 48 heures. Le mélange réactionnel est filtré et le THF est évaporé pour laisser un liquide visqueux du triol C₂H₅C(CH₂OH)₂[C(CH₃)₂OH] qui est purifié par chromatographie. À 10 g de ce triol dans 50mL d'acétonitrile sont ajoutés 3,81 g d'acide borique B(OH)₃. La solution claire obtenue est évaporée pour obtenir un solide incolore correspondant à la structure :

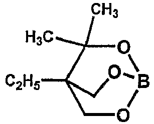

4,97 g de ce complexe sont dissous dans 40 ml de DMF on ajoute 1,70 g de fluorure de potassium KF. Le sel passe rapidement en solution pour donner le complexe K+{C₂H₅C(CH₂O-)₂[C(CH₃)₂O-]BF}-. La solution est ajoutée à 2,5 g de poly(épichloro-hydrine) (polymère commercial, Mw ≈ 106), dans 50 ml de DMF et le mélange est porté à 85°C. Un précipité de KCl se forme après 2 heures et la réaction est poursuivie pendant 24 heures. Le mélange réactionnel est versé dans 100 ml d'eau et le polymère précipité est filtré et lavé à l'eau. L'analyse élémentaire montre que 86% des atomes de chlore du polymère ont été substitués par des atomes de fluor sans dégradation de la chaîne. Par IR, l'absence de liaisons vinyl-éther provenant de l'élimination de HCl est vérifiée. La même tentative de substitution par KF dans le DMF à 85°C donne 100% d'élimination.

### Exemple 19

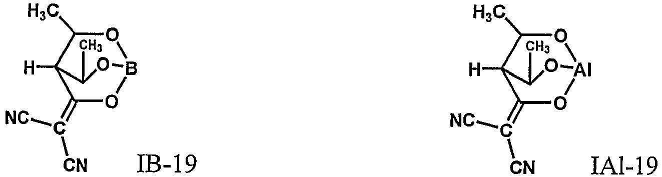

A une solution de 50 mL de méthanol anhydre contenant 13,2 g diméthylmalonate CH₂(CO₂CH₃)₂ et 0,4 g de méthoxyde de sodium, thermostatée à 5°C sous agitation, on a ajouté 8,8 g d'acétaldéhyde CH₃CHO, puis on a laissé le mélange réagir pendant une heure. A cette solution, on a ensuite ajouté 4 g de NaOH, puis on l'a maintenue à 30°C sous agitation pendant deux heures. Ensuite, on a ajouté 9,71 g d'acide sulfamique HSO₃NH₂ et on a maintenu l'agitation à 30°C pendant une heure. Après filtration pour éliminer NaSO₃NH₂ formé, la solution a été portée à ébullition, avec dégagement de CO₂. La solution contenant le diol ester HC[CH(CH₃)OH]₂CO₂CH₃ ainsi obtenue est dégazée par l'azote, et on ajoute sous atmosphère inerte, 3,3 g de malononitrile et 2,7 g de méthoxyde de sodium. La solution est agitée pendant 12 heures sous atmosphère d'azote. On ajoute ensuite 3 mL d'acide acétique, puis on évapore le méthanol et la solution résiduelle est extraite avec 50 mL d'acétonitrile, puis filtrée.

L'extrait est précipité dans 100 mL de dichlorométhane et l'on obtient 9,6 g de Na{HC[CH(CH₃)OH]₂COC(CN)₂} sous forme de poudre blanche.

On mélange 7,27 g de Na{HC[CH(CH₃)OH]₂COC(CN)₂}, 3,24 g d'acide sulfamique HSO₃NH₂ et 2,06 g d'acide borique dans un mélange éthanol/ acétonitrile 50/50 en volume, puis le solvant est évaporé. On obtient le complexe IB-19.

Dans un 2^{ème} essai, on mélange 2,06 g d'acide borique et 7,27 g de Na{HC[CH(CH₃)OH]₂COC(CN)₂} dans le méthanol, puis on élimine le méthanol, et l'on obtient l'adduit IB-19/NaOH formé par le complexe IB-19 avec l'anion OH⁻.

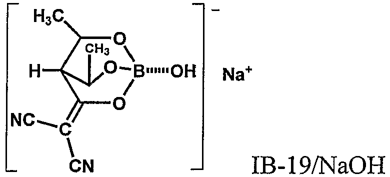

Na{HC[CH(CH₃)OH]₂COC(CN)₂} + B(OH)₃ ⇒ Na{HC[CH(CH₃)O-]₂ C[=C(CN)ₐO-]}BOH + 2H₂O

Dans un 3^{ème} essai, on ajoute dans l'eau, 7,27 g de Na{HC[CH(CH₃)OH]₂COC(CN)₂} et 1,67 g d'une solution commerciale à 40% de HF, et l'on obtient l'adduit formé par le complexe avec l'anion F⁻.

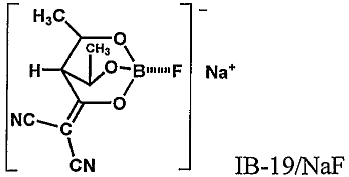

Dans un 4^{ème} essai, on ajoute dans de l'éthanol, 7,27 g de Na{HC[CH(CH₃)OH]₂COC(CN)₂}, 6,8 g de tris(isopropoxide) d'aluminium et 1,64 g d'acide sulfurique à 98 % commercial, en refroidissant à 10°C. Ensuite, on filtre pour éliminer Na₂SO₄ formé et l'on obtient le complexe d'aluminium IAl-19.

Dans un 5^{ème} essai, on mélange dans l'eau 7,27 g de Na{HC[CH(CH₃)OH]₂COC(CN)₂}, 8,21 g de tris(*tert*-butoxide) d'aluminium et 5 g d'une solution commerciale de HF à 40%, on filtre pour éliminer NaHF₂ formé et on obtient une solution de l'adduit IAl-19/NaF.

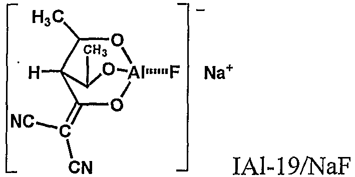

### Exemple 20

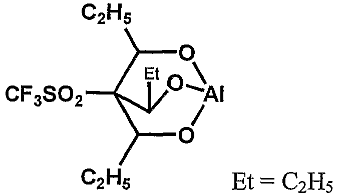

On a dissous dans 60 mL de DMF sec, 11 g du triol CF₃SO₂C[CH(C₂H₅)OH]₃ (obtenu en condensant le propanal sur la sulfone CF₃SO₃CH₃ en présence d'un catalyseur basique comme le DBN (1,5-diazabycylo[4.3.0]non-5-ène) en opérant en boîte à gants), et on a ajouté 6,97 g d'isopropoxide d'aluminium [CH₃)₂CHO]₃Al. A la solution limpide obtenue, on a ajouté 2,1 g de KF sec qui se dissout quasi totalement pour former l'adduit en solution K⁺{CF₃SO₂C[CH(C₂H₅)O]₃AlF⁻}. L'excès de KF est éliminé par centrifugation.

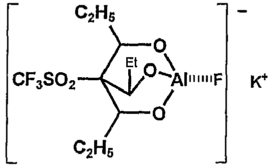

A 6,45 g du même triol et 4,08 g d'isopropoxyde d'aluminium, on a ajouté dans les mêmes conditions 1,52 g de fluorure de césium. Le sel passe en solution. Le RMN ¹⁹F et ²⁷Al indique la formation d'un complexe trinucléaire :

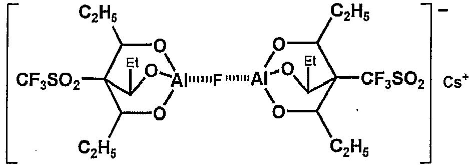

### Exemple 21

A une solution contenant 16 g de diéthylmalonate CH₂(CO₂C₂H₅)₂ et 5 gouttes de diazabicyclo[5.4.0]undec-7-ene dans 75 mL d'acétonitrile thermostatée à 10°C sous agitation, on a ajouté 14,6 g de butanal C₃H₇CHO, puis on a laissé le mélange réagir pendant 2 heures. Ensuite, l'acétonitrile a été éliminé sous vide et on a ajouté à la solution visqueuse limpide, 50 mL d'eau et 8,4 g d'hydroxyde de lithium monohydrate. La solution a été maintenue à 40°C pendant 3 heures, puis on a ajouté 6 g d'acide sulfurique et le mélange a été porté rapidement à ébullition, ce qui a provoqué un dégagement de gaz (CO₂) visible. La solution a été évaporée à sec, et le diol-monoacide HC[CH(C₃H₇)OH]₂CO₂H obtenu a été extrait par 2x50 ml de dichlorométhane.

A 10,2 g de cet acide dans 60 mL de diéthylèneglycol diméthyl éther (diglyme, DG), on a ajouté sous agitation en boîte à gants, 50 mL de trisobutyl aluminum [(CH₃)₂CHCH₂]₃Al, 1M dans le THF. Un dégagement violent de gaz (isobutane) s'est produit, et on a obtenu une solution limpide. A cette solution on a ajouté 4,055 g de KOCN, qui est passé en solution en formant un adduit avec le complexe.

Dans un autre essai, on a ajouté de 2,9 g de KF qui s'est également dissous en formant un adduit avec le complexe. La formule du complexe et des deux adduits est donnée ci-dessous.

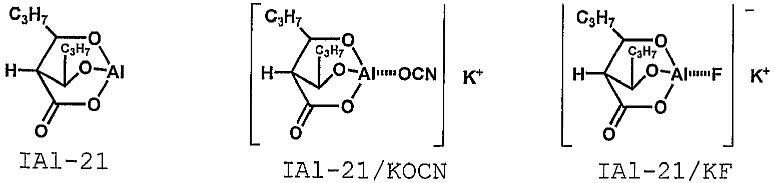

### Exemple 22

On a fait réagir un cyanoacétate d'éthyle commercial (a) avec le paraformaldéhyde en présence de 1 % de diazabicyclo[5.4.0]undec-7-ene, et l'on a obtenu le composé (b) NCC(CH₂OH)₂CO₂C₂H₅. Cet ester éthylique a été hydrolyse en milieu basique, puis après libération de la forme acide, décarboxylation et protection des groupes OH par le carbonyl-diimidazole CO(C₃H₃N₂)₂ on a obtenu le composé (d).

La N,N'-biscyanoamidine est ensuite préparée selon le procédé décrit dans CS-273050-B1, en faisant réagir (d) avec HCl dans l'éthanol pour obtenir le groupement éthylamidate du composé (e), qui est transformé en groupement dicyanoamidine-C(NCN)₂- dans le composé (f).

Le schéma réactionnel de l'ensemble du processus est donné ci-dessous.

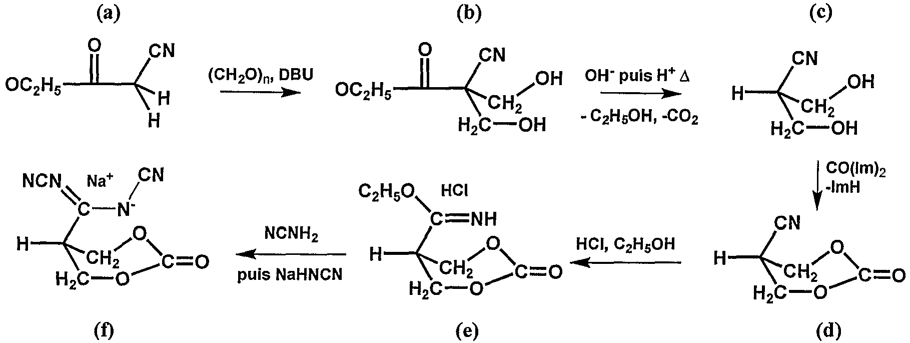

La déprotection des groupes OH est effectuée avec Ca(OH)₂, puis l'on traite le composé par HSO₂NH₂ et B(OH)₃ pour obtenir le complexe de bore IB-22. Le schéma réactionnel est donné ci-après.

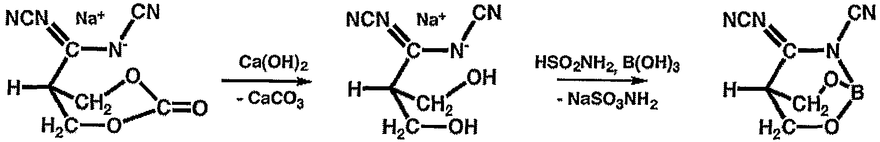

Le complexe IB-22 est soluble dans les solvants polaires tels que l'acétonitrile, THF, glymes, DMF, DMAc, NMP, DMSO, et le sulfolane. Il forme des adduits avec NaF, KF, NaCN, KCN, KNCO, NaNCO, NaN₃, et avec les sels d'onium des anions O²⁻, O₂²⁻, O₂^{•-}, OH⁻, RO⁻, N₃^{-,} CN⁻, HNCN⁻, ou NCN²⁻.

### Exemple 23

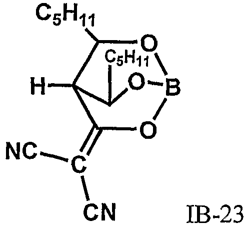

On a préparé une solution de 16 g monoéthylmalonate HO₂CCH₂CO₂C₂H₅ dans 75 mL de pyridine contenant 5 gouttes de diazabicyclo[5.4.0]undec-7-ene et thermostatée à 60°C sous agitation. On a ajouté 20 g d'hexanal C₅H₁₁CHO, et on a laissé réagir pendant 2 heures. Le composé HC[CH(C₅H₁₁)OH]₂CO₂C₂H₅ se forme par substitution simultanée des atomes H acides et décarboxylation. A la solution refroidie à 10°C et sous bullage d'azote, on ajoute 7 g de KOCH₃ et 6,6 g de malononitrile CH₂(CN)₂. Après 1 heure, on évapore la pyridine et on récupère un composé K{HC[CH(C₅H₁₁)OH]₂COC(CN)₂} sous forme de solide. Ce composé est purifié par dissolution dans l'acétonitrile et précipitation dans le toluène.

On ajoute 3,46 g de ce sel dans l'éthanol absolu, puis 971 mg d'acide sulfamique HSO₃NH₂ et 970 mg de B(OH)₃. Le solvant est ensuite éliminé par évaporation et on récupère le complexe de bore IB-23.

### Exemple 24

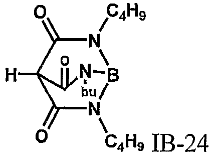

On a préparé la tris(N-n-butylméthanetricarboxamide HC[CON(C₄H₉)H]₃ selon la méthode de D. Prelicz, et al., [Akad. Med. Wroclaw, Wroclaw, Pol. Roczniki Chemin (1970), 44(1), 49-59] par action de la n-butyl amine sur le triéthyl(méthanetricarboxylate) commercial. Le produit est caractérisé par RMN dans le DMSO-D₆ et son point de fusion correspond à celui de la littérature (182°C). 3,13 g du triamide sont dissous dans 20 ml de méthanol absolu auquel on ajoute 618 mg d'acide borique qui passe en solution. Après évaporation du solvant, on obtient le complexe IB-24.

Ce complexe forme des adduits avec KF, KOCN, NaCN, KCN, NaOH, et KOH, ces adduits étant solubles dans les solvants polaires tels que DMF, DMAc, NMP, sulfolane, acétone, méthyl-éthyl-cétone (MEK), cyclopentanone et acétonitrile. Le complexe IB-24 forme des adduits avec les sels d'onium, lesdits adduits étant solubles dans les solvants polaires précités, ainsi que dans le dichlorométhane, le chloroforme, et le α,α,α-trifluorotoluène.

On a reproduit le mode opératoire ci-dessus, en remplaçant le tri-éthyl(méthanetricarboxylate) commercial par le dérivé méthylé CH₃C(CO₂C₂H₅)₃ (préparé par action de KF et du sulfate de méthyle et en traitant par la 4-cyanoaniline), et on a obtenu obtient le complexe IB-24'

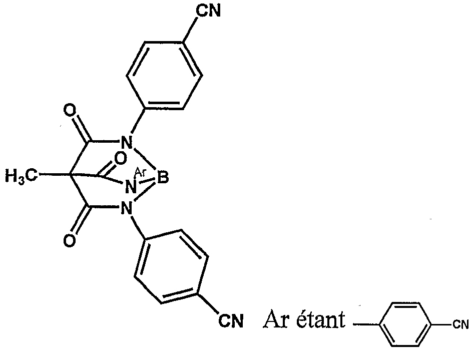

### Exemple 25

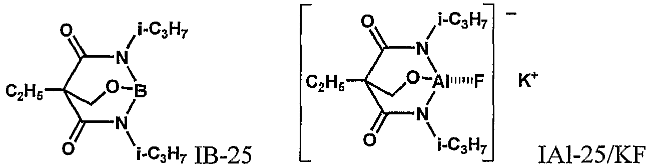

A 18,82 g d'éthylmalonate de diéthyle commercial CH(C₂H₅)(CO₂C₂H₅)₂, on ajoute 3 g de paraformaldéhyde et 15 gouttes de DBU. Une réaction exothermique se produit, le paraformaldéhyde passe en solution, et l'on obtient le composé C₂H₅C(CH₂OH)(CO₂C₂H₅)₂, On ajoute ensuite 12 g d'isopropylamine, on ferme le récipient et on le maintient à 40°C pendant 72 heures. L'excès d'isopropylamine et l'éthanol sont évaporés sous vide, et l'on obtient le ligand C₂H₅C(CH₂OH)[CON(i-C₃H₇)H]₂ que l'on recristallise ensuite dans un mélange toluène-éthanol.

On mélange 12,2 g de ce complexe et 7,3 g de borate de triéthyle B(OC₂H₅)₃ et la réaction amène la formation d'un liquide, qui est une solution concentrée du complexe IB-25 dans l'éthanol formé simultanément.

Dans une boîte à gant sous atmosphère neutre, on ajoute à 5 g du ligand C₂H₅C(CH₂OH)[CON(i-C₃H₇)H]₂ dans 25 ml de DMF anhydre, 4,18 g d'isopropoxyde d'aluminium et 1,18 g de KF, puis on agite le mélange pendant 2 heures. On obtient une solution concentrée du complexe et il résulte une solution de l'adduit IA1-25-KF.

### Exemple 26

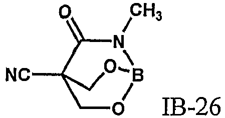

11,31 g de cyanoacétate d'éthyle commercial sont hydroxyméthylés avec deux équivalents (6 g) de paraformaldéhyde en présence d'une quantité catalytique 1% (molaire) de DBU pour obtenir le diol-ester NCC(CH₂OH)₂CO₂C₂H₅,. Dans le même récipient on ajoute 9 mL d'une solution aqueuse commerciale à 40 % de méthylamine. Un dégagement de chaleur se produit en quelques minutes et l'agitation est maintenue pendant 12 heures. On ajoute 6,18 g d'acide borique qui passe en solution. Le solvant (eau de la solution d'amine + éthanol formé au cours de la réaction) est évaporé, et l'on obtient le complexe IB-26 sous forme de solide incolore. Ce complexe forme des adduits avec KF, KOCN, NaCN, KCN, NaOH, KOH, et les fluorures d'onium.

### Exemple 27

10,5 g de tétrachloro-téréphtalonitrile commercial sont dispersés dans 75 mL de DMF avec 10 g de fluorure de potassium KF. A la suspension, sont ajouté 3,1 g du complexe IB-4 et le rapport B/F est de 1/7. La suspension est agitée à 65°C pendant 25 heures. Le mélange est filtré, le solide est lavé avec deux fois 15 mL de DMF et le filtrat est précipité dans 1 L d'eau et séparé par centrifugation. Le produit obtenu est du tétrafluoro-téréphtalonitrile pur à 98% tel que déterminé par RMN. Le résidu de filtration est constitué de KCl pur, ainsi que déterminé par spectrométrie X. Dans des conditions similaires, le mélange tétrachloro-téréphtalonitrile + KF ne montre aucune raie RX de KCl à 65°C après 25 heures.

### Exemple 28

Dans un réacteur Parr® doublé d'un récipient en polytétrafluoroéthylène (PTFE), purgé par barbotage d'azote et fermé, on a introduit 50 g de pentachloropyridine, 60 g de KF et 7,3 g du complexe IB-3 dans 250 mL de N-méthylpyrrolidinone (NMP), le rapport B/F étant de 1/20. Le réacteur est porté à 180°C, maintenu à cette température pendant trois heures, puis le chauffage est arrêté et, après retour à la température ordinaire, le réacteur est ouvert. Le mélange réactionnel est filtré et lavé avec 2×30 mL de NMP. Le solide obtenu est KCl (74 g, caractérisé par RX). Le filtrat est distillé et l'on obtient 28,3 g (84% de rendement) de pentafluoropyridine (T_{eb} = 84°C).

### Exemple 29

Le présent exemple concerne une réaction de Halex sur un substrat faiblement activé dû aux charges négatives portées par les groupements carboxylate.

À 55 g d'acide tétrabromotéréphtalique commercial mis en suspension sous agitation dans 150 ml d'eau, on a ajouté 22,9 g de KHCO₃. La solution limpide obtenue après la fin du dégagement de CO₂ est évaporée dans une étuve à 100°C. La solubilité de tétrabromotéréphtalate de potassium C₈Br₄O₄K₂ obtenu est de 7 g/L dans DMF à 25°C.

4,5 g de KF et 0,55 g du complexe IB-2 sont ajoutés à 10 g du sel C₈Br₄O₄K₂ dans 20 ml de DMF, et le mélange est introduit dans un réacteur Parr® de laboratoire, de 50 ml sous pression de N₂ et le réacteur est fermé. Le rapport B/F est de 1/20. La réaction est effectuée à 200°C pendant 5 heures. Après refroidissement, le réacteur est ouvert et la suspension est filtrée. Le filtrat est précipité dans 75 ml de dichlorométhane. Le rendement en tétrafluorotéréphatalate de potassium C₈F₄O₄K₂ est de 5,2 g (92 % du rendement théorique).

### Exemple 30

A 15 g d'ester diméthylique de l'acide tétrachlorotéréphtalique commercial dans 50 mL de DMF, on ajoute 11 g de KF et 2,4 g du complexe IB-4, le rapport B/F étant de 1/10. Le mélange est agité à température ordinaire pendant 24 heures. La suspension résultante est versée dans 200 mL d'eau et la phase non aqueuse est extraite avec 4×30 mL d'hexane. Les parties aliquotes sont mélangées, le solvant est évaporé et le résidu est distillé à 146 °C sous pression ordinaire. On obtient 8,6 g (rendement 72 %) d'ester diméthylique de l'acide tétrafluorotéréphtalique.

### Exemple 31

A 20 g de 1,2,4-trichlorobenzène commercial dans 70 mL de sulfolane (tétraméthylène sulfone), on ajoute 20 g de fluorure de potassium et 3,25 g du complexe IB-2, le rapport B/F étant de 1/15. Le mélange est introduit dans un réacteur Parr^{®} qui est scellé après barbotage et purge d'azote, puis porté à 245°C et maintenu à cette température pendant 3 heures. Le réacteur est ensuite refroidi à température ordinaire et après ouverture, les produits de la réaction sont filtrés. On obtient 24,2 g de KCl. Le filtrat est extrait par 5×30 mL de pentane qui n'est pas miscible avec le sulfolane, les parties aliquotes sont mélangées et le solvant est évaporé sous pression réduite. On obtient 10,5 g (rendement 78 %) de 1,2,4-trifluorobenzène (T_{eb} = 90°C).

### Exemple 32

A 2,65 g de tétrachlorotéréphtalonitrile dans 15 mL de DMF, on a ajouté 2,4 g de KF et 140 mg du complexe IB-2, correspondant à un rapport B/F de 1/40. La suspension a été agitée à 30°C pendant 24 heures, et ensuite le milieu réactionnel a été versé dans 100 mL d'eau. La poudre jaune formée a été récupérée par filtration. Le rendement en tétrafluorotéréphtalonitrile est de 95%.

Par comparaison, le procédé décrit dans WO/2002/028822, qui est basé sur une réaction de Halex, est mis en oeuvre sur le même substrat, mais dans des conditions nettement plus sévères, à savoir une température de 130°C, avec un DMF sec ayant moins de 100 ppm d'eau, et avec KF séché par pulvérisation à chaud (spray drying). Ces conditions draconniennes ne sont pas nécessaires lors de l'utilisation des complexes de la présente invention.

### Exemple 33

Cet exemple et les deux suivants illustrent l'utilisation des complexes de l'invention pour des échanges chlore → fluor de type "Halex" dans lesquels le complexe est utilisé en quantité stoechiométrique pour permettre des réactions impossibles avec l'art antérieur du fait de la sensibilité des substrats aux réactions d'élimination.

20 g d'épichlorhydrine et 44 g de K⁺[C₂H₅C(CH₂O)₃BF]⁻, qui est l'adduit formé par le composé IB-2 avec KF, sont ajoutés à 150 mL de DMF et portés à 85°C. KCl se forme progressivement et le mélange réactionnel est filtré après deux heures d'agitation. 14 g d'épifluorhydrine (88 % de rendement) sont obtenus par précipitation dans 500 mL d'eau, puis filtration.

### Exemple 34

6,9 g de K⁺[C₂H₅C(CH₂O-)₂(CO₂-)BF]⁻, qui est l'adduit formé entre KF et le complexe IB-4, et 2 g de poly(chlorure de vinylc) (M_{w} 45 000) commercial sont ajoutés à 50 mL de DMF. La suspension est chauffée sous agitation à 75°C. Le polymère passe en solution et un précipité blanc de KCl apparaît progressivement. Après 24 heures de réaction, le mélange et filtré et le polymère est précipité par 200 mL d'eau. La poudre floconneuse obtenue est filtrée, lavée à l'eau et séchée. L'analyse élémentaire indique 96% de substitution du chlore par du fluor. L'absence de coloration du polymère prouve l'absence de dé-hydrochloration avec apparition d'une couleur noire, qui est la réaction majoritaire en présence de KF et de DMF en l'absence du complexe de l'invention.

### Exemple 35

A 2,65 g de tétrachlorotéréphtalonitrile dans 15 mL de DMF, on a ajouté 1,7 g de NaF et la suspension formée a été chauffée dans un flacon scellé à 65°C pendant 48 heures. Une petite fraction du milieu réactionnel a été recueillie et les solides ont été centrifugés, puis lavés. Une analyse au RX de la poudre montre qu'il s'agit de NaF 100%, ce qui signifie qu'il n'y a pas eu de réaction à 65°C.

On a ajouté 150 mg du complexe IB-11 (pour obtenir un rapport B/F de 1/41,5). La suspension obtenue est agitée pendant 24 h supplémentaires, après quoi l'analyse de petites fractions montre la formation de NaCl. La réaction est poursuivie et l'on constate qu'après 5 jours de plus, la conversion du tétrachlorotéréphtalonitrile en tétrafluorotéréphtalonitrile est totale.

NaF n'est pratiquement jamais mentionné dans l'art antérieur pour des réactions de Halex du fait de sa totale insolubilité dans les solvants aprotiques. Cependant l'utilisation de NaF est intéressante à cause de son caractère non-hygroscopique et son prix inférieur, comparé à KF. Lorsque NaF est utilisé à la place de KF, il n'est pas nécessaire de prendre des précautions pour sécher les solvants. La complexation de NaF pour un complexe de l'inven-tion permet son utilisation pour des échanges Cl-F.

L'activité du complexe du monoacide [CH₃C(CH₂O-)₂(CO₂-)]B IB-3 a été comparée à celle du complexe du diacide [CH₃C(CH₂O-)(CO₂-)₂]B IB-11. Les deux complexes ont été utilisés pour catalyser une réaction de Halex mise en oeuvre avec NaF, et une réaction de Halex mise en oeuvre avec KF dont l'énergie réticulaire est inférieure à celle de NaF. Il est apparu que le monoacide est efficace lorsque KF est utilisé, mais inefficace lorsque NaF est utilisé. Le complexe du diacide, y compris en quantités catalytiques, permet l'utilisation de NaF, mais à des températures relativement faibles, du fait de sa stabilité thermique limitée (100°C).

### Exemple 36

5 g du complexe IB-18 sont dissous dans 40 ml de DMF et on ajoute 1,70 g de KF. Le sel passe rapidement en solution sous forme du complexe K⁺{C₂H₅C(CH₂O-)₂[C(CH₃)₂O-]BF}⁻. La solution est ajoutée à 2,5 g de poly(épichlorohydrine) (polymère commercial, M_{w} ≈ 10⁶) dans 5Ù ml de DMF et le mélange est porté à 85°C. Un précipité de KCl se forme après 2 heures et la réaction est poursuivie pendant 24 heures. Ensuite, le mélange réactionnel est versé dans 100 ml d'eau et le polymère précipité est filtré et lavé à l'eau. L'analyse élémentaire montre que 86 % des atomes de chlore du polymère ont été substitués par des atomes de fluor sans dégradation de la chaîne. L'absence de liaisons vinyl-éther provenant de l'élimination de HCl est vérifiée par IR. La même tentative de substitution par KF dans le DMF à 85°C donne 100% d'élimination. Cet exemple montre la caractère nucléophile mais non basique des adduits de l'invention.

### Exemple 37

On a dissous 15,7 g de dichloroacétate d'éthyle commercial dans 100 mL de diméthylacétamide, et on a ajouté 12 g de KF et 3,1 g de complexe IB-4, de sorte à avoir un rapport F/B=4 c'est-à-dire dans le mode catalytique. On a introduit le mélange dans un réacteur fermé et on a agité à 75°C, puis on a laissé refroidir à la température ambiante. Le précipité de KCl formé a été éliminé par filtration, et la solution restante a été versée dans 150 mL d'eau, puis extraite avec 3x20 mL de diéthyléther. Ensuite, l'éther a été éliminé sous vide, et le difluoroacétate d'éthyle a été distillé sous pression ambiante. Le point d'ébullition est de 97°C.

Le difluoroacétate d'éthyle est un produit de départ important pour la préparation de pesticides et de produits pharmaceutiques. En outre, il est utile comme additif pour diminuer l'impédance et la formation de dendrites lors du dépôt de lithium métallique pour les batteries au lithium.

Le procédé de l'invention remplace avantageusement le procédé utilisé dans l'industrie, consistant à faire réagir le chlorodifluoroacétate d'éthyle avec le zinc dans l'alcool.

### Exemple 38

Le complexe IB-23 est utilisé pour une catalyse par transfert de phase dans une réaction de Halex.

On a dissous 20 g of 4-chloro-métadinitrobenzène (NO₂)₂C₆H₃Cl dans 100 mL of α,α,α-trifluorotoluène, on a ajouté sous agitation à 80°C, une solution aqueuse contenant 500 mg du complexe IB-23, 500 mg de bromure de tétrapropylammonium et 7 g de KF. On a laissé le système biphasique réagir pendant 12 heures, puis on a éliminé le trifluorotoluène par évaporation sous pression réduite.

On a obtenu 15,6 g (rendement de 84%) de 4-fluoro-1,3-dinitrobenzène (NO₂)₂C₆H₃F.

On a reproduit le mode opératoire, en omettant le complexe de bore. Aucune réaction n'a été constatée.

### Exemple 39

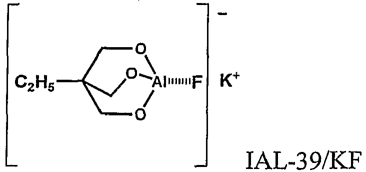

On a effectué une réaction de Halex catalytique avec un adduit IA1-39/KF préparé in situ.

En opérant en boîte à gants sous atmosphère neutre, on a ajouté à 1,34 g de 2-éthyl-2-hydroxyméthyl-1,3-propanediol C₂H₅C(CH₂OH)₃ dans 15 ml de DMF anhydre, 2,03 g d'isopropoxyde d'aluminium, 2,34 g de fluorure de potassium et 2,65 g de tétrachlorotéréphtalonitrile. Le rapport F/Al est de 4/1. La suspension est agitée à 75°C pendant 24 heures. Un spectre RX montre l'absence de KF et la présence de KCl provenant de l'échange Halex, ce qui montre que l'on a obtenu le tétrafluoro-téréphtalonitrile.

Dans les mêmes conditions, le complexe de l'aluminium et de l'acide bis(hydroxyméthyl)butyrique donne 100% d'échange après 48 heures à 75°C. L'adduit de ce complexe est obtenu dans les mêmes conditions que l'adduit IA1-39/KF, en remplaçant C₂H₅C(CH₂OH)₃ par C₂H₅C(CH₂OH)₂COOH.

### Exemple 40

Le tétrachloro-N-méthyl-pyrrole est préparé par chloruration de N-méthyl-pyrrole commercial par le chlorure de sulfuryle SOCl₂ dans l'acétonitrile.

A une solution de 2,19 g de N-méthyl-pyrrole dans le DMF, on ajoute 1,4 g du complexe IB-2 et 2,7 g de KCN sec, de sorte que le rapport CN/B soit de 4/1. On laisse le mélange réagir à 65°C pendant 8 heures sous agitation magnétique. On ajoute ensuite 820 g de NaSCN et on continue d'agiter le milieu réactionnel pendant 24 heures à 65°C.

Après refroidissement, le mélange réactionnel est versé dans 100 ml d'eau et le pH est ajusté à 0 par addition d'acide sulfurique dans une hotte bien ventilée. La solution est extraite par 4x20 mL de diéthyléther. Les fractions sont combinées et le solvant est éliminé par évaporation. On obtient 1,23 g (rendement de 73%) de tétracyanopyrrole. Le schéma réactionnel est comme suit :

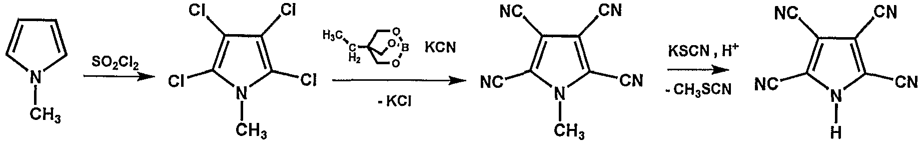

Le tétracyanopyrrole est un acide de Brøntsed fort dont le sel de lithium est fortement dissocié dans les solvants aprotiques organiques et dans les polymères solvatants tels que les polyéthers dont la majorité des unités récurrentes sont des unités oxyde d'éthylène. Le sel de lithium du tétracyanopyrrole est particulièrement utile comme sel de l'électrolyte d'une batterie au lithium, seul ou en mélange avec d'autres sels.

### Exemple 41

On a préparé le bromure de propylméthylpyrrolidinium par la réaction de Menshutkin de N-méthylpyrrolidine avec le 1-bromobutane. A 20,8 g de [C₄H₈N(CH₃)C₃H₇]Br dans 100 mL d'acétone, on a ajouté 21,5 g de l'adduit formé par le complexe IB-4 avec KF. La suspension a été agité par un agitateur magnétique pendant 48 heures. Le KBr formé pendant la réaction a été éliminé par filtration et le précipité lavé avec deux portions de 20 mL d'acétone. Le solvant a été éliminé et on a récupéré un liquide visqueux, correspondant à la formule :

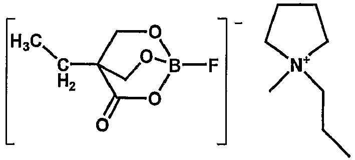

Ce sel peut être utilisé comme milieu réactif pour une fluoration selon la réaction de Halex, à cause de sa grande stabilité thermique et de sa faible pression de vapeur. Il peut également, en présence d'un fluorure de métal alcalin, en particulier de KF, provoquer la déhalogéno-fluoration de divers substrats.

### Exemple 42

A 14,7 g de chlorure d'éthyl-méthyl-imidazolium dans 120 mL d'acétonitrile, on ajoute 24,6 g de l'adduit de fluorure de sodium de l'exemple 17 Na⁺{[C₂H₅C(CH₂O-)₂C [C(CN)₂]O-]BF}⁻. On agite le mélange à température ambiante pendant 4 heures, puis on filtre la suspension obtenue. Le solvant est éliminé et l'on obtient un liquide visqueux incolore correspondant au composé:

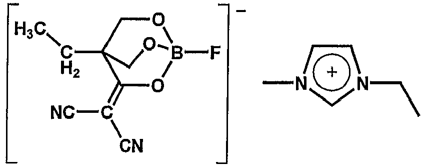

Ce liquide ionique est stable à 285°C avec moins de 5% de perte de poids. Il peut être utilisé comme solvant pour une réaction de Halex comme dans l'exemple 36.

### Exemple 43

### Préparation de FeOCl

Dans une ampoule de verre et en opérant dans une boîte à gants, on mélange 10 g de Fe₂O₃ nanométrique [obtenu par pyrolyse à 400°C sous air d'oxalate ferreux Fe(C₂O₄)₂,2H₂O] et 11,2 g de FeCl₃ anhydre (10% excès), puis l'ampoule est bouchée, sortie de la boîte à gants et scellée sous vide à l'aide d'un chalumeau. L'ampoule est maintenue à 300°C dans un four pendant 24 heures, puis refroidie et ouverte. Le FeOCl obtenu est lavé sur filtre par du formiate de méthyle et l'on obtient une poudre rouge-violet. La caractérisation par RX de la poudre montre qu'il s'agit de FeOCl avec une structure orthorhombique, pour laquelle a= 3,75Å, b=3,3Å, c= 7,95Å ; SG: Pmmn (59).

### Fluoration de FeOCl par IB-11/LiF

214 mg de FeOCl, 52 mg g de fluorure de lithium LiF et 22 g du complexe du bore [CH₃C(CH₂O)(CO₂-)₂]B (IB-11) sont mélangés dans 13 mL de DMF dans une boîte à gants sous atmosphère neutre. Le mélange et agité pendant 23 heures à 75°C. l'analyse RX du produit obtenu montre la disparition de FeOCl et l'apparition d'une phase FeOF Orthorhombique, a= 6,6039 (0) Å, b = 12.8946 (0) Å, c= 4.67223 (0) jamais décrite.

### Fluoration de FeOCl par IB-3/Et₄NF

On a préparé l'adduit IB-3/Et₄NF en ajoutant 1,85 g (1 mmole) de fluorure de tétraéthylammonium commercial sous forme dihydratée, et 1,42 g du complexe IB-3 dans 25 ml d'éthanol. Ensuite, le solvant est évaporé dans un évaporateur rotatif, et le produit obtenu est séché sous vide à 60°C pendant 25 heures.

On mélange 0,54 g de FeOCl (5 mmoles) et 1,635 mg (5 mmol) de l'adduit IB-3/Et₄NF dans 60 mL de DMF dans une bombe Parr®, en opérant dans une boîte à gant sous argon. Le mélange réactionnel est agité à 150°C pendant 48 heures, puis filtré et lavé avec 20 mL de formiate de méthyle. Le composé obtenu présente les mêmes caractéristiques structurales que celui obtenu avec l'adduit IB-11/LiF.

### Exemple 44

On a préparé un électrolyte liquide en dissolvant 2,3 g de l'adduit formé par le complexe de bore IB-14 avec LiF dans 10 ml d'un mélange 50/50 en volume de carbonate de méthyle et de carbonate d'éthylène. La conductivité de l'électrolyte est de 3 mScm⁻¹.

Une batterie est élaborée à partir d'une feuille de lithium métallique (ayant une épaisseur de 200 µm et un diamètre de 1,8 cm), d'un séparateur en fibres de verre ayant le même diamètre et une électrode positive composite comprenant 75% en poids de CuF₂, 15% en poids de noir d'acétylène et 10% en poids de poly (fluorure de vinylidène) PVF₂. La suspension avec cette composition est épandue à partir d'une solution de PVDF dans NMP sur une collecteur d'aluminium et évaporée. La masse active de CuF₂ est de 18 mg. La batterie est montée sous forme d'une pile bouton. Le séparateur est imbibé par 10 gouttes d'électrolyte et puis scellée par emboutissage en boîte à gants.

La batterie est déchargée sous un courant constant de 10 µA à 25°C et montre une capacité de 8,46 mAh (86% de la capacité théorique) à un potentiel de coupure basse de 2,5 V. La batterie peut être cyclée entre 2,5 et 3,8 V vs Li⁺:Li°, en conservant 65% de la capacité à la 1^{ère} charge après 50 cycles.

### Exemple 45

On a élaboré une batterie lithium-air, à partir de :
- une anode constituée par une feuille de lithium métallique (ayant une épaisseur de 200 µm et un diamètre de 1,8 cm);
- une cathode constituée par un matériau composite poreux contenant 48% en poids de noir de carbone, 2% en poids de di-lithium phtalocyanine, 10% en poids de nanotubes de carbone, 30% en poids de latex de polytétrafluoroéthylène (PTFE) lié par un polymère statistique éthylène-propylène (10%), ledit matériau composite étant déposé sur un collecteur en aluminium expansé Exmet® à partir d'une solution dans le cyclohexane.
- un séparateur imprégné par une solution 0,8 M de Li[(CF₃SO₂)₂N] dans un liquide ionique constitué par le sel de bis(fluorosulphonimide) [(FSO₂)₂N]⁻ de N-méthyl-N-propyl pyrrolidinium (MePrPy)⁺ auquel on a ajouté 0,3 M du complexe de bore IB-19. Le complexe de bore est destiné à former des complexes avec les produits de réduction de l'oxygène à l'électrode à air.

La batterie fonctionne à un potentiel de décharge de 2,8 V et est rechargée à un potentiel de 3,5 V avec une densité de courant de 100 µm A.cm⁻². Le potentiel de recharge dans une batterie similaire mais ne contenant pas de complexe, est de 4,5 V.

Les espèces solubles présentes dans l'électrolyte de la batterie contenant le complexe de bore sont indiquées ci-après.

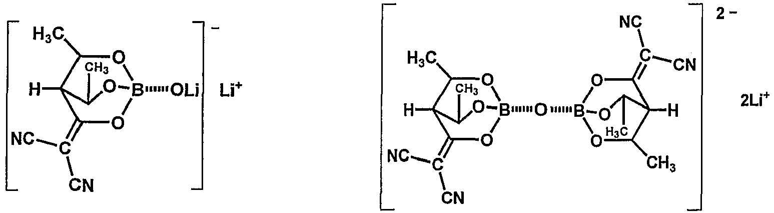

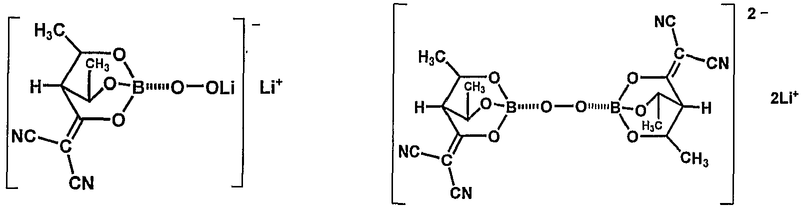

### Exemple 46

On a élaboré une batterie à partir d'une anode de lithium, d'un séparateur et d'une cathode composite.

L'anode est obtenue à partir d'une feuille de lithium métallique ayant une épaisseur de 60 µm laminée sur une feuille de cuivre de 25 µm et découpée à un diamètre de 1,8 cm. Le séparateur est constitué par une polyoléfine microporeuse (Celgard^{®}) ayant le même diamètre. L'électrode positive composite est obtenue par épandage sur un collecteur de courant en aluminium de 25 µm, d'une composition contenant 75% en poids de fluorure de graphite CF_{y} (y ≈ 0.25), 15% en poids de noir d'acétylène et 10% en poids de carboxyméthylcellulose (CMC) en suspension dans l'eau, puis évaporation de l'eau. La masse active de CFₓ dans la cathode est de 7,5 mg.

L'électrolyte est constitué par une solution de l'adduit IB-14"/LiF formé par le complexe IB-14" avec LiF.

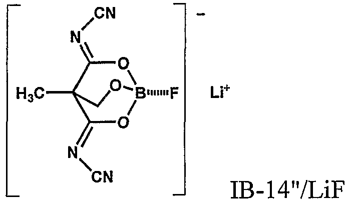

La concentration en adduit est de 1 mol/L dans un mélange carbonate d'éthylène/ carbonate de diméthyle 50/50 en volume.

La batterie est montée sous forme d'une pile bouton. Le séparateur est imbibé par 8 gouttes d'électrolyte, puis scellée par emboutissage en boîte à gants. Elle est cyclée entre 2,5 et 4,2 V selon la réaction :

CF_{y} + yLi⁺ + ye- ⇔ yLiF + C

et l'on constate que le cyclage s'effectue avec une capacité de 330 mAh/g de CF_{y}.

On a monté une batterie de la même manière, mais en omettant l'adduit. On a constaté que la réaction ci-dessus est irréversible, ce qui est le résultat de la non solubilité de LiF en l'absence de complexe du bore.

### Exemple 47

À 17,4 g de diéthyl(méthyl)malonate CH(CH₃)(CO₂C₂H₅)₂ commercial dans 75 ml de THF anhydre et refroidi à 0°C, on ajoute sous agitation 5,4 g de méthoxyde de sodium par petites portions. A la solution claire obtenue on ajoute goutte-à-goutte 12,2 g de chloroacétate d'éthyle ClCH₂CO₂C₂H₅ sur une période d'une heure. Le mélange réactionnel est laissé sous agitation à température ordinaire pendant 24 heures. Le précipité de chlorure de sodium formé est filtré et le THF est éliminé à l'aide d'un évaporateur rotatif. Le rendement en 1,2-2-tri(éthoxycarbonyl)-propane (CH₃)C(CH₂CO₂C₂H₅)(CO₂C₂H₅)₂ est de 96 %.

On traite 13 g de ce triester dans 40 mL d'éthanol anhydre par 6,4 g d'hydroxyde de sodium sous agitation. Après 24 heures, le précipité blanc de (CH₃)C(CH₂CO₂Na)(CO₂Na)₂ est filtré et lavé par trois portions de 20 ml d'éthanol et séché sous vide. 8,07 g de ce sel sont dissous dans 20 ml d'eau et on ajoute 4,9 d'acide sulfurique et 2,06 g d'acide borique. La solution est évaporée à sec et le résidu est repris par 15 ml d'éthanol anhydre et filtré. Après séchage, on obtient 4,4 g du complexe CH₃C(CH₂CO₂-)(CO₂-)₂B de type IIB.

### Exemple 48

13 g 1,2-2-tri(éthoxycarbonyl)-propane (CH₃)C(CH₂CO₂C₂H₅)(CO₂C₂H₅)₂ du triester de l'exemple 1 sont hydrolysés par 9 g d'hydroxyde de potassium dans 50 ml de méthanol en maintenant une température de 10°C. Le précipité du sel de potassium (CH₃)C(CH₂CO₂K)(CO₂K)₂ est filtré et lavé par trois portions de 20 ml d'isopropanol et séché sous vide.

2,90 g dudit sel, 2,41 chlorure d'aluminium hexahydraté AlCl₃,6H₂O et 600 mg de fluorure de potassium sont mis à réagir dans 20 ml d'un mélange 50/50 d'isopropanol et d'acétonitrile. Le précipité de KCl et l'excès de KF sont éliminés par filtration et le solvant est évaporé pour donner l'adduit {CH₃C(CH₂CO₂-)(CO₂-)₂AlF}⁻K⁺ du type IIAl/KF. Ce sel est très soluble dans 1c DMF et partiellement dans le mélange de carbonates EC-DMC 50/50.

### Exemple 49

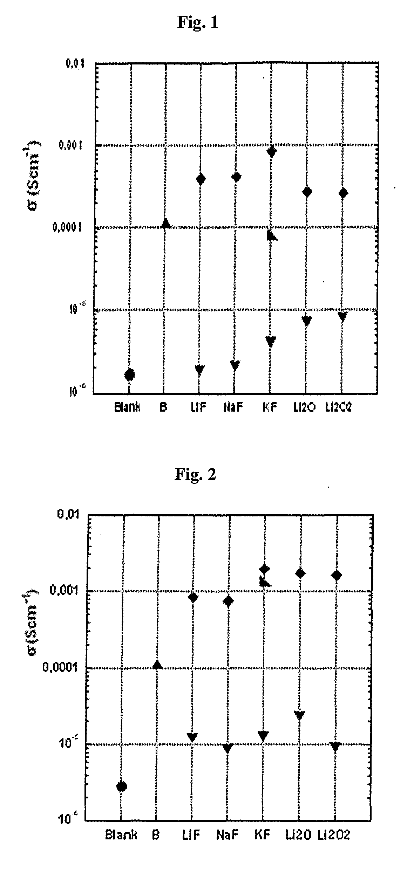

Des mesures de conductivité à 25°C ont été effectuées sur le complexe du bore de l'exemple 1 et le l'adduit avec KF du complexe d'aluminium de l'exemple 2, dans un mélange carbonate d'éthyle/carbonate de diméthyle (EC/DMC) d'une part, dans le diméthylformamide (DMF) d'autre part. Les résultats sont représentés sur les figures 1 et 2. La figure 1 correspond aux résultats obtenus à partir de solutions dans le mélange EC/DMC et la figure 2 à ceux obtenus à partir de solutions dans le DMF. Sur chacune des figures, la conductivité σ, exprimées en Scm⁻¹ est donnée en ordonnée et :
- La colonne "Blank" donne la conductivité du solvant, au point marqué ●.
- La colonne "B" donne la conductivité d'une solution 1M du complexe de bore, au point marqué ▲.
- la colonne LiF donne la conductivité d'une solution saturée en LiF au point marque ▼, et la conductivité d'une solution 1M de complexe saturée en LiF au point marqué ◆.
- la colonne NaF donne la conductivité d'une solution saturé en NaF au point marqué ▼, et la conductivité d'une solution 1M de complexe saturée en NaF au point marqué ◆.
- la colonne KF donne la conductivité d'une solution saturée en KF au point marqué ▼, la conductivité d'une solution 1M de complexe saturée en KF au point marqué ◆, et la conductivité d'une solution 1M d'adduit de KF avec le complexe d'aluminium au point marqué ◣
- la colonne Li₂O donne la conductivité d'une solution saturée en Li₂O au point marqué ▼, et la conductivité d'une solution 1M de complexe saturée en Li₂O au point marqué ◆.
- la colonne Li₂O₂ donne la conductivité d'une solution saturé en Li₂O₂ au point marqué ▼, et la conductivité d'une solution 1M de complexe saturée en Li₂O₂ au point marqué ◆.

Ces résultats montrent l'amélioration subtantielle de la conductivité de divers sels apportée par la présence d'un complexe selon l'invention, cette augmentation de la conductivité résultant d'une augmentation de la solubilité. Cette caractéristique est importante lorsque les composés sont utilisés dans l'électrolyte d'un générateur électrochimique, tel qu'une batterie ou une pile à combustible.

### Exemple 50

On ajoute 10 g de monocyanamide de sodium commercial NaHNCN à 13 g de 1,2-2-tri(éthoxycarbonyl)-propane (CH₃)C(CH₂CO₂C₂H₅)(CO₂C₂H₅)₂ dans 75 ml d'éthanol anhydre. Le mélange réactionnel est maintenu sous agitation à 40°C pendant 48 heures et le précipité blanc qui se forme est centrifugé, lavé par trois portions de 25 ml d'isopropanol, puis séché sous vide à 60°C. On disperse 3,14 g du sel (CH₃)C[CH₂C(NCN)ONa][C(NCN)ONa]₂ obtenu, 2,92 g d'acide sulfamique NH₂SO₃H et 1,46 g de borate de triéthyle B(OC₂H₅)₃ dans 15 ml d'éthanol. Le mélange réactionnel est agité à température ordinaire pendant 24 heures, filtré, évaporé, puis séché sous vide primaire à 75°C.

On obtient le complexe {(CH₃)C[CH₂C(NCN)O-][C(NCN)O-]₂}B de type IIB, avec un rendement de 88%. Ce complexe forme des adduits avec LiF, NaF, KF, LiCl, NaCl, KCl, Li₂O, Li₂O₂, Na₂O₂, NaOCN, KOCN, NaN₃, KN₃, NaCN, KCN qui sont solubles dans les solvants aprotiques polaires

### Exemple 51

On ajoute 10,5 g de malononitrile, CH₂(CN)₂ 16 g de triéthylamine et 20 g de trifluoroacétate de calcium anhydre Ca(CF₃CO₂)₂ à 13 g de 1,2-2-tri(éthoxycarbonyl)-propane (CH₃)C(CH₂CO₂C₂H₅)(CO₂C₂H₅)₂ dans 75 ml de éthanol anhydre et sous atmosphère d'azote. Le mélange est agité à température ordinaire et un précipité blanc se forme en 24 heures. Le précipité est centrifugé, lavé par trois portions de 25 ml d'isopropanol, puis séché sous vide à 60°C.

7,3 g du sel {(CH₃)C[CH₂C(C(CN)₂)O][C(C(CN)₂)O]₂}₂Ca₃ obtenu sont dispersés dans 25 ml d'éthanol, et 4,62 de sulfate d'aluminium hydraté Al₂(SO₄)₂, 12 H₂O sont ajoutés au mélange réactionnel, qui est ensuite agité à température ordinaire pendant 12 heures, filtré pour éliminer le sulfate de calcium, évaporé, puis séché sous vide primaire à 60°C. On obtient le complexe {(CH₃)C[CH₂C(C(CN)₂)O-][C(C(CN)₂)O-]₂}Al (de type IIAl) avec un rendement de 82%.

Ce complexe forme des adduits avec LiF, NaF, KF, LiCl, NaCl, KCl, Li₂O, Li₂O₂, Na₂O₂, NaOCN, KOCN, NaN₃, KN₃, NaCN, KCN, LiCl, Na Cl, KCl qui sont solubles dans les solvants aprotiques polaires.

### Exemple 52

À 30 ml de méthanol anhydre et refroidi à 0°C, on ajoute 3,96 g de diéthylmalonate CH₂(CO₂CH₃)₂ commercial et 6,5 g de méthoxyde de sodium par petites portions. A la solution claire obtenue, on ajoute goutte-à-goutte une solution de 3,67 g d'acide chloroisobutyrique Cl(CH₃)₂CCO₂H dans 10 ml de méthanol sur une période d'une heure. Le mélange réactionnel est laissé sous agitation à température ordinaire pendant 24 heures. Le précipité de chlorure de sodium formé est filtré et on ajoute 3 ml d'eau. Au bout d'une heure, un précipité de HC[C(CH₃)₂CO₂Na][CO₂Na]₂ se forme et on l'extrait après lavage dans l'éthanol. 2,56 g de ce sel sont mis en suspension dans 15 ml d'isopropanol et on ajoute 10 ml d'une solution commerciale 1M de trichlorure de bore dans le dichlorométhane. Le précipité de NaCl est filtré et on obtient une solution du complexe HC[C(CH₃)₂CO₂-][CO₂-]₂B⁻ (de type IIB). Cette solution est évaporée pour donner un solide cristallin qui forme des adduits solubles dans le DMF avec KF, NaF, NaOCN, NaCN, KCN, NaN₃.

### Exemple 53

À 30 ml d'éthanol anhydre et refroidi à 0°C, on ajoute 5,22 g de diéthyl(méthyl)malonate CH₃CH(CO₂C₂H₅)₂ commercial, et 5 g d'éthoxyde de sodium par petites portions. On ajoute ensuite goutte-à-goutte une solution de 3,67 g de d'acide bromo difluoroacétique BrF₂CCO₂H dans 10 ml d'éthanol sur une période d'une heure. Le mélange réactionnel est laissé sous agitation à température ordinaire pendant 24 heures, puis on ajoute 3 ml d'eau. Au bout d'une heure, un précipité de CH₃C[CF₂COaNa][COₐNa]₂ se forme et on l'extrait après lavage dans l'éthanol pour éliminer le NaBr formé. 2,78 g de ce sel sont mis en suspension dans 15 ml d'isopropanol et on ajoute 2,41 g de chlorure d'aluminium hydraté. Le précipité de NaCl est filtré et on obtient une solution de l'adduit {HC[CF₂CO₂-][CO₂-]₂AlCl}⁻Na⁺ du complexe de l'aluminium (type IIAl) et du chlorure de sodium. Traité par NaF dans l'acétonitrile, cet adduit donne {HC[C(CH₃)₂CO₂-][CO₂-]₂AlF}⁻ Na⁺ et un précipité de NaCl.

### Exemple 54

À 17,42 g de diéthyl(méthyl)malonate CH(CH₃)(CO₂C₂H₅)₂, commercial dans 80 ml d'acétonitrile et refroidi sous agitation à 0°C, on ajoute 20 gouttes de 1,8-Diazabicyclo-[5.4.0]undec-7-ene (DBU) et 6 g d'oxyde de propylène dans 25 ml d'acétonitrile, goutte-à-goutte par une ampoule à brome. Le produit de la réaction est traité avec un évaporateur rotatif et repris par 100 ml l'eau acidulée par 5 ml d'acide chlorhydrique commercial, puis extrait au dichlorométhane que l'on évapore ensuite. On obtient le 1-hydroxy-2-méthyl-3,3-di(éthoxycarbonyl)-butane (CH₃)C[CH(CH₃)CH₂OH](CO₂C₂H₅)₂ avec un rendement de 88%.

10 g de l'alcool-diester sont hydrolysés dans 40 ml d'isopropanol par 4 g de LiOH,H₂O (proportion 1:2,2) à température ordinaire pendant 12 heures. Le précipité blanc obtenu est centrifugé et lavé par trois fois 20 ml d'isopropanol, puis séché sous vide primaire à 60°C. 3,76 g du sel ainsi obtenu (CH₃)C[CH(CH₃)CH₂OH](CO₂Li)₂ sont mis en suspension dans le THF, puis traités par 1,96 g d'acide sulfurique et 2,91 g de borate de triéthyle. Le précipité de Li₂SO₄ qui se forme est éliminé par centrifugation et le complexe (CH₃)C[CH(CH₃)CH₂O-](CO₂-)₂B (type IIB) est obtenu sous forme d'un solide incolore.

### Exemple 55

À 18,8 g de diéthyl(éthyl)malonate commercial CH(C₂H₅)(CO₂C₂H₅)₂, on ajoute 20 gouttes de 1,8-Diazabicyclo[5.4.0]undec-7-ene et 9 g de carbonate d'éthylène. Le mélange est chauffé sous atmosphère d'azote à 165°C sous agitation et un dégagement de CO₂ se produit. Après cessation du dégagement gazeux (environ 2 heures), le mélange est refroidi et versé dans 150 ml d'eau et l'alcool-diester 1-hydroxy-3,3-di(éthoxycarbonyl)-pentane de formule C₂H₅C[C₂H₄OH](CO₂C₂H₅)₂ est extrait avec l'hexane. Le rendement est de 75%.

11,6 g de l'alcool-diester sont traités dans 50 ml de méthanol par 6 g de chlorure de calcium, 4,4 de cyanamide et 12,5 g de tétraméthylguanidine à 60°C pendant 48 heures. Le précipité blanc qui se forme est centrifugé et lavé par trois fois 20 ml de méthanol et séché sous vide primaire à 60°C pour donner le sel de calcium [(C₂H₅)C[C₂H₄OH](CONCN)₂]Ca.

2,48 g de ce sel en suspension dans l'éthanol sont traités par 900 mg d'acide oxalique anhydre et 1,04 g de borate de triméthyle. Le précipité de CaC₂O₄ est éliminé par centrifugation et le complexe C₂H₅C(C₂H₄O-)[C(NCN)O-]₂B (type IIB) est obtenu sous forme d'un solide incolore après évaporation. Par addition de KF, de KOCN, de NaOCN ou de NaCN , on obtient un adduit très soluble dans le DMF et dans l'acétonitrile (> 10 g/l).

### Exemple 56

A une suspension de 4,8 g d'hydrure de sodium dans 50 ml de THF anhydre refroidi à 0°C, on ajoute goutte-à-goutte 17,4 g de diéthyl(méthyl)malonate dilués dans 50 ml de THF, puis 11,6 g de chlorhydrate de 2-chloroéthylamine par petites portions sous agitation. Après 24 heures de réaction et cessation du dégagement d'hydrogène, la suspension est filtrée pour éliminer le NaCl formé et le produit est purifié par dissolution dans 120 ml de HCl 1M, extraction à l'éther, ajout de 15 g d'hydrogénocarbonate de sodium et extraction au dichlorométhane qui est ensuite évaporé.

4,34 g de l'amino-diester CH₃C[C₂H₄NH₂](CO₂C₂H₅)₂ ainsi obtenu sont traités dans 25 ml de THF par 4 g de trifluorométhanesulfonyle imidazole CF₃SO₂(C₃N₂H₃), puis on ajoute 2,0 g hydroxyde de sodium et 15 ce d'éthanol. Après 24 heures, le précipité est centrifugé et lavé par trois fois 15 ml d'éthanol anhydre. À 3,6 g du sel CH₃C[C₂H₄N(Na)CF₃SO_{2]}(CO₂Na)₂ dans 20 ml de diméthylformamide, on ajoute 1,42 g d'ethérate de trifluorure de bore BF₃O(C₂H₅)₂ qui réagit selon selon le schéma réactionnel suivant :

CH₃C[C₂H₄N(Na)CF₃SO₂](CO₂Na)₂ + BF₃O(C₂H₅)₂ ⇒ 2NaF + {CH₃C[C₂H₄N(CF₃SO₂)-](CO₂-)₂}BF⁻ Na⁺

Le fluorure de sodium est ensuite éliminé par filtration

### Exemple 57

Le 1,2-2-tri(éthoxycarbonyl)-hexane, (C₄H₉)C(CH₂CO₂C₂H₅)(CO₂C₂H₅)₂ est préparé à partir de diéthyl(butyl)malonate C₄H₉CH(CO₂C₂H₅)₂ commercial par le procédé de l'exemple 1. 30,2 g de ce composé dans 100 ml d'isopropanol sont traités par 19,5 g de monocyanamide de sodium à 40°C pendant 24 heures. Le sel de sodium (C₄H₉)C[CH₂C(NCN)ONa][C(NCN)ONa]₂ qui précipite est centrifugé, lavé avec trois portions de 30 ml d'isopropanol, puis séché sous vide à 50°C.

Le complexe d'aluminium {(C₄H₉)C[CH₂C(NCN)O-][C(NCN)O-]₂}Al (type IIAl) est préparé dans l'éthanol par action de 6 g de sulfate d'aluminium hydraté Al₂(SO₄)₂, 12 H₂O sur 9,24 g dudit sel de sodium. Le précipité de sulfate de sodium est éliminé par centrifugation et la solution est évaporée pour donner le complexe d'aluminium qui est séché sous vide primaire à 75°C.

Ce complexe est soluble dans la plupart des solvants aprotiques polaires, tesls que par exemple l'acétone, la méthyléthyle cétone, l'acétonitrile, le diméthylformamide (DMF), le diméthylsulfoxyde (DMSO), les carbonates d'alkyle ou de fluoroalkyle cycliques (tels que le carbonate de diméthyle, le carbonate de diéthyle, le carbonate d'éthyl-méthyle, le carbonate d'éthylène, le carbonate de propylène, le carbonate de fluoroéthylène, le carbonate de fluorométhyl-ethylène), les ester (tels que le formiate de méthyle, et la γ-butyrolactone), les éthers [tels que le THF, les oligoéthers de glycol, et le poly(oxyde d'éthylène)], liquides ioniques (tels que le bis(trifluorométhane sulfonimide d'éthyl-méthyl-imidazolium) et leurs mélanges. L'acide de Lewis ainsi préparé forme des complexes eux aussi solubles dans des solvant similaires avec LiF, NaF, KF, LiCl, NaCl, KCl, Li₂O, Li₂O₂, Na₂O₂, NaOCN, KOCN, NaN₃, KN₃, NaCN, KCN, cités d'une manière non limitative, dans les même solvants.

### Exemple 58

Le 2-méthylamino-1,3-propane diol est préparé selon la séquence réactionnelle suivante :
- traitement du cyanoaétate d'éthyle commercial par deux équivalents de paraformaldéhyde en présence d'une base catalytique (tétraméthylguanidine) selon la réaction

   N≡CCH₂COOC₂H₅ + 2 CH=O ⇒ N≡CC(CH₂OH)₂COOC₂H₅
- décarboxylation selon la réaction

   N≡CC(CH₂OH)₂COOC₂H₅ + 2OH⁻ ⇒ C₂H₅OH + N≡CCH(CH₂OH)₂ + CO₃²⁻ + H₂O
- déshydrogénation catalytique selon la réaction :

   N≡CC(CH₂OH)₂CO₂⁻ + 2H₂ ⇒ CO₂ + NH₂CH₂CH(CH₂OH)₂⁻

On traite à 0°C 10,5 g de l'aminoglycol NH₂CH₂CH(CH₂OH)₂ obtenu et dissous dans 30 ml d'acétonitrile, par 9,9 g de sulfonyle-dimidazole SO₂(C₃N₂H₃)₂ commercial dans 30 ml d'ACN ajouté goutte-à-goutte, puis 9,7 g d'acide sulfamique. Le précipité de sulfamate d'imidazolium est filtré et la solution évaporée. La sulfamide (HOCH₂)₂C(H)CH₂N(H)SO₂N(H)CH₂C(H)(CH₂OH)₂ est recristallisée dans un mélange isopropanol/toluène pour obtenir un produit analytiquement pur.

5 g de la sulfamide et 5,36 g de borate de triéthyle B(OC₂H₅)₃ sont mélangés dans 10 ml d'acétonitrile et on obtient une solution limpide qui est évaporée.

Le complexe dinucléaire ainsi formé : 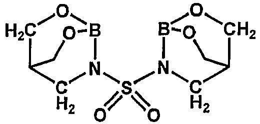 forme des adduits avec les sels LiF, NaF, KF NH₄F, BaF₂, Li₂O, Li₂O₂, Na₂O₂, NaOCN, KOCN, NaN₃ qui sont solubles dans les solvants aprotiques polaires.

### Exemple 59

18 g de sel de di-lithium d'acide itaconique H₂C=C(CO₂Li)(CH₂CO₂Li) préparé à partir de l'acide commercial et de carbonate de lithium sont mis aux reflux pendant deux heures dans 60 ml de solution commerciale d'ammoniac. L'excès d'ammoniac est évaporé, le résidu solide est le sel NH₂CH₂CH(CO₂Li)(CH₂CO₂Li) dont 7,94 g sont mis en suspension dans 30 ml de trifluoroéthanol et on ajoute 4 g de carbonyl-dimidazole CO(C₃N₂H₃)₂. sous agitation. Après une heure, on ajoute 30 ml de dioxane le précipité est centrifugé et lavé avec trois portions de 20 ml d'isopropanol puis séché. On obtient l'acide (HO₂C)₂(HO₂CCH₂)C(H)CH₂N(H)CON(H)CH₂C(H)(CO₂H)(CH₂CO₂H) par passage sur une résine échangeuse d'ion de Type Dowex® Macroréticulaire à fonctionnalité SO₃H. Après évaporation de la solution ayant servi à l'échange, l'acide est obtenu sous forme d'un solide cristallin blanc.

On ajouté 3,65 g de ce solide et 2,08 g de borate de triméthyle dans 10 ml de méthanol. La solution claire obtenue est évaporée et séchée à 80°C sous vide pour donner le complexe :

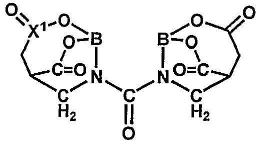

Ce complexe forme des adduits avec les anions des sels LiF, NaF, KF, LiCl, NaCl, KCl, LiOH, Li₂O, Li₂O₂, Na₂O₂, KO₂.

On a reproduit le mode opératoire ci-dessus, en remplaçant le carbonyl-diimidazole par le thio carbonyl-diimidazole, et on a obtenu la thio-urée correspondante :

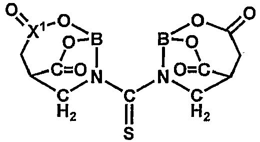

Ce composé donne par oxydation et dimérisation un composé dicationique qui possède une très grande constante de complexation pour les anions Z et Z".

### Exemple 60

À 17,4 g de diethyl(méthyl)malonate CH(CH₃)(CO₂C₂H₅)₂ commercial dans 40 ml de diméthylformamide, on ajoute 0,7 ml de tétraméthylguananidine, 4,8 g de sulfamide SO₂(NH₂)₂ et 6 g de paraformaldehyde (CH₂=O)ₙ. Le mélange est agité à 50°C pendant 24 heures, puis versé dans 150 ml d'eau. Le tétraester est extrait par l'éther en 3 portions de 40 ml et les extraits sont mélangés et évaporés pour donner le composé (C₂H₅O₂C)₂(CH₃)CCH₂NHSO₂NHCH₂C(CH₃)(CO₂C₂H₅)₂.

Le traitement de 4,68 g de tétraester par 6 g de Ca(OH)₂ dans 20 ml d'un mélange éthanol-eau 50/50 donne [(O₂C)₂(CH₃)CCH₂NHSO₂NHCH₂C(CH₃)(CO₂C₂H₅)₂]Ca₂.

Par action de 910 mg d'acide oxalique anhydre sur 2,45 g du sel de calcium et 1,23 g d'acide borique, dans le méthanol, on obtient le complexe binucléaire : 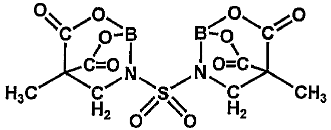 sous forme cristalline après séparation de CaC₂O₄ et évaporation. Ce complexe forme des adduits avec LiF, NaF, KF, LiOH, Li₂O, Li₂O₂, Na₂O₂, KO₂^{•}, NaN₃, NaCN, KCN.

En remplaçant Ca(OH)₂ comme agent d'hydrolyse par NaHNCN ou LiCH(CN)₂, on obtient la substitution de C=O par C=NCN ou C=C(CN)₂ ce qui augmente la solubilité des adduits correspondants dans les solvant aprotiques polaires.

## Revendications

1. Complexe polycyclique correspondant à l'une des formules générales : 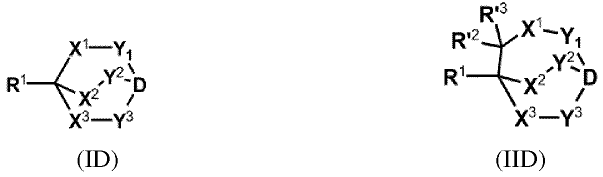 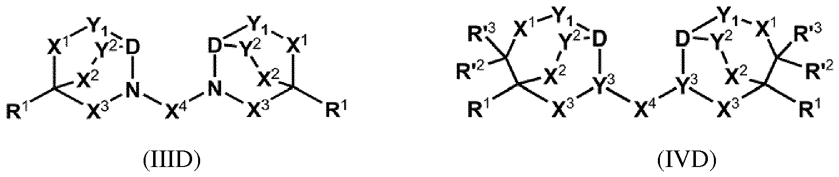 dans lesquelles :
- D représente le bore B ou l'aluminium Al ;
- R¹ représente R, R_{F}, NO₂, CN, C(=O)OR, RSO₂, ou R_{F}SO₂ ;
- chacun des groupes -X¹-, -X²-et -X³- représente indépendamment des autres un groupe divalent >C=O, >C=NC≡N, >C=C(C≡N)₂ ou >CR²R³ ;
- X₄ représente un groupe divalent >C=O ou >SO₂ ;
- chacun des groupes -Y¹-, -Y²- et -Y³- représente indépendamment des autres un groupe divalent -O-, >N(C≡N), >N(COR_{F}), >N(SO₂R⁴), >NR⁴, >N(COR⁴) ou >N(SO₂R_{F}) ;
- R, R² et R³ représentent chacun indépendamment des autres H, un groupe alkyle, un groupe aryle, un groupe alkyl-aryle, un groupe aryl-alkyle ou un groupe oxaalkyle ;
- R⁴ représente un groupe alkyle, un groupe aryle, un groupe alkyl-aryle, un groupe hétéroaryle, un groupe aryl-alkyle, un groupe oxaalkyle, ou un groupe R_{F}CH₂ ;
- R_{F} est un groupe perfluoroalkyle ou un groupe alkyle partiellement fluoré, ou un groupe phényle partiellement ou totalement fluoré ;
- chacun des groupes R^{,2} et R^{,3} représente R ou F ;
étant entendu que :
- plusieurs groupes R ou R_{F} peuvent être liés ensemble pour former un segment d'un oligomère ou d'un polymère ;
- dans un complexe ID et IID, si deux groupes parmi -X¹-, -X²- et -X³- représentent chacun >C=O, alors le troisième groupe représente un groupe >CR²R³ ;
- dans un complexe IB, si chacun des groupes X¹, X² et X³ est un groupe CH₂ et chacun des groupes Y est O, alors R¹ est différent de CH₃.

2. Complexe selon la revendication 1, **caractérisé en ce que** chacun des groupes Y¹, Y² et Y³ représente O.

3. Complexe selon la revendication 1, **caractérisé en ce qu'**au moins l'un groupes Y¹, Y² et Y³ représente NR⁴.

4. Complexe selon la revendication 2, **caractérisé en ce que** R¹ est choisi parmi R_{F}SO₂-, NO₂, RSO₂-, -CN, et -C(=O)OR.

5. Complexe selon la revendication 3, **caractérisé en ce que** l'un au moins des groupes -X¹-, -X²- et -X³- représente un groupe choisi parmi >C=O, >C=NC≡N et >C=C(C≡N)₂.

6. Complexe selon la revendication 1, **caractérisé en ce que** chacun des groupes -X¹-, -X²- et -X³- représente un groupe CR²R³.

7. Complexe selon la revendication 1 ou 6, **caractérisé en ce que** au moins un des groupes Y¹, Y² et Y³ est choisi parmi N(C=N), >N(COR_{F}), >N(SO₂R⁴), >N(COR⁴), >N(SO₂R_{F}) ou un groupe >NR⁴ dans lequel R⁴ est un aryle ou hétéro-aryle portant au moins un groupement attracteur et/ou le groupe R¹ est choisi parmi R_{F}SO₂-, NO₂, RSO₂-, -CN, et -C(=O)OR.

8. Adduit formé par un sel M_{z'}Z'ₘ complexé par un complexe selon l'une des revendications 1 à 7, dans lequel M est un cation dont la valence n est de 1 à 3, et Z' est un anion dont la valence z' est 1 ou 2.

9. Adduit selon la revendication 8, **caractérisé en ce que** Z' est un anion monovalent, choisi parmi les anions F⁻, Cl⁻, Br⁻, OCN⁻, O₂²⁻, O₂^{•-}, OH⁻, RO⁻, N₃⁻, CN⁻, [O²⁻M'⁺]⁻, [O₂²⁻M'⁺]⁻ et [NCN²⁻M'⁺], M' étant H ou un cation monovalent.

10. Adduit selon la revendication 8, **caractérisé en ce que** Z' est un anion divalent, choisi parmi les anions O²⁻, O2²⁻, S²⁻, S₂²⁻ et NCN²⁻.

11. Adduit selon la revendication 8, **caractérisé en ce que** M représente un cation de métal alcalin, un cation de métal alcalino-terreux, Ag⁺, Pb²⁺, un cation d'yttrium, un cation de lanthane ou un cation organique.

12. Adduit selon la revendication 11, **caractérisé en ce que** M est un cation organique choisi parmi les cations ammonium, phosphonium, tetrakis-(dialkylamino)phosphonium, bis[tris(dialkylamino)]diphosphonioazénium, sulfonium, pyridinium, amidinium, guanidinium, imidazolium, pyrazolium et triazolium, lesdits cations organiques portant éventuellement un substituant choisi parmi les groupes alkyle, oxaalkyle, aryle, alkyl-aryle, et aryl-alkyle, lesdits cations pouvant être reliés entre eux par un lien organique pour former des oligomères ou polymères.

13. Utilisation d'un complexe selon la revendication 1, comme additif d'un électrolyte dans une batterie au lithium.

14. Utilisation selon la revendication 13, **caractérisée en ce que** l'un au moins des groupes Y¹, Y² et Y³ est un groupe azoté autre que NR⁴, ou bien l'un au moins des groupes X¹, X² et X³ est un groupe C=NCN ou C=C(CN)₂.

15. Procédé de modification d'un composé possédant un atome Cl ou Br, par une réaction de substitution nucléophile, **caractérisé en ce qu'**il utilise comme réactif, un adduit selon la revendication 8, éventuellement préparé in situ.

16. Procédé selon la revendication 15, **caractérisé en ce que** le composé est un composé solide choisi parmi les composés inorganiques à structure lamellaire FeOCl, VOCl, BiOCl, BiONO₃, TiNCl, TiNBr, ZrNCl ou ZrNBr, ou un composé liquide choisi parmi [CF₃SO₂NSO₂Cl]⁻}ₙMⁿ⁺, {[(ClSO₂)₂N]⁻}ₙMⁿ⁺ et [(Cl₂PO)₂N]⁻}ₙMⁿ⁺.

17. Composé FeOF, obtenu par le procédé de la revendication 16.

18. Procédé de modification d'un composé organique aliphatique ou aromatique qui a une liaison C-L dans laquelle C est le carbone et L est un halogène choisi parmi Cl, Br et I, un pseudo halogène, un groupe ester -OSO₂R' ou un groupe -N(SO₂R')₂ dans lesquels R' est un groupe alkyle, un groupe alkylaryle, ou un groupe perfluoro-alkyle, **caractérisé en ce que** l'on fait réagir ledit composé organique avec un adduit selon la revendication 8.

19. Procédé de déprotection d'un groupement trialkylsilane dans un composé organique, **caractérisé en ce qu'**il consiste à mettre ledit composé organique en contact avec un adduit selon la revendication 8, dans lequel Z est F.

## Patentansprüche

1. Polyzyklischer Komplex, der einer der allgemeinen Formeln 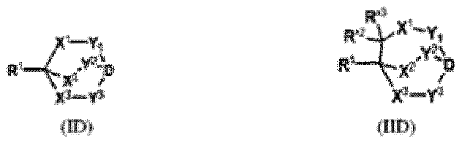 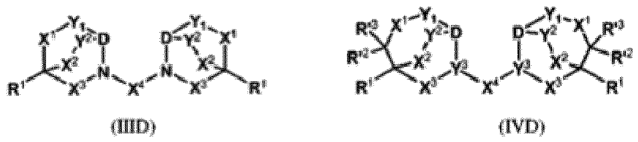 entspricht, wobei:
- D das Bor B oder das Aluminium Al darstellt,
- R¹ R, R_{F}, NO₂, CN, C(=O)OR, RSO₂ oder R_{F}SO₂ darstellt,
- jede der Gruppen -X¹-, -X²- und -X³- unabhängig von den anderen eine zweiwertige Gruppe >C=O, >C=NC=N, >C=C(C≡N)₂ oder >CR²R³ darstellt,
- X₄ eine zweiwertige Gruppe >C=O oder >SO₂ darstellt,
- jede der Gruppen -Y¹-, -Y²- und -Y³- unabhängig von den anderen eine zweiwertige Gruppe -O-, >N(C=N), >N(COR_{F}), >N(SO₂R⁴), >NR⁴, >N(COR⁴) oder >N(SO₂R_{F}) darstellt,
- R, R² und R³ jeweils unabhängig von den anderen H, eine Alkylgruppe, eine Arylgruppe, eine Alkyl-Arylgruppe, eine Aryl-Alkylgruppe oder eine Oxaalkylgruppe darstellen,
- R⁴ eine Alkylgruppe, eine Arylgruppe, eine Alkyl-Arylgruppe, eine Heteroarylgruppe, eine Aryl-Alkylgruppe, eine Oxaalkylgruppe oder eine R_{F}CH₂-Gruppe darstellt,
- R_{F} eine Perfluoralkylgruppe oder eine teilweise fluorierte Alkylgruppe oder eine teilweise oder vollständig fluorierte Phenylgruppe ist,
- jede der Gruppen R^{'2} und R^{'3} R oder F darstellt,
wobei es sich versteht, dass:
- mehrere R- oder R_{F}-Gruppen miteinander verbunden sein können, um ein Segment eines Oligomers oder eines Polymers zu bilden,
- in einem ID- und IID- Komplex, wenn zwei Gruppen von -X¹-, - X²- und -X³- jeweils >C=O darstellen, die dritte Gruppe eine >CR²R³- Gruppe darstellt,
- in einem IB- Komplex, wenn jede der Gruppen X¹, X² und X³ eine CH₂-Gruppe und jede der Y-Gruppen O ist, R¹ dann von CH₃ unterschiedlich ist.

2. Komplex nach Anspruch 1, **dadurch gekennzeichnet, dass** jede der Gruppen Y¹, Y² und Y³ O darstellt.

3. Komplex nach Anspruch 1, **dadurch gekennzeichnet, dass** mindestens eine der Gruppen Y¹, Y² und Y³ NR⁴ darstellt.

4. Komplex nach Anspruch 2, **dadurch gekennzeichnet, dass** R¹ aus R_{F}SO₂-, NO₂, RSO₂-, -CN und -C(=O)OR ausgewählt ist.

5. Komplex nach Anspruch 3, **dadurch gekennzeichnet, dass** mindestens eine der Gruppen -X¹-, -X²- und -X³- eine Gruppe darstellt, die aus >C=O, >C=NC=N und >C=C(C≡N)₂ ausgewählt ist.

6. Komplex nach Anspruch 1, **dadurch gekennzeichnet, dass** jede der Gruppen -X¹-, -X²- und -X³- eine CR²R³-Gruppe darstellt.

7. Komplex nach Anspruch 1 oder 6, **dadurch gekennzeichnet, dass** mindestens eine der Gruppen Y¹, Y² und Y³ aus N(C=N), >N(COR_{F}), >N(SO₂R⁴), >N(COR⁴), >N(SO₂R_{F}) oder einer >NR⁴-Gruppe, in der R⁴ ein Aryl oder ein Heteroaryl ist, das mindestens eine anziehende Gruppe trägt, ausgewählt ist und/oder die Gruppe R¹ aus R_{F}SO₂-, NO₂, RSO₂-, - CN und -C(=O)OR ausgewählt ist.

8. Addukt, gebildet von einem Salz M_{z'}Z'ₘ, das von einem Komplex nach einem der Ansprüche 1 bis 7 komplexiert ist, wobei M ein Kation mit der Wertigkeit n von 1 bis 3 und Z' ein Anion mit der Wertigkeit z' 1 oder 2 ist.

9. Addukt nach Anspruch 8, **dadurch gekennzeichnet, dass** Z' ein einwertiges Anion ist, ausgewählt aus den Anionen F⁻, Cl⁻, Br⁻, OCN⁻, O₂²-, O₂^{•-}, OH⁻, RO⁻, N₃^{-,} CN⁻, [O²-M'⁺]-, [O₂²⁻M'⁺]⁻ und [NCN²⁻M'⁺], wobei M' H oder ein einwertiges Kation ist.

10. Addukt nach Anspruch 8, **dadurch gekennzeichnet, dass** Z' ein zweiwertiges Anion, ausgewählt aus den Anionen O²⁻, O₂²⁻, S²⁻, S₂²und NCN²⁻, ist.

11. Addukt nach Anspruch 8, **dadurch gekennzeichnet, dass** M ein Kation eines Alkalimetalls, ein Kation eines Erdalkalimetalls, Ag⁺, Pb²⁺, ein Yttriumkation, ein Lanthankation oder ein organisches Kation darstellt.

12. Addukt nach Anspruch 11, **dadurch gekennzeichnet, dass** M ein organisches Kation ist, ausgewählt aus den Ammonium-, Phosphonium-, Tetrakis-(dialkylamino)phosphonium-, Bis[tris(dialkylamino)]diphosphonioazenium-, Sulfonium-, Pyridinium-, Amidinium-, Guanidinium-, Imidazolium-, Pyrazolium- und Triazoliumkationen, wobei die organischen Kationen eventuell einen Substituenten tragen, der aus den Alkyl-, Oxaalkyl-, Aryl-, Alkyl-Aryl- und Aryl-Alkylgruppen ausgewählt ist, wobei die Kationen miteinander durch eine organische Bindung verbunden sein können, um Oligomere oder Polymere zu bilden.

13. Verwendung eines Komplexes nach Anspruch 1 als Zusatzstoff eines Elektrolyts in einer Lithiumbatterie.

14. Verwendung nach Anspruch 13, **dadurch gekennzeichnet, dass** mindestens eine der Gruppen Y¹, Y² und Y³ eine andere Stickstoffgruppe als NR⁴ ist oder mindestens eine der Gruppen X¹, X² und X³ eine Gruppe C=NCN oder C=C(CN)₂ ist.

15. Modifizierungsverfahren einer Verbindung, die ein Cl- oder Br-Atom besitzt, durch eine nukleophile Substitutionsreaktion, **dadurch gekennzeichnet, dass** es als Reagenz ein Addukt nach Anspruch 8 verwendet, das eventuell in situ hergestellt ist.

16. Verfahren nach Anspruch 15, **dadurch gekennzeichnet, dass** die Verbindung eine feste Verbindung ist, die aus den anorganischen Verbindungen mit lamellarer Struktur FeOCl, VOCI, BiOCl, BiONO₃, TiNCl, TiNBr, ZrNCl oder ZrNBr ausgewählt ist oder eine flüssige Verbindung, die aus {[CF₃SO₂NSO₂Cl]-}ₙMⁿ⁺, {[(ClSO₂)₂N]-}ₙMⁿ⁺ und {[(Cl₂PO)₂N]⁻}ₙMⁿ⁺ ausgewählt ist.

17. Durch das Verfahren von Anspruch 16 hergestellte FeOF-Verbindung.

18. Modifizierungsverfahren einer aliphatischen oder aromatischen organischen Verbindung, die eine C-L-Bindung hat, in der C Kohlenstoff ist und L ein aus Cl, Br und I ausgewähltes Halogen, ein Pseudohalogen, eine Estergrppe -OSO₂R' oder eine Gruppe -N(SO₂R')₂ ist, in denen R' eine Alkylgruppe, eine Alkylarylgruppe oder eine Perfluoralkylgruppe ist, **dadurch gekennzeichnet, dass** die organische Verbindung mit einem Addukt nach Anspruch 8 in Reaktion versetzt wird.

19. Verfahren zur Aufhebung des Schutzes einer Trialkylsilangruppe in einer organischen Verbindung, **dadurch gekennzeichnet, dass** es darin besteht, die organische Verbindung mit einem Addukt nach Anspruch 8 in Kontakt zu versetzen, in dem Z F ist.

## Claims

1. A polycyclic complex corresponding to one of the general formulas: 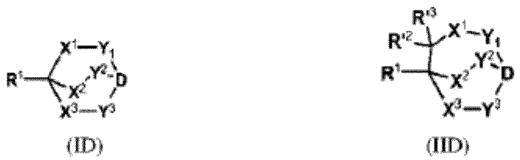 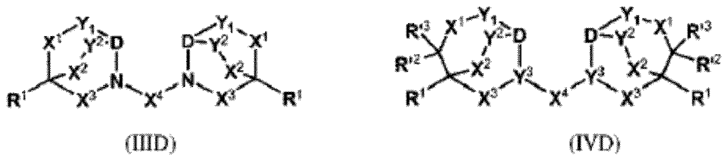 where:
- D is boron B or aluminium A1;
- R¹ is R R_{F}, NO₂, CN, C(=O)OR, RSO₂ or R_{F}SO₂;
- each of the groups -X¹- -X²- and -X³- independently of the others represents a divalent group >C=O, >C=NC=N, >C=C(C≡N)₂ or >CR²R³;
- X₄ is a divalent group >C=O or >SO₂;
- each of the groups -Y¹-, -Y²- and -Y³- independently of the others represents a divalent group -O-, >N(C=N), >N(COR_{F}), >N(SO₂R⁴), >NR⁴, >N(COR⁴) or >N(SO₂R_{F});
- R, R² and R³ each independently of the others represents H, an alkyl group, aryl group, alkyl-aryl group, aryl-alkyl group or oxaalkyl group;
- R⁴ represents an alkyl group, aryl group, alkyl-aryl group, heteroaryl group, aryl-alkyl group, oxaalkyl group or R_{F}CH₂ group;
- R_{F} is a perfluoroalkyl group or partly fluorinated alkyl group, or a partly or fully fluorinated phenyl group;
- each of the groups R^{,2} and R^{,3} represents R or F;
on the understanding that:
- several R or R_{F} groups can be bonded together to form a segment of an oligomer or polymer;
- in an ID or IID complex, if two groups among -X¹-, -X²- and -X³- each represent >C=O, then the third group is a >CR²R³ group;
- in an IB complex, if each of the groups X¹, X² and X³ is a CH₂ group and each of the Y groups is O, then R¹ differs from CH₃.

2. The complex according to claim 1, **characterized in that** each of the groups Y¹, Y² and Y³ is O.

3. The complex according to claim 1, **characterized in that** at least one of the groups Y¹, Y² and Y³ is NR⁴.

4. The complex according to claim 2, **characterized in that** R¹ is selected from among R_{F}SO₂-, NO₂, RSO₂-, CN and -C(=O)OR.

5. The complex according to claim 3, **characterized in that** at least one of the groups -X¹-, -X²- and -X³- represents a group selected from among >C=O, >C=NC=N and >C=C(C≡N)₂.

6. The complex according to claim 1, **characterized in that** each of the groups -X¹-, -X²- and -X³- is a CR²R³ group.

7. The complex according to claim 1 or 6 **characterized in that** at least one of the groups Y¹, Y² and Y³ is selected from among N(C=N), >N(COR_{F}), >N(SO₂R⁴), >N(COR⁴), >N(SO₂R_{F}) or >NR⁴ group wherein R⁴ is an aryl or heteroaryl carrying at least one attractor group and/or the group R¹ is selected from among R_{F}SO₂-, NO₂, RSO₂-, -CN and - C(=O)OR.

8. An adduct formed of a M_{z'}Z'ₘ salt complexed with a complex according to one of claims 1 to 7 wherein M is a cation whose valence n is 1 to 3 and Z' is an anion whose valence z' is 1 or 2.

9. The adduct according to claim 8 **characterized in that** Z' is a monovalent anion selected from among the anions F⁻, Cl⁻, Br⁻, OCN⁻, O₂²⁻, O₂^{'-}, OH⁻, RO⁻, N₃^{-'}, CN⁻, [O²⁻M^{'+}]-, [O₂²⁻M^{'+}] and [NCN²⁻M^{'+}], M' being H or a monovalent cation.

10. The adduct according to claim 8, **characterized in that** Z' is a divalent anion selected from among the anions O²⁻, O₂²⁻, S²⁻, S₂²⁻ and NCN²⁻.

11. The adduct according to claim 8, **characterized in that** M is an alkaline metal cation, alkaline-earth metal cation, Ag⁺, Pb²⁺, an yttrium cation, lanthanum cation or organic cation.

12. The adduct according to claim 11, **characterized in that** M is an organic cation selected from among the cations: ammonium, phosphonium, tetrakis-(dialkylamino)phosphonium, bis[tris(dialkylamino)]diphosphonioazenium, sulfonium, pyridinium, amidinium, guanidinium, imidazolium, pyrazolium and triazolium, the said organic cations optionally carrying a substituent selected from among the alkyl, oxaalkyl, aryl, alkyl-aryl and aryl-alkyl groups, the said cations possibly being bonded together via an organic bond to form oligomers or polymers.

13. The use of a complex according to claim 1 as additive for an electrolyte in a lithium battery.

14. The use according to claim 13, **characterized in that** at least one of the groups Y¹, Y² and Y³ is a nitrogen containing group other than NR⁴, or else at least one of the groups X¹, X² and X³ is a C=NCN or C=C(CN)₂ group.

15. A method for modifying a compound having a Cl or Br atom, by nucleophilic substitution reaction, **characterized in that** as reagent it uses an adduct according to claim 8 optionally prepared *in situ.*

16. The method according to claim 15, **characterized in that** the compound is a solid compound selected from among inorganic compounds with lamellar structure FeOCL, VOCl, BiOCI, BiONO₃, TiNCI TiNBr, ZrNCl or ZrNBr, or a liquid compound selected from among {[CF₃SO₂NSO₂Cl]⁻}ₙMⁿ⁺, {[(ClSO₂)₂N]⁻}ₙMⁿ⁺ and {[(Cl₂PO)2N]⁻}ₙMⁿ⁺.

17. A FeOF compound obtained using the method in claim 16.

18. A method for modifying an aliphatic or aromatic organic compound which has a C-L bond wherein C is carbon and L is halogen selected among Cl, Br and I, a pseudo-halogen, -OSO₂R' ester group or -N(SO₂R')₂ group wherein R' is an alkyl group, alkylaryl group or perfluoro-alkyl group, **characterized in that** the said organic compound is caused to react with an adduct according to claim 8.

19. A method for deprotecting a trialkylsilane group in an organic compound, **characterized in that** it consists of placing the said organic compound in contact with an adduct according to claim 8 wherein Z is F.
